Europäisches Patentamt

European Patent Office

Office européen des brevets

(19)

(11) **EP 1 736 892 A1**

(12) **EUROPEAN PATENT APPLICATION**
published in accordance with Art. 158(3) EPC

(43) Date of publication:
**27.12.2006 Bulletin 2006/52**

(51) Int Cl.:
*G06F 15/00* (2006.01)  *H04L 9/00* (2006.01)

(21) Application number: **05728436.6**

(22) Date of filing: **05.04.2005**

(86) International application number:
**PCT/JP2005/006633**

(87) International publication number:
**WO 2005/098640 (20.10.2005 Gazette 2005/42)**

(84) Designated Contracting States:
**DE FR GB**

(30) Priority: **05.04.2004 JP 2004111426**
**09.04.2004 JP 2004114871**
**09.04.2004 JP 2004114872**
**16.04.2004 JP 2004121940**

(71) Applicant: **SONY CORPORATION**
**Tokyo 141-0001 (JP)**

(72) Inventor: **ISHIBASHI, Yoshihito**
**c/o Sony Corporation**
**Tokyo 1410001 (JP)**

(74) Representative: **Müller - Hoffmann & Partner**
**Patentanwälte,**
**Innere Wiener Strasse 17**
**81667 München (DE)**

(54) **PROGRAM, COMPUTER, AND DATA PROCESSING METHOD**

(57)  A program is provided, by which a load on its communication party can be reduced when the communication party determines legitimacy of an application program to be activated. A client device 12_1 verifies an application program activated by itself and transmits certification data indicating the result to a server device 10. The server device 10 transmits content data to the client device 12_1 based on the certification data on condition that a desired application program is activated on the client device 12_1.

## FIG. 1

**Description**

TECHNICAL FIELD

The present invention relates to a program, a computer and a data processing method for determining legitimacy of an application program activated by a communication party, and a program executed by a computer communicating with the party, the computer and the data processing method.

DISCLOSURE OF THE INVENTION

PROBLEMS TO BE SOLVED BY THE INVENTION

As a first example, there is a communication system for transmitting content data relating to copyright on condition that a desired application provided with a copyright protection function is activated by a client device.

In the communication system, a server device determines whether the desired application program is activated by the client device.

At this time, conventionally, for example, the server device stores hash data (a hash value) of the application program in advance and, when it is confirmed that the hash data matches with hash data of the application program generated by the client device based on a hash function, determines that the desired application program is in operation on the client device.

A variety of hash functions are used for generating the hash data in accordance with an OS (operating system) of the client device.

Also, even application programs having the same function have different hash data depending on the used program language and the version thereof.

Therefore, the server device for transmitting the content data to a plurality of client devices has to store and manage an enormous number of hash data and the load is heavy, which remain as problems.

On the other hand, in recent years, there are cases where content data is transmitted and received between client devices. In that case, it is not realistic for each client device to store and manage the enormous number of hash data to determine whether the desired application program is activated on the other client device.

As a second example, there is a communication system for a plurality computers to communicate through a network.

In the communication system, each computer normally identifies a computer of the communication party based on identification data assigned to the computer of the party.

In the conventional computer system explained above, however, fixed identification data assigned to each computer is used for identifying each computer on the network, so that a behavior (processing) of each computer through the network based on an operation by the user may be monitored for a long period of time and there is a problem that information relating to the user's privacy, such as information on accessing destinations of each computer, may be illegitimately used.

Furthermore, for example, identification data of the computer may be updated due to a variety of reasons.

In that case, there is a demand for identifying that the communication party is the same computer.

As a third example, there is an agent program for performing processing of providing content data, etc. in a form matching with a user based on learnt data generated by an operation pattern of the user based on operation history data of the user.

Such an agent program operates, for example, on the server device, accumulates operation history data of a user of a client device accessing to the server device, and generates learnt data as explained above based on the operation history data.

In the above conventional system, however, operation history data has to be accumulated for users of all client devices when the server device is accessed by a large number of client devices, which leads to a problem that a heavy load is imposed for the management.

A first object of the present invention is to provide a program, a computer and a data processing method for reducing a load on a communication party when the communication party determines legitimacy of an activated application program, and a program, computer and a data processing method for reducing a load of determining legitimacy of the activated application program on the communication party.

A second object of the present invention is to provide a program, a computer and a data processing method, by which it is possible to communicate with a communication party by allowing the party to identify a computer without being monitored operations of a user using the computer for a long period of time; it is possible to perform communication by identifying the communication party without being monitored a user's operations of the communication party for a long period of time; and even when a computer of the communication party to be identified based on identification data updates the identification data, the computer can be continuously identified as the same computer as that before the updating based on the updated identification data.

A third object of the present invention is to provide a program, a computer and a data processing method capable of reducing a load on a server device due to an agent function and bringing the full effect of the agent function with a little load even between client devices.

DISCLOSURE OF THE INVENTION

To solve the problems of the conventional techniques explained above and to attain the above objects, a first aspect of the present invention is a program for making a computer manage application programs, wherein the computer executes a first procedure for verifying legitimacy of an application program activated by the computer and generating certification data indicating identification data of the application program determined to be legitimate; and a second procedure for transmitting the certification data generated in the first procedure to a communication party for providing data to be used by the application program.

A second aspect of the present invention is a program for making a computer perform data transmission to a communication party, wherein a first procedure for verifying legitimacy of the communication party; a second procedure for receiving certification data indicating identification data of an application program determined to be legitimate by the communication party and activated by the communication party from the communication party on condition of being authenticated to be legitimate in the first procedure; a third procedure for determining whether desired identification data is included in the certification data received in the second procedure or not; and a fourth procedure for transmitting data to the communication party on condition that the desired identification data is determined to be included in the third procedure.

A third aspect of the present invention is a computer, comprising a memory storing an application program; a circuit module provided with a function of preventing stored data from being tampered and monitored, and for storing a boot program; an execution circuit for executing the application program read from the memory and the boot program read from the circuit module in a secured state; and an interface; wherein the execution circuit executes the boot program read from the circuit module in a secured state, verifies legitimacy of the application program by following the boot program, stores in the circuit module certification data indicating identification data of the application program determined to be legitimate, and transmits the certification data read from the circuit module to the communication party via the interface.

A fourth aspect of the present invention is a computer, comprising a memory storing an application program and a boot program; a circuit module provided with a function of preventing stored data from being tampered and preventing stored data and internal processing from being monitored; an execution circuit for executing the application program and the boot program read from the memory; and an interface: wherein the circuit module verifies legitimacy of the boot program read from the memory and, then, outputs the boot program to the execution circuit in a secured state; and the execute circuit executes the boot program input from the circuit module, verifies legitimacy of the application program by following the boot program, stores in the circuit module certification data indicating identification data of the application program determined to be legitimate, and transmits the certification data read from the circuit module to the communication party via the interface.

A fifth aspect of the present invention is a computer, comprising a memory storing a program; an execution circuit for executing the program read from the memory; and an interface for receiving from a communication party certification data indicating identification data of an application program activated by the communication party and verified to be legitimate by the communication party; wherein the execution circuit executes a program read from the memory and, on condition that a communication party is authenticated to be legitimate via the interface by following the program, determines whether desired identification data is included in the certification data received via the interface or not and, on condition that it is determined that the desired identification data is included, transmits data to the communication party via the interface.

A sixth aspect of the present invention is a data processing method performed by a computer for managing application programs, comprising a first step for verifying legitimacy of an application program activated by the computer and generating identification data of the application program determined to be legitimate; and a second step for transmitting to a communication party for providing data to be used by the application program the certification data generated in the first step.

A seventh aspect of the present invention is a data processing method performed by a computer for transmitting data to a communication party, comprising a first step for authenticating legitimacy of the communication party; a second step for receiving from the communication party certification data indicating identification data of an application program determined to be legitimate by the communication party and activated by the communication party on condition that it is authenticated to be legitimate in the first step; a third step for determining whether desired identification data is included in the certification data received in the second step or not; and a fourth step for transmitting data to the communication party on condition that it is determined that the desired identification data is included in the third step.

An eighth aspect of the present invention is a program executed by a computer for performing communication with a communication party, comprising a first step for generating hash data of communication data used by the communication party in communication with the computer and updated under a predetermined condition; a second step for adding the hash data generated in the first step to the communication data and transmitting to the communication party; and a third step for performing communication by using the hash data generated in the first step as identification data of the computer after the second step.

A ninth aspect of the present invention is a program executed by a computer for performing communication with a communication party, wherein the computer executes a first step for receiving from the communication party communication data updated under a predetermined condition and hash data of the communication data by making them associated; and a second step for identifying the communication party based on the hash data received in the first step and performing communication with the communication party based on the communication data received in the first step.

A tenth aspect of the present invention is a computer, comprising a memory storing an application program; an execution circuit for executing the application program read from the memory; and an interface for transmitting/ receiving data to and from a communication party; wherein the execution circuit generates hash data of communication data used by the communication party in communication with the computer and updated under a predetermined condition by following the application program, adds the generated hash data to the communication data to transmit to the communication party via the interface, and performs communication with the communication party by using the hash data as identification data of the computer.

An eleventh aspect of the present invention is a computer for performing communication with a communication party, comprising a memory for storing a program; an interface for receiving from the communication party communication data updated under a predetermined condition and hash data of the communication data by making them associated to each other; and an execution circuit for executing the program read from the memory, identifies the communication party based on the hash data received by the interface by following the program, and performs communication with the communication party based on the communication data received by the interface.

A twelfth aspect of the present invention is a data processing method executed by a computer for performing communication with a communication party, comprising a first step for generating hash data of communication data used by the communication party in communication with the computer and updated under a predetermined condition; a second step for adding the hash data generated in the first step to the communication data and transmitting to the communication party; and a third step for performing communication with the communication party by using the hash data generated in the first step as identification data of the computer.

A thirteenth aspect of the present invention is a program executed by a computer for performing communication with a communication party, wherein the computer executes a first step for generating attributes data indicating attributes of a user based on an operation history of the computer by the user; and a second step for transmitting to the communication party the attributes data generated in the first step.

A fourteenth aspect of the present invention is a program for a computer to execute management of application programs for transmitting to a communication party attributes data indicating attributes of a user obtained based on an operation history of the computer by the user, wherein the computer executes a first step for verifying legitimacy of the application program activated by the computer and generating certification data indicating identification data of the application program determined to be legitimate; and a second step for transmitting the certification data generated in the first step to a communication party for providing data to be used by the application program.

A fifteenth aspect of the present invention is a program executed by a computer for performing communication with a communication party, wherein the computer executes a first step for receiving from the communication party attributes data indicating attributes of a user obtained based on an operation history of the user of the communication party; and a second step for transmitting data to the communication party based on the attributes data received in the first step.

A sixteenth aspect of the present invention is a computer, comprising a memory storing an application program; an execution circuit for executing the application program read from the memory; and an interface for transmitting/ receiving data to and from a communication party; wherein the execution circuit generates attributes data indicating attributes of a user based on an operation history of the computer by the user and transmits the generated attributes data to the communication party via the interface by following the application program.

A seventeenth aspect of the present invention is a computer for performing communication with a communication party, comprising a memory for storing a program; an interface for receiving from the communication party attributes data indicating attributes of a user obtained based on an operation history of the user of the communication party; and an execution circuit for executing the program read from the memory, and transmits data to the communication party via the interface based on the attributes data received by the interface by following the program.

An eighteenth aspect of the present invention is a data processing method performed by a computer for performing communication with a communication party, comprising a first step for generating attributes data indicating attributes of a user based on an operation history of the computer by the user; and a second step for transmitting to the communication party the attributes data generated in the first step.

A nineteenth aspect of the present invention is a data processing method performed by a computer for performing communication with a communication party, comprising a first step for receiving from the communication party attributes data indicating attributes of a user obtained based on an operation history of the user of the communication party; and a second step for transmitting data to the communication party based on the attributes data received in the first step.

A twentieth aspect of the present invention is a program executed by a computer for performing communication with a communication party, wherein the computer executes a first step for generating communication data including original data for calculating identification data after updating or identification data after the updating used for making the computer identified in communication with the communication party, and update history data including the identification data before updating and indicating a history of updating the identification data; a second step for transmitting the communication data generated in the first step to the communication party; and a third step for performing communication with the communication party by using the updated identification data after the second step.

A twenty first aspect of the present invention is a program executed by a computer for performing communication with a communication party, wherein the computer executes a first step for identifying the communication party and performing communication with the communication party based on first identification data of the communication party; a second step for receiving from the communication party communication data including second identification data after updating the first identification data or original data for calculating the second identification data and update history data including the first identification data and indicating a history of updating the second identification data, and identifying the communication party based on the second identification data; a third step for determining whether the update history data included in the communication data received in the second step indicates the first identification data used in the first step or not; and a fourth step for making the first identification data used in the first step, and the second identification data included in the communication data received in the second step, or the second identification data calculated from the original data associated to one another when it is determined that the update history data indicates the first identification data in the third step.

Twenty second aspect of the present invention is a computer, comprising a memory storing an application program; an execution circuit for executing the application program read from the memory; and an interface for transmitting/receiving data to and from a communication party; wherein the execution circuit includes updated identification data used for making the computer identified in communication with the communication party, or original data for calculating identification data after updating and the identification data before the updating, generates communication data including update history data indicating a history of updating the identification data, transmits the communication data to the communication party via the interface, and performs communication with the communication party by using the updated identification data via the interface.

A twenty third aspect of the present invention is a computer for performing communication with a communication party, comprising a memory for storing a program; an interface for receiving communication data including updated second identification data of first identification data for identifying the communication party or original data for calculating the second identification data, and update history data including the first identification data and indicating a history of updating of the identification data; and an execution circuit for executing the program read from the memory and, by following the program, when determined whether the update history data included in the communication data received by the interface indicates the first identification data or not, making the first identification data and the second identification data associated to each other to perform communication with the communication party based on the second identification data.

A twenty fourth aspect of the present invention is a data processing method performed by a computer for performing communication with a communication party, comprising a first step for generating communication data including updated identification data used for making the computer identified in communication with the communication party, or original data for calculating identification data after updating and the identification data before the updating, and update history data indicating a history of updating the identification data; a second step for transmitting to the communication party the communication data generated in the first step; and a third step for performing communication with the communication party by using the updated identification data after the second step.

A twenty fifth aspect of the present invention is a data processing method performed by a computer for performing communication with a communication party, comprising a first step for identifying the communication party and performing communication with the communication party based on first identification data of the communication party; a second step for receiving communication data including second identification data after updating the first identification data or original data for calculating the second identification data and update history data including the first identification data and indicating a history of updating the second identification data, and identifying the communication party based on the second identification data; a third step for determining whether the update history data included in the communication data received in the second step indicates the first identification data used in the first step or not; and a fourth step for making the first identification data used in the first step, and the second identification data included in the communication data received in the second step, or the second identification data calculated from the original data associated to one another when it is determined that the update history data indicates the first identification data in the third step.

A twenty sixth aspect of the present invention is a program executed by a computer for performing communication with a communication party, comprising a first step for storing identification data table information including first identification data for identifying the communication party; a second step for receiving from the communication party communication data including second identification data for identifying the communication party or original data for calculating the second identification data, update history data including identification data before updating the second identification data and indicating a history of updating identification data; a third step, when first identification data included in the identification data table information stored in the first step is determined to be a not latest identification data based on update history data included in the communication data, for updating the first identification data by second identification data in the communication data or second identification data calculated from original data; and a fourth step for identifying the communication party and performing communication with the communication party based on the second identification data updated in the third step.

Effects of the Invention

According to the present invention, it is possible to provide a program, a computer and a data processing method capable of reducing a load on a communication party when the party determines legitimacy of an application program to be activated.

It is possible to provide a program, a computer and a data processing method capable of reducing a load of determining legitimacy of an application program activated on a communication party.

It is possible to provide a program, a computer and a data processing method capable of performing communication with a communication party by allowing the communication party to identify a computer while preventing operations of a user using the computer from being monitored for a long period of time.

It is possible to provide a program, a computer and a data processing method for enabling communication by identifying a communication party while preventing operations of a user of the communication party from being monitored for a long period of time.

It is possible to provide a program, a computer and a data processing method for enabling a computer to bring a full effect of an agent function with a small load.

It is possible to provide a program, a computer and a data processing method, by which even when a computer of a communication party to be identified based on identification data updates the identification data, the computer can be continuously identified as the same computer as that before the updating based on the updated identification data.

BRIEF DESCRIPTION OF DRAWINGS

FIG. 1 is a view for explaining related arts of the present invention.

FIG. 2 is a view for explaining related arts of the present invention.

FIG. 3 is a view of the overall configuration of a communication system according to an embodiment of the present invention.

FIG. 4 is a view of the configuration of a server shown in FIG. 3.

FIG. 5 is a flowchart for explaining an operation example when the server device shown in FIG. 4 performs communication with a client device.

FIG. 6 is a view for explaining certification data according to an embodiment of the present invention.

FIG. 7 is a view of the configuration of a client device shown in FIG. 3.

FIG. 8 is a flowchart for explaining an operation for generating certification data by the client device shown in FIG. 7.

FIG. 9 is a flowchart for explaining an operation example when the client device shown in FIG. 7 receives content data from the server device.

FIG. 10 is a flowchart for explaining an operation example when the client device 12_1 shown in FIG. 7 transmits/ receives content data to and from the client device 12_2 shown in FIG. 3.

FIG. 11 is a view for explaining a client device according to a modified example of the embodiment of the present invention.

FIG. 12 is a view of the configuration of a server device shown in FIG. 3.

FIG. 13 is a flowchart for explaining an operation example when the server device shown in FIG. 12 performs communication with a client device.

FIG. 14 is a view of the configuration of the client device shown in FIG. 3.

FIG. 15 is a view for explaining disclosure agent data AGENT_DP in the embodiment of the present invention.

FIG. 16 is a flowchart for explaining an operation example when the client device shown in FIG. 14 generates disclosure agent data AGENT_DP.

FIG. 17 is a flowchart for explaining an operation example when the client device shown in FIG. 14 performs communication with a server device.

FIG. 18 is a flowchart for explaining an operation example when the client device 12_1 shown in FIG. 14 performs communication with the client device 12_2.

FIG. 19 is a view for explaining disclosure agent data AGENT_DP in the embodiment of the present invention.

FIG. 20 is a flowchart for explaining an operation example when the client device shown in FIG. 14 generates disclosure agent data AGENT_DP.

FIG. 21 is a flowchart for explaining an operation example when the client device shown in FIG. 14 performs communication with a server device.

FIG. 22 is a flowchart for explaining an operation example when the client device 12_1 shown in FIG. 14 performs communication with the client device 12_2 shown in FIG. 3.

FIG. 23 is a view for explaining agent data according to a modified example of the embodiment of the present invention.

FIG. 24 is a view for explaining processing of a client device according to a modified example of the embodiment of the present invention.

FIG. 25 is a view of the configuration of the server device shown in FIG. 3.

FIG. 26 is a view for explaining table data shown in FIG. 25.

FIG. 27 is a flowchart for explaining an operation example when the server device shown in FIG. 25 performs communication with a client device.

FIG. 28 is a flowchart for explaining an operation example when the server device shown in FIG. 25 performs communication with a client device, continued from FIG. 27.

FIG. 29 is a view of the configuration of the client device shown in FIG. 3.

FIG. 30 is a view for explaining disclosure agent data AGENT_DP in the embodiment of the present invention.

FIG. 31 is a flowchart for explaining an operation wherein the client device shown in FIG. 29 generates certification data AP_CER.

FIG. 32 is a flowchart for explaining an operation example wherein the client device shown in FIG., 29 generates disclosure agent data AGENT_DP.

FIG. 33 is a flowchart for explaining an operation example when the client device shown in FIG. 29 performs communication with a server device.

FIG. 34 is a flowchart for explaining an operation example when the client device 12_1 shown in FIG. 29 performs communication with the client device 12_2 shown in FIG. 3.

FIG. 35 is a flowchart for explaining an operation example when the client device 12_1 shown in FIG. 29 performs communication with the client device 12_2 shown in FIG. 3, continued from FIG. 34.

EXPLANATION OF REFERENCES

1, 1a, 1b and 1c ... communication system
10, 10a, 10b and 10c ... server device
12_1, 12_1a, 12_1b, 12_1c, 12_2, 12_2a, 12_2b, 12_2c ... client device
20, 20a, 20b and 20c ... data line
21, 21a, 21b and 21c ... interface
22, 22a, 22b and 22c ... memory
23, 23a, 23b and 23c ... CPU
30, 30a, 30b and 30c ... data line
31, 31a, 31b and 31c ... interface
32, 32a, 32b and 32c ... memory
33, 33a, 33b and 33c ... CPU
SM, SMa, SMb and SMc ... security module circuit
35, 35a, 35b and 35c ... memory
36 ... computing circuit
AP_S and AP_C1 ... application program
B_PRG ... boot program
AP_CER ... certification data

BEST MODE FOR CARRYING OUT THE INVENTION

First, related arts of the present invention will be explained.

[Related Arts]

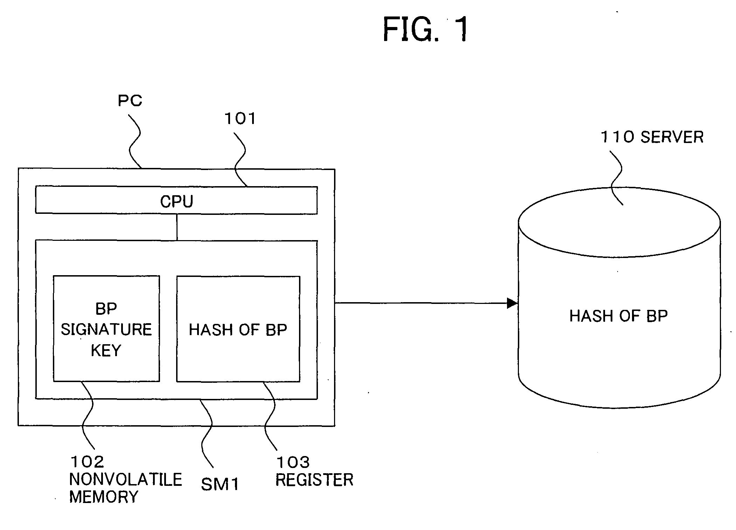

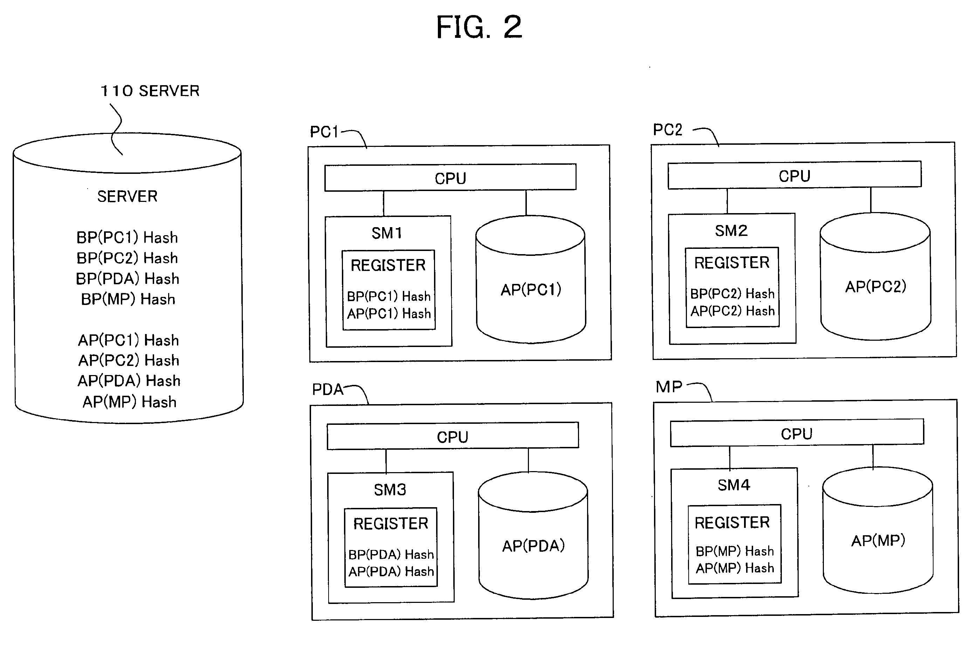

FIG. 1 and FIG. 2 are views for explaining the related arts of the present invention.
In the system shown in FIG. 1, for example, on condition that a legitimate boot program BP is in operation on a client device, content data relating to copyright is transmitted from the server device 110 to the computer PC.
In such a system, a CPU reads the boot program BP from a security module circuit SM1 in a secured state, generates hash data "Hash" thereof, and writes the same in the security module circuit SM1 in the computer PC.
In the security module SM1, the boot program BP and signature key data are stored in a nonvolatile memory 102 and the hash data "Hash" of the boot program is stored in a register 103.
Note that, between the CPU and the security module circuit SM1, the both have key data and data is given and taken in a secured state by methods of flowing to a bus encrypted data based on the key data, sharing the key data after performing mutual authorization, and installing the CPU and the security module circuit SM1 into a tamper-resistant module (multi-chip-module), etc.
The server device 110 stores hash data "Hash" of the boot program BP in advance and, on condition that the hash "Hash" matches with hash data "Hash" read from the register 103 and transmitted from the computer PC, determines that a legitimate boot program BP is in operation on the computer PC.
In this case, however, it is unknown whether the hash data "Hash" sent from the computer PC is generated legitimately or not.
On the other hand, when the security module circuit SM1 is legitimate, the boot program BP can be determined to be legitimate.
Also, there is a case of transmitting content data relating to copyright from the server device 110 to a computer PC, etc. on condition that a desired application program having a copyright protection function is activated on a client device, such as the computer PC.
In this case, the server device 110 stores hash data "Hash" of the application program and compares the same with hash data "Hash" of the application program received from the computer PC, etc.
A variety of hash functions are used for generating the hash data in accordance with an OS (operation system) of the client device.
Also, even application programs having the same function have different hash data depending on a program language used for writing the program and the version.
Therefore, for example as shown in FIG. 2, when the server device 110 transmits a plurality of client devices, such as computers PC1, PC2, a PDA (personal digital assistance) and a mobile phone MP, there is a problem that the server device 110 has to store hash data "Hash" of a boot program and that of the application program AP of each client device, and the load is heavy.
For example, as shown in FIG. 2, the server device 110 has to store hash data of a boot program of the computer PC1 "BP(PC1)Hash" and hash data of an application program of the computer PC1 "AP(PC1)Hash".
Also, the server device 110 has to store hash data of a boot program of the computer PC2 "BP(PC2)Hash" and hash data of an application program of the computer PC2 "AP(PC2)Hash".
Also, the server device 110 has to store hash data of a boot program of the PDA "BP(PDA)Hash" and hash data of an application program of the PDA "AP(PDA)Hash".
Furthermore, the server device 110 has to store hash data of a boot program of the MP "BP(MP)Hash" and hash data of an application program of the MP "AP(MP)Hash".
Also, in recent years, there is a case where content data is transmitted/received between client devices. In that case, each client device also has to store and manage enormous number of hash data explained above to determine whether the desired application program is activated on a client device of the communication party, which imposes a heavy load and not realistic.
Below, a communication system according to an embodiment of the present invention to solve the problems of the related arts explained above will be explained.

First Embodiment

The present embodiment is an example of the inventions according to the first to seventh aspects.

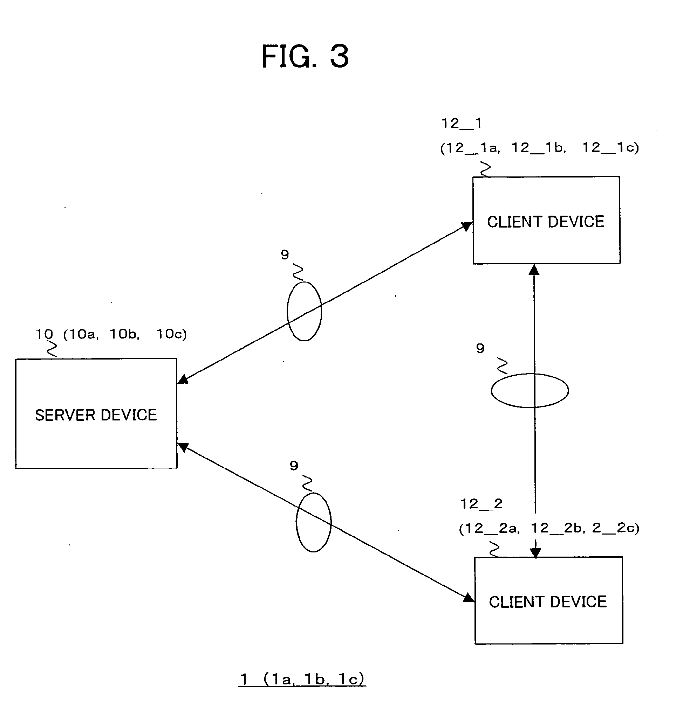

FIG. 3 is a view of the overall configuration of the communication system 1 according to the embodiment of the present invention.
As shown in FIG. 3, the communication system 1 has, for example, a server device 10 and client devices 12_1 and 12_2.

The server device 10 and client devices 12_1 and 12_2 perform communication one another via a network 9.

Note that, in this embodiment, the case of performing communication between a large number of server devices 10 and two client devices 12_1 and 12_2 will be explained as an example, but a plurality of server devices may be used and a single or three or more client devices may be used.

First, an outline of the communication system 1 shown in FIG. 3 will be explained.

Each of the client devices 12_1 and 12_2 verifies legitimacy of an application program activated by itself and transmits certification data AP_CER showing the result to the server device 10.

The server device 10 transmits content data to the client devices 12_1 and 12_2 based on the certification data AP_CER on condition that a desired application program is activated on the client devices 12_1 and 12_2.

In the communication system 1, the server device 10 does not have to store all hash data of application programs executed by the client devices 12_1 and 12_2 and verification processing of the legitimacy is also unnecessary. Accordingly, a load of the server device 10 caused by determining legitimacy of the application program activated on the client devices 12_1 and 12_2 can be reduced.

Note that, in the present embodiment, the case of transmitting/receiving content data between the server device 10 and client devices 12_1 and 12_2 is explained as an example, wherein decrypting key data for decrypting encrypted content data and rights information necessary for utilizing the content data may be transmitted/received instead of the content data itself.

Below, the present embodiment will be explained with reference to FIG. 3 to FIG. 11.

First, corresponding relationships of respective components of the present embodiment with those in the present invention will be explained.

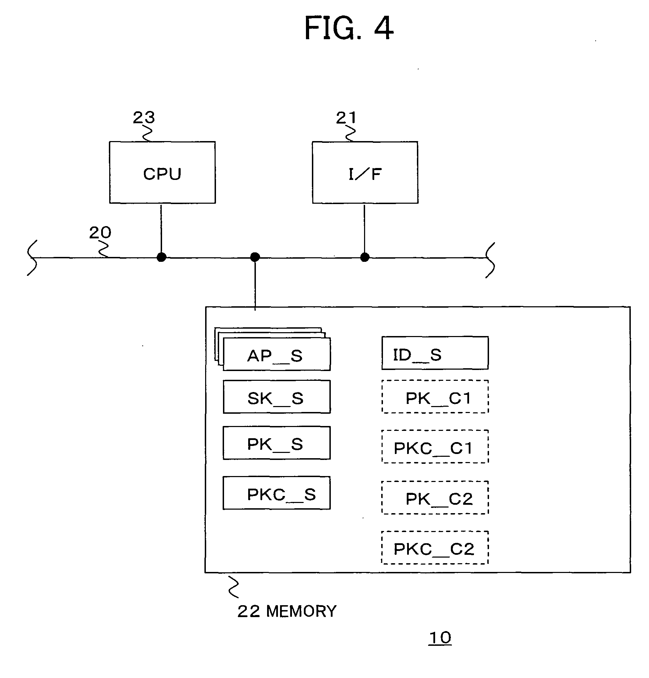

An application program AP_S shown in FIG. 4 corresponds to the program of the second and fifth inventions.

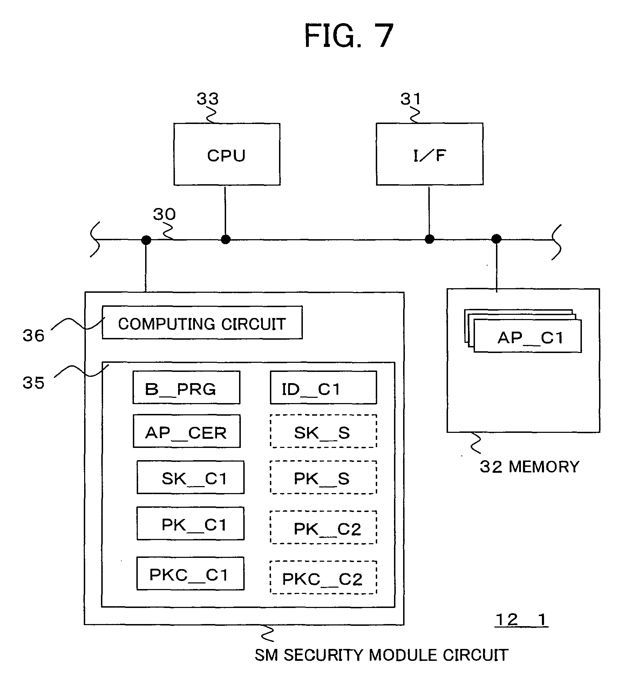

A boot program B_PRG shown in FIG. 7, etc. corresponds to the program or boot program of the first and third inventions.

Also, client device 12_1 shown in FIG. 3 corresponds to the computer of the first and third inventions, and the server device 10 and the client device 12_2 shown in FIG. 3 correspond to the communication party in the first and third inventions.

Also, the server device 10 shown in FIG. 3 corresponds to the computer of the second and fifth invention, and the client device 12_1 shown in FIG, 3 corresponds to the communication party in the second and fifth inventions.

Also, the certification data AP_CER corresponds to the certification data of the present invention.

[Server Device 10]

FIG. 4 is a view of the configuration of the server device 10 shown in FIG. 3.

As shown in FIG. 4, the server device 10 has, for example, an interface 21, a memory 22 and a CPU 23, connected to one another via data lines 20.

Here, the interface 21 corresponds to the interface in the fifth invention, the memory 22 corresponds to the memory in the fifth invention and the CPU 23 corresponds to the execution circuit in the fifth invention.

The interface 21 transmits/receives data to and from the client devices 12_1 and 12_2 via the network 9.

The memory 22 stores an application program AP_S.

The memory 22 stores secret key data SK_S, disclosure key data PK_S, disclosure key certification data PKC_S and identification data ID_S of the server device 10.

Also, the memory 22 stores disclosure key data PK_C1 and disclosure key certification data PKC_C1 of the client device 12_1 from communication with the client device 12_1, etc.

Also, the memory 22 stores disclosure key data PK_C2 and disclosure key certification data PKC_C2 of the client device 12_2 from communication with the client device 12_2, etc.

The CPU 23 executes the application program AP_S and collectively controls operations of the server device 10.

Processing performed by the CPU 23 will be explained in relation to an operation example of the server device 10.

Below, an operation example when the server device 10 shown in FIG. 4 performs communication with the client device 12_1 will be explained.

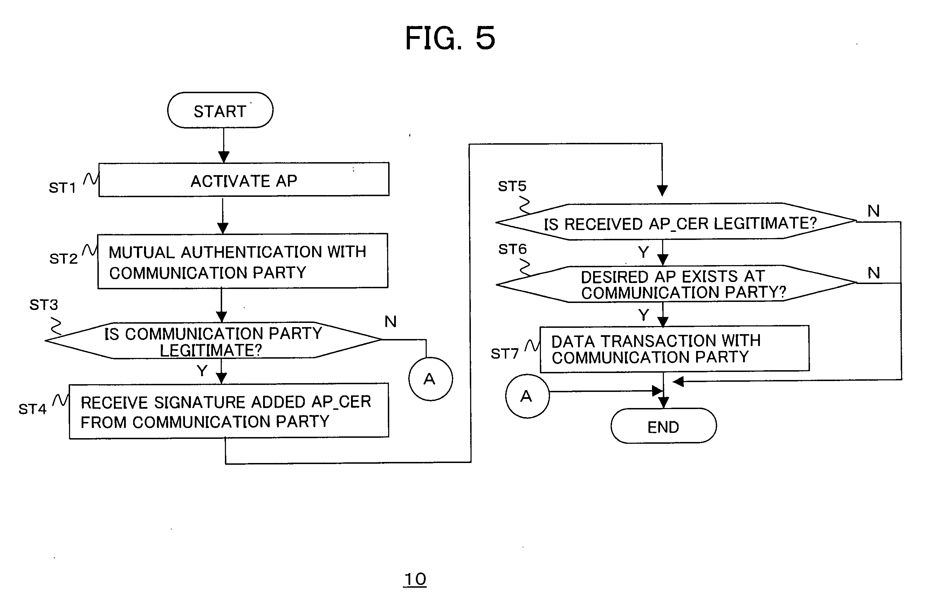

FIG. 5 is a flowchart for explaining an operation example when the server device 10 shown in FIG. 4 performs communication with the client device 12_1.

Each step explained below is regulated by the application program AP_S.

Note that processing shown in FIG. 5 may be regulated by a boot program of the server device 10.

Step ST1:

The CPU 23 of the server device 10 reads from the memory 22 an application program AP_S specified by the user and executes the same.

The application program AP_S is, for example, a program for encrypting and transmitting predetermined content data and transmits/receives content data only with a program having identification data AP_ID corresponding thereto. The content data may relate to copyright.

Step ST2:

The CPU 23 performs mutual authorization with the client device 12_1 via the interface 21, for example, based on the secret key data SK S, disclosure key data PK_C1 and disclosure key certification data PKC_C1 read from the memory 22. Namely, mutual authentication by a disclosure key is performed.

As a method of the mutual authentication, the ISO/IEC 9798-3 method, etc. may be used.

When legitimacy is confirmed to each other by the mutual authentication, the CPU 23 shares session key data used for communicating with the client device 12_1 thereafter and encrypts data based on the session key data in the communication thereafter.

In the present embodiment, for example, the CPU 23 does not have to verify hash data of the boot program B_PRG of the client device 12_1.

Step ST3:

The CPU 23 proceeds to a step ST4 when legitimacy is confirmed to each other by the mutual authentication performed in the step ST2, while not, finishes the processing or performs error processing.

Step ST4:

The CPU 23 receives certification data AP_CER added with signature data SIG from the client device 12_1 via the interface 21.

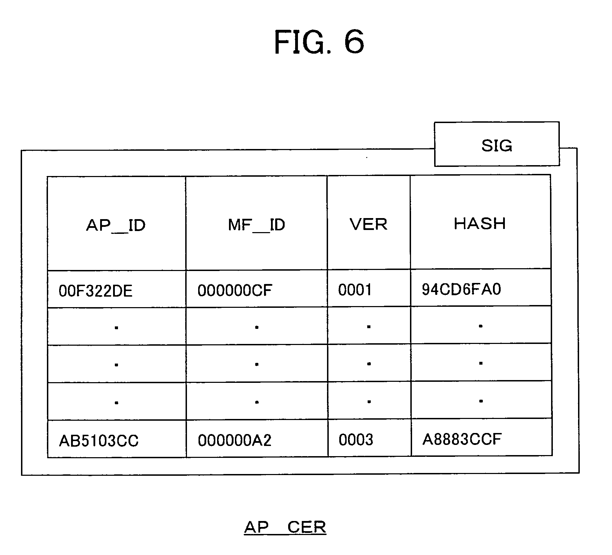

The certification data AP_CER is activated by the client device 12_1, for example as will be explained later on, and indicates identification data AP_ID, production identification data MF_ID, version VER and hash value HASH of the application program AP_C1 confirmed to be legitimate by making them associated to one another as shown in FIG. 6.

Step ST5:

The CPU 23 verifies legitimacy of the certification data AP_CER received in the step ST4.

At this time, for example, the CPU 23 generates hash data of the certification data AP_CER based on a hash function. Then, the CPU 23 checks whether the generated hash data matches with signature data SIG added to the certification data AP_CER shown in FIG. 6 or not and, when matched, determines that the certification data AP_CER1 is not tampered but legitimate.

Here, the hash function is a function for generating fixed length data from a given original sentence and has a characteristic that the original sentence cannot be recovered from the hash value and generation of different data having the same hash value is extremely difficult.

Then, the CPU 23 proceeds to a step ST6 when it is determined that the certification data AP_CER is legitimate, while not, finishes the processing.

Note that when the client device 12_1 generates signature data SIG by encrypting the hash data by using the secret key SK_C1 of the client device 12_1, the CPU 23 decrypts the signature data SIG by using the disclosure key PK_C1 of the client device 12_1 and compares the decrypted data with the hash data.

Note that since data is encrypted by using a session key on the network 9, a desired object can be attained without using the digital signature technique requiring a long time for processing. Namely, since hash data itself is encrypted by the session key, almost the same function as that of the digital signature can be realized thereby.

Also, to prevent illegitimate reuse of data transacted in the past, normally, random number data is added to the data (the certification data AP_CER shown in FIG. 6 in this example), hash data is calculated for the entire data including the random number, and the result is used as the signature data SIG. Also, when encrypting by using the secret key SK_C1, hash data of data including the random number data is encrypted.

Step ST6:

The CPU 23 determines whether the identification data AP_ID of a specified application program AP_C1 is included in the certification data AP_CER received in the step ST4 or not and, when determined that the identification data AP_ID is included (the application program AP_ID is confirmed to be legitimate and activated on the client device 12_1), proceeds to a step ST7, while not, finishes the processing.

Here, the application program AP_C1 is a program having a copyright protection function for content data, for example, when the application program AP_S transmits the content data relating to copyright.

Note that the CPU 23 may verify whether the production identification data MF_ID and version data VER besides the identification data AP_C1 are desired ones in the above verification of the step.

Step ST7:

The CPU 23 follows the application program AP_S activated in the step ST1 to encrypt predetermined content data and transmits to the client device 12_1 via the interface 21.

[Client Device 12_1]

FIG. 7 is a view of the configuration of a client device 12_1 shown in FIG. 3.

As shown in FIG. 7, the client device 12_1 has, for example, an interface 31, a memory 32, a CPU 33 and a security module circuit SM, connected to one another via data lines 30.

Here, the interface 31 corresponds to the interface in the third invention, the memory 32 corresponds to the memory in the fifth invention, the security module circuit SM corresponds to the circuit module in the fifth invention, and the CPU 33 corresponds to the execution circuit in the fifth invention.

The interface 31 performs communication with the server device 10 and the client device 12_2 via the network 9.

The memory 32 stores an application program AP_C1.

The memory 32 is a semiconductor memory or a hard disk drive.

The security module circuit SM has, for example, a memory 35 and a computing circuit 36.

The security module circuit SM is a circuit having a tamper-resistant property and provided with a function of preventing tampering and monitoring of stored data in the memory 35 and monitoring of processing in the computing circuit 36.

The tamper-resistant circuit is a circuit configured to prevent erroneous operations and leaks of internal data when it is attacked from the outside (attacks by illegitimately reading internal data and by setting an input frequency or input voltage to be out of a predetermined range, etc.). Specifically, to prevent reading of internal data, the circuit is made to have a multilayer structure to provide the memory to the lowermost layer and form a dummy layer (for example, an aluminum layer) as the upper layer and the lower layer, so that a direct access from the outside to the memory input/output I/F is made difficult. Also, it is configured to be provided with a tamper-resistant circuit frequency detection circuit and a voltage detection circuit so as not to operate when the frequency or voltage is not in a predetermined range.

The memory 35 stores secret key data SK_C1, disclosure key data PK_C1, disclosure key certification data PKC_C1 and identification data ID_C1 of the client device 12_1.

Also, the memory 35 stores disclosure key data PK_S and disclosure key certification data PKC_S of the server device 10 from communication with the server device 10, etc.

Also, the memory 35 stores disclosure key data PK_C2 and disclosure key certification data PKC_C2 of the client device 12_2 from communication with the client device 12_2, etc.

The CPU 33 reads from the memory 35 in the security module circuit SM a boot program B_PRG via the data line in a secured state and executes the same.

Also, the CPU 33 reads an application program AP_C1 from the memory 32 and executes the same.

Note that to realize the reading in a secured state, methods are used, such that a common encrypting key data is shared by the CPU 33 and the security module circuit SM to encryptedata on the data line 30, mutual authentication is performed between the CPU 33 and the security module circuit SM, data on the data line 30 is encrypted by using shared session key data, and the CPU 33 and the security module circuit SM are molded to be one package, to prevent an access from the outside to data on the data line 30, etc.

Also, to prevent the security module circuit SM from being installed into other client device, memory data (ID, random number, key and other data) peculiar to the client device 12_1 may be decentralized to be stored therein and verification of the memory data may be performed by the security module circuit SM at the time of activation. Alternately, an input/output operation of the interface 31 may be made complicated, etc. to make the boot mechanism of the CPU 33 complicated, and the mechanism is known only to an approved manufacturer to enhance reliability of activation of the boot program B_PRG.

The CPU 33 collectively controls operations of the client device 12_1.

Processing performed by the CPU 33 will be explained in relation to an operation example of the client device 12_1.

Below, an operation that the client device 12_1 shown in FIG. 7 generates certification data AP_CD will be explained.

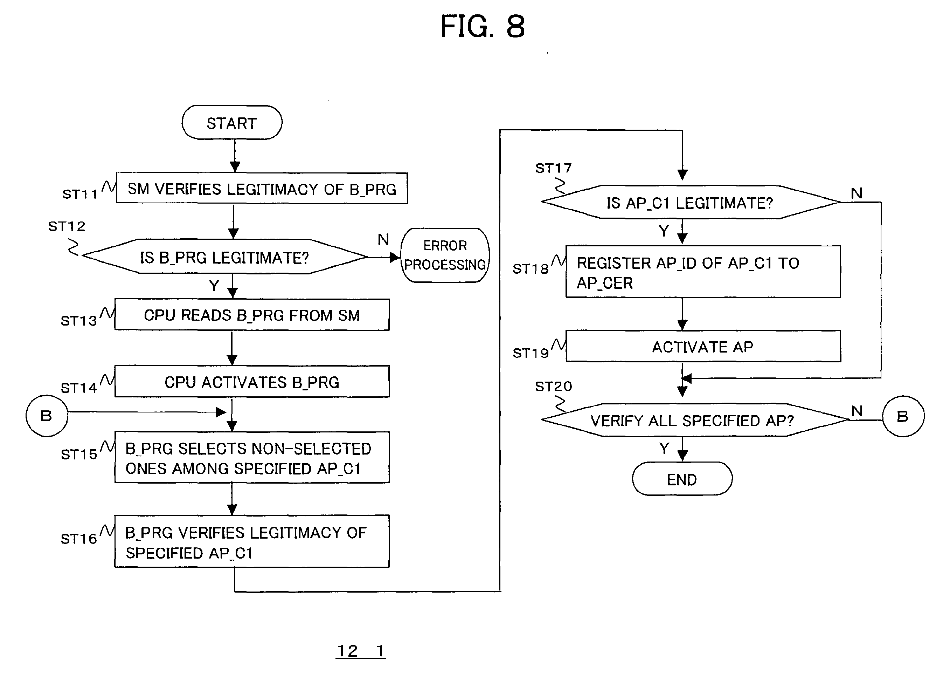

FIG. 8 is a flowchart for explaining an operation for generating certification data AP_CD by the client device 12_1 shown in FIG. 7.

Respective steps explained below are regulated by the boot program B_PRG.

Step ST11:

When the client device 12_1 is activated, the computing circuit 36 of the security module circuit SM reads the boot program B_PRG from the memory 35 and verifies legitimacy of the boot program B_PRG.

At this time, the computing circuit 36, for example, generates hash data of the boot program B_PRG based on a hash function, compares the generated hash data with hash data of the boot program B_PRG prepared in advance and, when matched, determines that the boot program B_PRG stored in the memory 35 is legitimate (not tampered).

Step ST12:

When the boot program B_PRG is determined to be legitimate in the step ST11, the client device 12_1 proceeds to a step ST13 and, while not, performs error processing.

Step ST13:

The CPU 33 of the client device 12_1 reads the boot program B_PRG from the memory 35 via the data line 30 in a secured state.

Step ST14:

The CPU 33 executes the boot program B_PRG read in the step ST13.

Step ST15:

The CPU 33 selects a not selected application program AP_C1 from a plurality of application programs specified by the user based on the boot program B_PRG.

Step ST16:

The CPU 33 reads the application program selected in the step ST15 from the memory 32 and verifies the legitimacy.

At this time, the CPU 33, for example, generates hash data of the application program AP_C1 based on a hash function, compares the generated hash data with hash data of the application program AP_C1 prepared in advance and, when matched, determines that the application program AP_C1 stored in the memory 32 is legitimate.

Alternately, the CPU 33 may verify predetermined signature data corresponding to the application program AP_C1 based on disclosure key data. The signature data SIG may be added to the application program AP_C1 or stored separately in the memory.

Step ST17:

When it is determined that the application program AP_C1 is legitimate in the step ST16, the CPU 33 proceeds to a step ST18 and, if not, proceeds to a step ST20.

Step ST18:

The CPU 33 adds identification data AP_ID, production identification data MF_ID, version data VER and hash data HASH (hereinafter, also referred to as identification data AP_ID) of the application program AP_C1 determined to be legitimate in the step ST 16 to certification data AP_CER.

Step ST19:

The CPU 33 activates the application program AP_C1 determined to be legitimate in the step ST16.

Namely, in the present embodiment, the case of activating the application program AP_C1 on condition that the application program AP_C1 is determined to be legitimate in the step ST16 will be explained as an example. But when the application program AP_C1 is not determined to be legitimate, the application program AP_C1 may be activated by notifying the user of the fact and obtaining approval by the user. Note that, in this case, the CPU 33 does not add identification data of the application program AP_C1 to the certification data AP_CER.

Step ST20:

The CPU 33 determines whether all application programs AP_C1 specified by the user are selected in the step ST15 or not and, when determined to be selected, finishes the processing, while not, returns to the step ST15.

Below, an operation example when the client device 12_1 shown in FIG. 7 receives content data from the server device 10 will be explained.

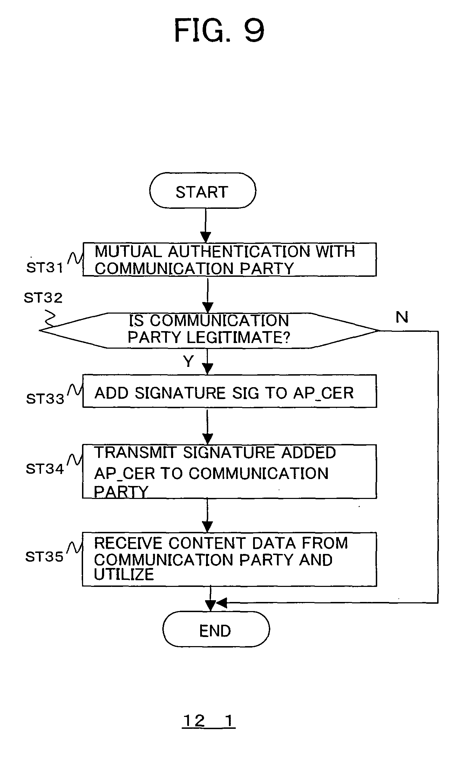

FIG. 9 is a flowchart for explaining an operation example when the client device 12_1 shown in FIG. 7 receives content data from the server device 10.

Respective steps explained below are regulated by the boot program B_PRG.

Step ST31:

The CPU 33 of the client device 12_1 performs mutual authentication with the server device 10 via the interface 31 based on the secret key data SK_C1, disclosure key data PK_S1 and disclosure key certification data PKC_S1 read from the memory 35 of the security module circuit SM. Namely, mutual authentication by using the disclosure key is performed.

When legitimacy is confirmed to each other by the mutual authentication, the CPU 33 shares with the server device 10 session key data to be used for communication with the server device 10 thereafter and encrypts data based on the session key data in communication thereafter.

Note that, in the mutual authentication, the CPU 33 may authenticate legitimacy of the server device 10 based on an AC (attribute certificate) or a URL (uniform resource locator) of the server device 10. Here, the AC is electronic data for certifying functions and attributes of the assignee by linking to identification data ID of the disclosure key certification data by a predetermined authentication agent (AC issuing agent). In the present example, it indicates that it is a server for distributing predetermined content data.

Step ST32:

When legitimacy is confirmed to each other by the mutual authentication performed in the step ST31, the CPU 33 proceeds to the step ST33, while not, finishes the processing.

Step ST33:

The CPU 33 generates hash data of the certification data AP_CER generated through the processing explained based on FIG. 8 and adds the same as signature data SIG to the certification data AP_CER.

Step ST34:

The CPU 33 transmits the signature added certification data AP_CER generated in the step ST33 to the server device 10 via the interface 31.

Step ST35:

The CPU 33 utilizes content data received via the interface 31 from the server device 10 by following the application program AP_C1.

At this time, as explained above, since the application program AP_C1 is provided with a copyright protection function, copyright of the content data is protected by the function.

Note that, in the above embodiment, the case where the CPU 33 performs authentication processing and generation processing of signature data SIG based on the boot program B_PRG read from the security module circuit SM was explained as an example, but the processing may be performed by the computing circuit 36 of the security module circuit SM.

In this case, the client server 12_1 provides necessary data for authentication among data received from the server device 10 to the security module circuit SM. Then, the computing circuit 36 of the security module circuit SM performs computing processing based on the data and transmits the result to the server device 10 via the interface 31. Also, the computing circuit 36 of the security module circuit SM generates the signature data SIG of the certification data AP_CER and transmits the certification data AP_CER added with the signature data SIG to the server device 10 via the interface 31.

Below, an operation example when the client device 12_1 shown in FIG. 7 transmits/receives content data to and from the client device 12_2 shown in FIG. 3 will be explained.

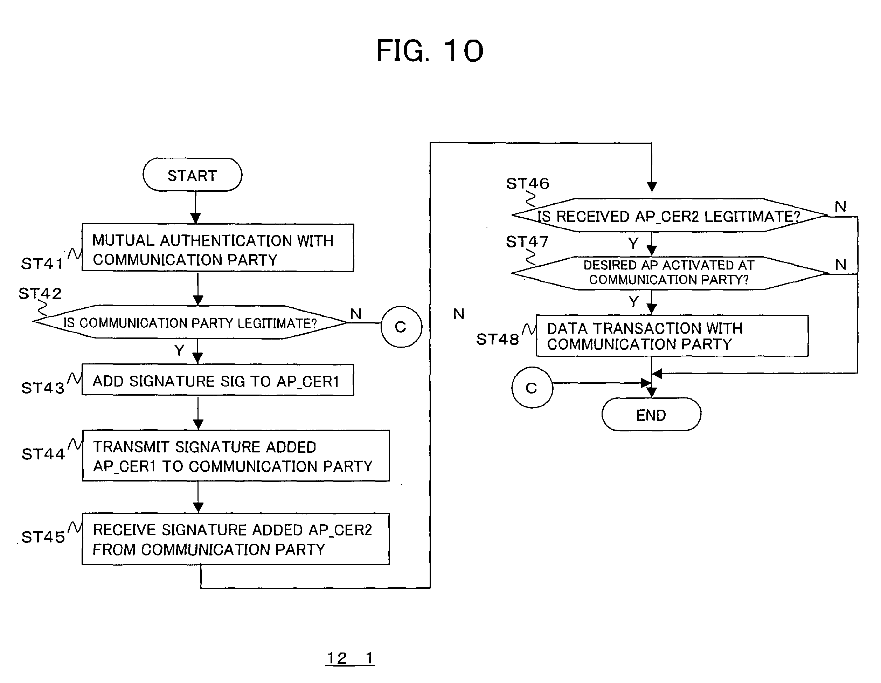

FIG. 10 is a flowchart for explaining an operation example when the client device 12_1 shown in FIG. 7 transmits/ receives content data to and from the client device 12_2 shown in FIG. 3.

Step ST41:

The CPU 33 of the client device 12_1 performs mutual authentication with the client device 12_2 via the interface 31 based on the secret key data SK_C1, disclosure key data PK_C2 and disclosure key certification data PKC_C2 read from the memory 35 of the security module circuit SM. Namely, mutual authentication by using the disclosure key is performed.

Note that, in the present embodiment, the memory 35 stores the disclosure key data PK 2 and the disclosure key certification data PKC_2, but they may be received from the client device 12_2 prior to the authentication.

When legitimacy is confirmed to each other by the mutual authentication, the CPU 33 shares with the client device 12_2 session key data to be used for performing communication with the client device 12_2 thereafter and encrypts data based on the session key data in communication thereafter.

Step ST42:

When legitimacy is confirmed to each other by the mutual authentication performed in the step ST41, the CPU 33 proceeds to the step ST43, while not, finishes the processing or performs error processing.

Step ST43:

The CPU 33 generates hash data of the certification data AP_CER1 generated through the processing explained based on FIG. 8 and adds the same as signature data SIG to the certification data AP_CER1.

Step ST44:

The CPU 33 transmits the signature added certification data AP_CER1 generated in the step ST43 to the client device 12_2 via the interface 31.

Step ST45:

The CPU 33 receives from the client device 12_2 the certification data AP_CER2 added with signature data SIG generated by the client device 12_2 through the same processing as that explained by using FIG. 9 via the interface 31.

As explained above, the certification data AP_CER2 is activated by the client device 12_2, wherein the identification data AP_ID, production identification data MF_ID, version VER and hash value HASH of the application program AP_C2 confirmed to be legitimate are indicated by making them associated to one another as shown in FIG. 6.

Step ST46:

The CPU 33 verifies legitimacy of the certification data AP_CER2 received in the step ST44.

At this time, the CPU 33, for example, generates hash data of the certification data AP_CER2 based on a hash function. Then, the CPU 33 determines whether the generated hash data matches with the signature data SIG and, when matched, determines that the certification data AP_CER2 is not tampered but legitimate.

Then, when it is determined that the certification data AP_CER2 is legitimate, the CPU 33 proceeds to a step ST47, while not, finishes the processing or performs error processing.

Step ST47:

The CPU 33 determines whether the identification data AP_ID of the application program AP_C1 specified by the user is included in the certification data AP-CER2 received in the step ST45 or not and, when determined that the identification data AP_ID is included (the application program AP_C2 is confirmed to be legitimate and activated in the client device 12_2), proceeds to a step ST48, while not, finishes the processing or performs error processing.

Note that the CPU 33 may determine whether the production identification data MF_ID and version data VER are desired ones or not besides the identification data AP_ID in the step.

Step ST48:

The CPU 33 encrypts predetermined content data by following the already activated application program AP_C1 and transmits to the client device 12_2 via the interface 31.

The CPU 33 utilizes content data received via the interface 31 from the client device 12_2 by following the application program AP_C1.

At this time, as explained above, since the application program AP_C1 is provided with a copyright protection function, copyright of the content data is protected by the function.

Note that the client device 12_2 has the same configuration as that of the client device 12_1 explained above.

Below, an overall operation example of the communication system 1 shown in FIG. 3 will be explained.

Each of the client devices 12_1 and 12_2 performs the processing shown in FIG. 8 explained above to write the certification data AP_CER to the memory 35 in the security module circuit SM shown in FIG. 7 of each of the client devices 12_1 and 12_2, respectively.

First, when transmitting content data from the server device 10 to the client device 12_1, for example, the server device 10 performs the processing shown in FIG. 5 explained above, and the client device 12_1 performs the processing shown in FIG. 9 explained above.

Also, when transmitting/receiving content data between the client device 12_1 and the client device 12_2, both of them perform the processing shown in FIG. 10 explained above, respectively.

As explained above, according to the communication system 1, the respective client device 12_1 and the client device 12_2 verify legitimacy of application programs AP_C1 and AP_C2 activated by their own and transmit certification data AP_CER1 and AP_CER2 respectively indicating the results to the server device 10.

As a result, the server device 10 does not have to store all hash data of application programs executed by the client devices 12_1 and 12_2 and verification processing of the legitimacy is also unnecessary. Accordingly, it is possible to reduce a load on the server device 10 caused by determining legitimacy of the application programs activated by the client devices 12_1 and 12_2.

Also, according to the communication system 1, in the client devices 12_1 and 12_2, as shown in FIG. 7, since the boot program B_PRG for generating the certification data AP_CER1 and AP_CER2 is stored in the memory 35 in the security module circuit SM and read by the CPU 33 via the data line 30 in a secured state, reliability of the certification data AP_CER1 and AP_CER2 can be improved.

Also, according to the communication system 1, the server device 10 receives signature added certification data AP_CER and verifies the signature data SIG after performing mutual authentication with the client devices 12_1 and 12_2, so that the server device 10 can determine legitimacy of the application programs activated in the client devices 12_1 and 12_2 with high reliability.

Also, according to the communication system 1, when transmitting/receiving content data not only between the server device 10 and the client devices 12_1 and 12_2 but between the client devices 12_1 and 12_2, one of the client devices 12_1 and 12_2 is capable of determining legitimacy of an application program activated on the other with a small load.

Second Embodiment

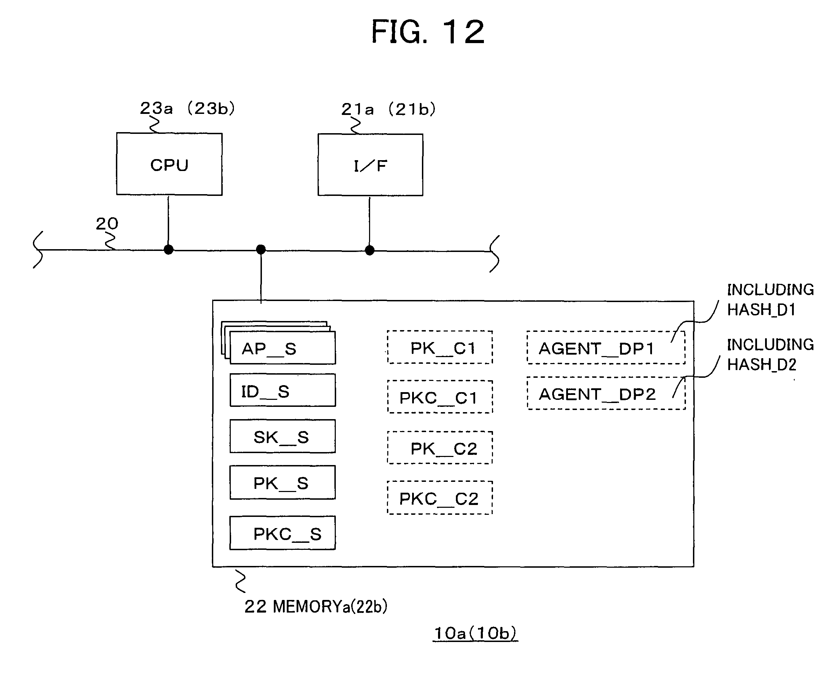

Below, the present embodiment will be explained with reference to FIG. 12 to FIG. 18.

The present embodiment relates to an example of the inventions according to the eighth to twelfth aspects.

First, corresponding relationships of components in the present embodiment with those in the present invention will be explained.

An application program AP_S shown in FIG. 12 corresponds to the program of the ninth and eleventh inventions.

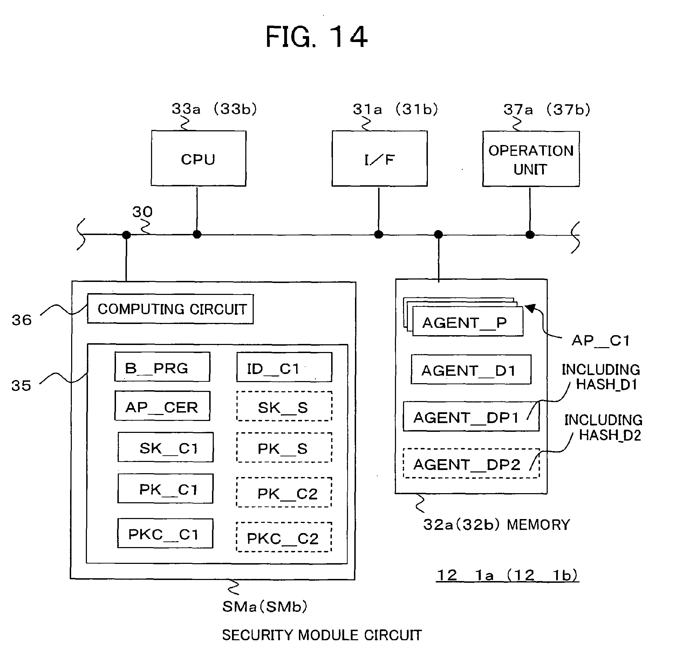

A boot program B_PRG shown in FIG. 14, etc. corresponds to the boot program of the tenth invention.

Also, an agent program AGENT_P1, etc. shown in FIG. 14, etc. corresponds to the program in the eighth invention and the application program of the tenth invention.

Also, client device 12_1a shown in FIG. 3 corresponds to the computer of the first and tenth inventions, and the server device 10a and the client device 12_2a shown in FIG. 3 correspond to the communication party in the eighth and tenth inventions.

Also, the server device 10a shown in FIG. 3 corresponds to the computer of the ninth and eleventh inventions, and the client device 12_1a shown in FIG, 1 corresponds to the communication party in the second and eleventh inventions.

Also, agent data AGENT_D1 and AGENT_D2 in disclosure agent data AGENT_DP1 corresponds to the communication data of the present invention, and hash data HASH_D1 and HASH_D2 correspond to the hash data of the present invention.

Also, the certification data AP_CER corresponds to the certification data of the present invention.

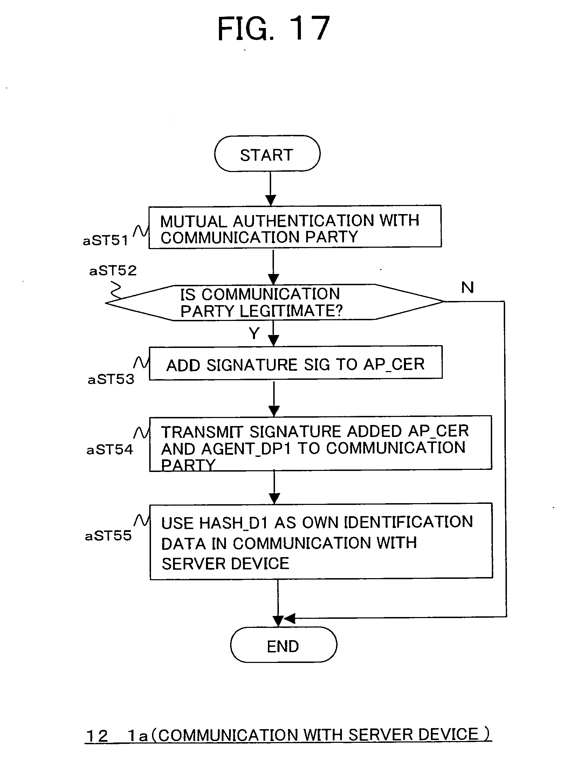

A step aST37 shown in FIG. 8 corresponds to the first procedure of the eighth invention, a step aST38 shown in FIG. 8 and a step aST54 shown in FIG. 17 correspond to the second procedure of the eighth invention, and a step aST55 corresponds to the third procedure of the ninth invention.

Also, a step aST7 shown in FIG. 3 corresponds to the first procedure of the ninth invention, and steps aST9 and aST10 correspond to the second procedure of the ninth invention.

[Server Device 10a]

FIG. 12 is a view of the configuration of the server device 10a shown in FIG. 3.

As shown in FIG. 12, the server device 10a has, for example, an interface 21a, a memory 22a and a CPU 23a, connected to one another via data lines 20.

Here, the interface 21a corresponds to the interface in the eleventh invention, the memory 22a corresponds to the memory in the eleventh invention and the CPU 23a corresponds to the execution circuit in the eleventh invention.

The interface 21a transmits/receives data to and from the client devices 12_1a and 12_2a via the network 9.

The memory 22a stores an application program AP_S.

As will be explained later on, the application program AP_S regulates to register hash data HASH_D1 included in the disclosure agent data AGENT_DP1 received from the client device 12_1a and use the hash data HASH_D1 as identification data of the client device 12_1a in communication with the client device 12_1a thereafter.

Also, as will be explained later on, the application program AP_S regulates to provide to the client devices 12_1a and 12_2a a variety of services matching with favors and other characteristics of the users of the client devices 12_1a and 12_2a based on the disclosure agent data AGENT_DP1 and AGENT_DP2 received from the client devices 12_1a and 12_2a.

The memory 22a stores secret key data SK_S, disclosure key data PK_S, disclosure key certification data PKC_S and identification data ID_S of the server device 10a.

Also, the memory 22a stores the disclosure agent data AGENT_DP1 received from the client device 12_1a.

Also, the memory 22a stores disclosure key data PK_C1 and disclosure key certification data PKC_C1 of the client device 12_1a from communication with the client device 12_1a, etc.

Also, the memory 22a stores the disclosure agent data AGENT_DP2 received from the client device 12_2a.

Also, the memory 22a stores disclosure key data PK_C2 and disclosure key certification data PKC_C2 of the client device 12_2a from communication with the client device 12_2a, etc.

The CPU 23a executes the application program AP_S and collectively controls operations of the server device 10a.

Processing performed by the CPU 23a will be explained in relation to an operation example of the server device 10a.

Below, an operation example when the server device 10a shown in FIG. 12 performs communication with the client device 12_1a will be explained.

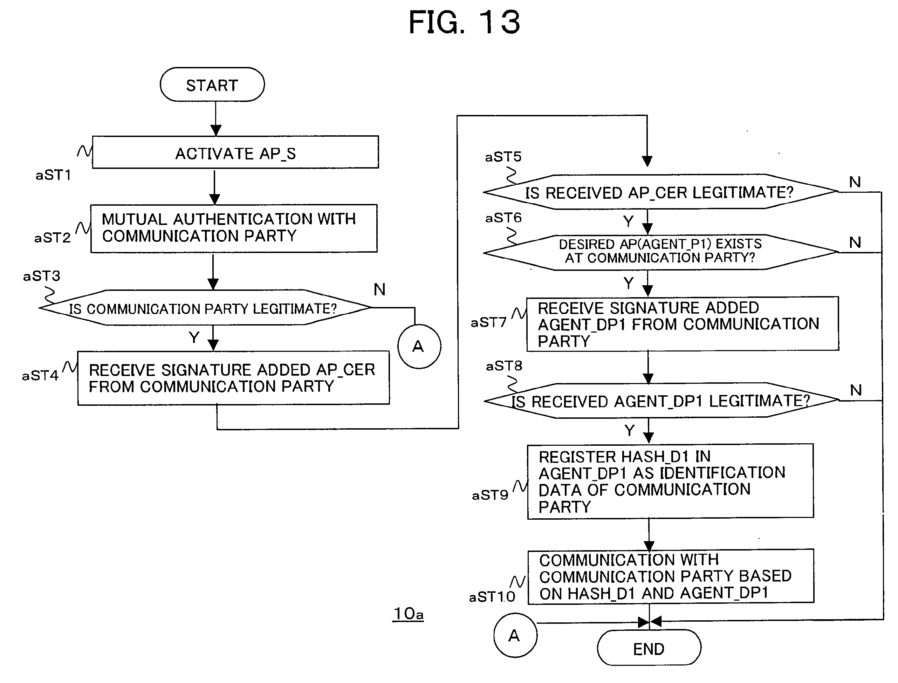

FIG. 13 is a flowchart for explaining an operation example when the server device 10a shown in FIG. 12 performs communication with the client device 12_1a.

Each step explained below is regulated by the application program AP_S.

Step aST1:

The CPU 23a of the server device 10a reads an application program AP_S specified by the user from the memory 22a and executes the same.

The application program AP_S is, for example, a search engine or a program for providing content data, such as video and audio, to a client device and transmits/receives content data only with a program having identification data AP_ID corresponding thereto. The content data may relate to copyright.

Step aST2:

The CPU 23a performs mutual authorization with the client device 12_1a via the interface 21a, for example, based on the secret key data SK_S, disclosure key data PK_C1 and disclosure key certification data PKC_C1 read from the memory 22a.

As the mutual authentication, the ISO/IEC 9798-3 method, etc. may be used.

When legitimacy is confirmed to each other by the mutual authentication, the CPU 23a shares with the client device 12_1a session key data used for communicating with the client device 12_1a thereafter and encrypts data based on the session key data in the communication thereafter.

In the present embodiment, for example, the CPU 23a does not have to verify hash data of the boot program B_PRG of the client device 12_1a.

Step aST3:

The CPU 23a proceeds to a step aST4 when legitimacy is confirmed to each other by the mutual authentication performed in the step aST2, while not, finishes the processing or performs error processing.

Step aST4:

The CPU 23a receives certification data AP_CER added with signature data SIG from the client device 12_1a via the interface 21a.

The certification data AP_CER is activated by the client device 12_1a, for example as will be explained later on, and indicates identification data AP_ID, production identification data MF_ID, version VER and hash value HASH of the application program AP_C1 confirmed to be legitimate by making them associated to one another as shown in FIG. 6.

In the present embodiment, an agent program AGENT_P1 is used as one of the application programs AP_C1.

Step aST5:

The CPU 23a verifies legitimacy of the certification data AP_CER received in the step aST4.

At this time, for example, the CPU 23a generates hash data of the certification data AP_CER based on a hash function. Then, the CPU 23a checks whether the generated hash data matches with signature data SIG added to the certification data AP_CER shown in FIG. 6 or not and, when matched, determines that the certification data AP_CER1 is not tampered but legitimate.

Here, the hash function is a function for generating fixed length data from a given original sentence and has a characteristic that the original sentence cannot be recovered from the hash value and generation of different data having the same hash value is extremely difficult.

Then, the CPU 23a proceeds to a step aST6 when it is determined that the certification data AP_CER is legitimate, while not, finishes the processing or performs error processing.

Note that when the client device 12_1a generates signature data SIG by encrypting the hash data by using the secret key SK_C1 of the client device 12_1a, the CPU 23a decrypts the signature data SIG by using the disclosure key PK_C1 of the client device 12_1a and compares the decrypted data with the hash data. At this time, since data is encrypted by using a session key on the network 9, a desired object can be attained without using the digital signature technique requiring a long time for processing. Namely, since hash data itself is encrypted by the session key, almost the same function as that of the digital signature can be realized thereby.

Also, to prevent illegitimate reuse of data transacted in the past, normally, random number data is added to the data (the certification data AP_CER shown in FIG. 6 in this example), hash data is calculated for the entire data including the random number, and the result is used as the signature data SIG.

Also, when encrypting by using the secret key SK_C1, hash data of data including the random number data is encrypted.

Step aST6:

The CPU 23a determines whether the identification data AP_ID of a specified application program AP_C1 (in the present embodiment, the agent program AGENT_P1) is included in the certification data AP_CER received in the step aST4 or not and, when determined that the identification data AP_ID is included (the agent program AGENT_P1 is confirmed to be legitimate and activated on the client device 12_1a), proceeds to a step aST7, while not, finishes the processing.

Here, the agent program AGENT_P1 is, for example as explained above, a program for generating disclosure agent data AGENT_DP1 of the user of the client device 12_1a.

Note that the CPU 23a may verify whether the production identification data MF_ID and version data VER besides the identification data AP_C1 are desired ones or not in the above verification in the step.

Step aST7:

The interface 21a receives the disclosure agent data AGENT_DP1 from the client device 12_1a.

Step aST8:

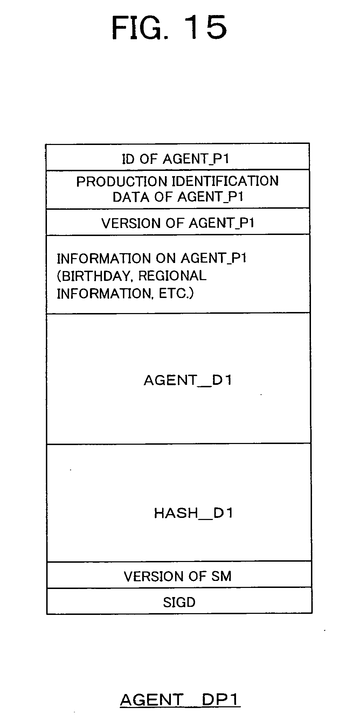

The CPU 23a verifies legitimacy of the signature data SIGD added to the disclosure agent data AGENT_DP1 shown in FIG. 15 received in the step aST7 and, when determined to be legitimate, proceeds to a step aST9, while not, finishes the processing or performs error processing.

Step aST9:

The CPU 23a registers (specifies) hash data HASH_D1 in the disclosure agent data AGENT_DP1 shown in FIG. 15 received in the step aST7 as identification data of the client device 12_1a.

Step aST10:

The CPU 23a uses the hash data HASH_D1 registered in the step aST9 as identification data of the client device 12_1a to perform communication with the client device 12_1a.
At this time, the CPU 23a analyzes the agent data AGENT_D1 in the disclosure agent data AGENT_DP1 and transmits a variety of service data, such as content data, matching with favors and other characteristics of the user of the client device 12_1a to the client device 12_1a via the interface 21a.
For example, when the application program AP_S is a search engine, the CPU 23a uses a predetermined searching keyword input by the user of the client device 12_1a and furthermore uses keywords relating to the keyword determined based on favors of the user to search data and display the searching results.
For example, when the user inputs "package tour" as a searching keyword and the disclosure agent data AGENT_DP1 indicates that the user is in favor of "cars", the CPU 23a selects plans of using a car to get to the destination and data relating to lent-a-car plans in favor of other package tour data and transmits to the client device 12_1a.
As explained above, the server device 10a uses the hash data HASH_D1 in the disclosure agent data AGENT_DP1 received from the client device 12_1 as identification data for identifying the client device 12_1a.
Here, since the hash data HAS_D1 is updated under a predetermined condition as will be explained later on, the server device 10a is capable of monitoring operations of the user of the client device 12_1a based on the hash data HASH_D1 until the hash data HASH_D1 is updated, but after updating the hash data HASH_D1, operations of the user of the client device 12_1a cannot be monitored based on the hash data HASH_D1 before the updating.
Here, a disclosure key certification normally includes ID information for specifying the client device 12_1a, the secret key SK_C1, disclosure key PK_C1 and disclosure key certification PKC_C1 have to be updated in a shorter span than the updating timing of the hash data HASH_D1. The reason why the disclosure key pair has to be updated in addition to the disclosure key certification PCK_C1 is that it is necessary to prevent the disclosure key PK_C1 from being used as identification data. Note that when not using the disclosure key certification but only using an SSL (secure socket layer) for keeping the communication path secret, the disclosure key PK_C1 and the disclosure key certification PCK_C1 become unnecessary and the above processing also becomes unnecessary.
From the above, it is possible to prevent the operations of the client device 12_1a from being monitored for a long period of time.
Also, the server device 10a is capable of realizing an agent function based on the disclosure agent data AGENT_DP1 received from the client device 12_1a without accumulating operation history data of the user of the client device 12_1a.

[Client Device 12_1a]

FIG. 14 is a view of the configuration of the client device 12_1a shown in FIG. 3.
As shown in FIG. 14, the client device 12_1a has, for example, an interface 31a, a memory 32a, a CPU 33a, an operation unit 37a and a security module circuit SMa, connected to one another via data lines 30.
Here, the interface 31a corresponds to the interface in the tenth invention, the memory 32a corresponds to the memory in the tenth invention, the security module circuit SMa corresponds to the circuit module in the tenth invention, and the CPU 33a corresponds to the execution circuit in the tenth invention.
In the present embodiment, the client device 12_1a is, for example, a computer, a PDA (personal digital assistance) and a mobile phone, etc.
The interface 31a performs communication with the server device 10a and the client device 12_2a via the network 9.
The memory 32a stores an application program AP_C1.
The memory 32a stores an agent program AGENT_P1 as one of the application programs AP_C1.
The memory 32a is a semiconductor memory or a hard disk drive.

The security module circuit SMa has, for example, a memory 35 and a computing circuit 36.

The security module circuit SMa is a tamper-resistant circuit and provided with a function of preventing tampering and monitoring of stored data in the memory 35 and monitoring of processing in the computing circuit 36.

The tamper-resistant circuit is a circuit configured to prevent erroneous operations and leaks of internal data when it is attacked from the outside (attacks by illegitimately reading internal data and by setting an input frequency or input voltage to be out of a predetermined range, etc.). Specifically, to prevent reading of internal data, the circuit is made to have a multilayer structure to provide the memory to the lowermost layer and form a dummy layer (for example, an aluminum layer) as the upper layer and the lower layer, so that a direct access from the outside to the memory input/output I/F is made difficult. Also, it is configured to be provided with a tamper-resistant circuit frequency detection circuit and a voltage detection circuit so as not to operate when the frequency or voltage is not in a predetermined range.

The memory 35 stores secret key data SK_C1, disclosure key data PK_C1, disclosure key certification data PKC_C1 and identification data ID_C1 of the client device 12_1a.

The memory 32a stores disclosure key data PK_S and disclosure key certification data PKC_S of the server device l0a from communication with the server device 10a, etc.

Also, the memory 35 stores disclosure key data PK_C2 and disclosure key certification data PKC_C2 of the client device 12_2a from communication with the client device 12_2a, etc.

Also, the memory 35 stores disclosure agent data AGENT_DP2 received from the client device 12_2a.

The operation unit 37a is an operation means, such as a keyboard, a mouse and a touch panel, and outputs an operation signal in accordance with an operation by the user to the CPU 33a.

The CPU 33a performs a variety of processing based on the boot program B_PRG, an application program AP_C1 and an operation signal from the operation unit 37a.

Also, the CPU 33a reads from the memory 35 in the security module circuit SMa a boot program B_PRG via the data line 30 in a secured state and executes the same.

The CPU 33a generates certification data AP_CER shown in FIG. 6 by following the boot program B_PRG and transmits the same to the server device 10a and the client device 12_2a.

Note that to realize the reading in a secured state, methods are used, such that a common encrypting key data is shared by the CPU 33a and the security module circuit SMa to encryptedata on the data line 30, mutual authentication is performed between the CPU 33a and the security module circuit SMa, data on the data line 30 is encrypted by using shared session key data, and the CPU 33a and the security module circuit SMa are molded to be one package, to prevent an access from the outside to data on the data line 30, etc.

Also, to prevent the security module circuit SMa from being installed into other client device, memory data (data, such as ID, random number and key) peculiar to the client device 12_1a may be decentralized to be stored therein and verification of the memory data may be performed by the security module circuit SMa at the time of activation. Alternately, an input/output operation of the interface 31a may be made complicated, etc. to make the boot mechanism of the CPU 33a complicated, and the mechanism is known only to an approved manufacturer to furthermore improve reliability of activation of the boot program B_PRG.

Also, the CPU 33a reads an application program AP_C1 from the memory 32a and executes the same.

In the present embodiment, the CPU 33a reads an agent program AGENT_P1 from the memory 32a and executes the same.

The CPU 33a generates the disclosure agent data AGENT_DP1 shown in FIG. 15 by following the agent program AGENT_P1 and transmits the same to the server device 10a and the client device 12_2a.

As shown in FIG. 15, the disclosure agent data AGENT_DP1 has, for example, identification data ID (agent software ID), production identification data (agent software manufacture ID), version data of the agent program AGENT_P1 and other information on the agent program P1, hash data HASH_D1 of the agent data AGENT_D1, a version of the security module circuit SMa and signature data SIGD of the agent program AGENT_P1.

The CPU 33a generates hash data HASH_D1 of the agent data AGENT_D1 by following the application program AP_C1 and generates disclosure agent data AGENT_DP1 including the same.

Also, the CPU 33a uses the hash data HASH_D1 as its own identification data to perform communication with the server device 10a and the client device 12_2a.

Here, the agent data AGENT_D1 is successively updated data based on attributes data, such as the user's favors, obtained by analyzing an operation history of the user of the client device 12_1a, which will be explained later on.

The agent data AGENT_D1 is updated under a predetermined condition, so that the hash data HASH_D1 is also updated under a predetermined condition and operations of the user of the client device 12_1a can be prevented from being monitored for a long period of time.

Also, the possibilities are quite low that completely identical hash data HASH_D1 is generated as agent data AGENT_D1, so that it is extremely highly possible that it becomes a unique value of the client device 12_1a. Therefore, in communication between the server device 10a and the client device 12_2a, the hash data HASH_D1 is sufficiently capable of serving as identification data of the client device 12_1a.

Note that the CPU 33a may determine whether or not to include the identification data for specifying a device of the client device 12_1a, such as the security module circuit SMa, in the disclosure agent data AGENT_DP1 in accordance with an instruction from the user.

The CPU 33a collectively controls operations of the client device 12_1.

Processing performed by the CPU 33a will be explained in relation to an operation example of the client device 12_1a.

Below, an operation that the client device 12_1a shown in FIG. 14 generates certification data AP_CER by following the boot program B_PRG will be explained.

FIG. 8 is a flowchart for explaining an operation for generating the certification data AP_CER by the client device 12_1a shown in FIG. 14.

Respective steps explained below are regulated by the boot program B_PRG.

Step ST11:

When the client device 12_1a is activated, the computing circuit 36 of the security module circuit SMa reads the boot program B_PRG from the memory 35 and verifies legitimacy of the boot program B_PRG.

At this time, the computing circuit 36, for example, generates hash data of the boot program B_PRG based on a hash function, compares the generated hash data with hash data of the boot program B_PRG prepared in advance and, when matched, determines that the boot program B_PRG stored in the memory 35 is legitimate (not tampered).

Step ST12:

When the boot program B_PRG is determined to be legitimate in the step ST11, the client device 12_1a proceeds to a step ST13 and, while not, performs error processing.

Step ST13:

The CPU 33a of the client device 12_1a reads the boot program B_PRG from the memory 35 via the data line 30 in a secured state.

Step ST14:

The CPU 33a executes the boot program B_PRG read in the step ST13.

Step ST15:

The CPU 33a selects a not selected application program AP_C1 from a plurality of application programs AP_C1 specified by the user based on the boot program B_PRG. In the present embodiment, an agent program AGENT_P1 is specified as the application program AP_C1.

Step ST16:

The CPU 33a reads the application program AP_C1 selected in the step ST15 from the memory 32a and verifies the legitimacy.

At this time, the CPU 33a, for example, generates hash data of the application program AP_C1 based on a hash function, compares the generated hash data with hash data of the application program AP_C1 prepared in advance and, when matched, determines that the application program AP_C1 stored in the memory 32a is legitimate.

Alternately, the CPU 33a may verify predetermined signature data corresponding to the application program AP_C1 based on disclosure key data. The signature data may be added to the application program AP_C1 or stored in the memory 32a separately from the application program AP_C1.

Step ST17:

When determined that the application program AP_C1 is legitimate in the step ST16, the CPU 33a proceeds to a step ST18 and, if not, proceeds to a step ST20.

Step ST18:

The CPU 33a adds identification data AP_ID, production identification data MF_ID, version data VER and hash data HASH (hereinafter, also simply referred to as identification data AP_ID) of the application program AP_C1 determined to be legitimate in the step ST 16 to certification data AP_CER.

Step ST19:

The CPU 33a activates the application program AP_C1 determined to be legitimate in the step ST16.

In the present embodiment, the case of activating the application program AP_C1 on condition that the application program AP_C1 is determined to be legitimate in the step ST16 will be explained as an example. But when the application program AP_C1 is not determined to be legitimate, the application program AP_C1 may be activated by notifying the user of the fact and obtaining approval by the user. Note that, in this case, the CPU 33a does not add identification data AP_ID of the application program AP_C1 to the certification data AP_CER.

Step ST20:

The CPU 33a determines whether all application programs AP_C1 specified by the user are selected in the step ST15 or not and, when determined to be selected, finishes the processing, while not, returns to the step ST15.

In the present embodiment, when the agent program AGENT_P1 is legitimate, the CPU 33a activates the agent program AGENT_P1 and the identification data AP_ID is added to the certification data AP_CER.

Below, an operation example when the client device 12_1a shown in FIG. 14 updates (generates) disclosure agent data AGENT_DP1 by following the agent program AGENT_P1 will be explained.

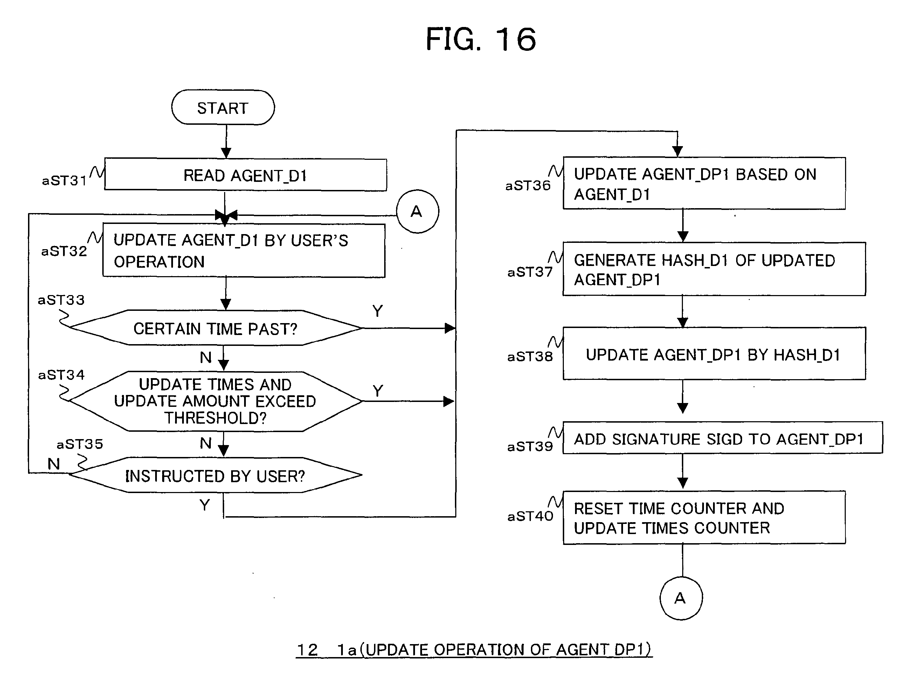

FIG. 16 is a flowchart for explaining an operation example when the client device 12_1a shown in FIG. 14 updates (generates) disclosure agent data AGENT_DP1.

Respective steps in FIG. 16 are executed by the CPU 33a by following the agent program AGENT_P1.

Operations below are performed in parallel with operations of other application program AP_C1, such as a search engine.

Step aST31:

The CPU 33a reads the agent data AGENT_D1 from the memory 32a.

Step aST32:

The CPU 33a updates operation history data of the user of the client device 12_1a based on an operation signal from the operation unit 37a.

Then, the CPU 33a analyzes the updated operation history data and generates attributes data indicating the user's favors and other attributes.

The CPU 33a updates the present agent data AGENT_D1 based on the generated attributes data.

Step aST33:

The CPU 33a determines whether a predetermined time has past or not based on a counter value of a time counter (not shown) and, when determined it has, proceeds to a step aST36, while not, proceeds to a step aST34.

In the present embodiment, the predetermined time is, for example, one week, one month or three months, etc.

Step aST34:

The CPU 33a determines whether a value indicated by the counter value of a update time counter (the number of times of updating in the step aST32), a degree (updating amount) of content of updated attributes data and the updating frequency exceed predetermined thresholds or not and, when determined to be exceeded, proceeds to a step aST36, while not, proceeds to a step aST35.

Step aST35:

The CPU 33a determines whether a updating instruction of the disclosure agent data AGENT_DP1 is received from the user or not based on an operation signal from the operation unit 37a and, when determined that the updating instruction is received, proceeds to a step aST36, while not, returns back to the step aST32.

Step aST36:

The CPU 33a reads the disclosure agent data AGENT_DP1 shown in FIG. 15 from the memory 32a and updates the agent data AGENT_D1 by the agent data AGENT_D1 updated in the step aST32.

Step aST37:

The CPU 33a generates hash data HASH_D1 of the updated agent data AGENT_D1 and generates hash data HASH_D1 of agent data AGENT_D1 before the updating.

Step aST38:

The CPU 33a updates hash data HASH_D1 of the disclosure agent data AGENT_DP1 by the hash data HASH_ D1 generated in the step aST37.

Step aST39:

The CPU 33a generates signature data SIGD of the disclosure agent data AGENT_DP1 updated in the step aST38 and adds the same to the disclosure agent data AGENT_DP1 shown in FIG. 15.

Step aST40:

The CPU 33a resets counter values of the time counter and the update time counter.
Below, an operation example when the client device 12_1a shown in FIG. 14 performs communication with the server device 10a will be explained.
FIG. 17 is a flowchart for explaining an operation example when the client device 12_1a shown in FIG. 14 performs communication with the server device 10a.
Steps aST51 to aST54 explained below are regulated by the boot program B_PRG.

Step aST51:

The CPU 33a of the client device 12_1a performs mutual authentication with the server device 10a via the interface 31a based on the secret key data SK_C1, disclosure key data PK_S and disclosure key certification data PKC_ S read from the memory 35 of the security module circuit SMa.
When legitimacy is confirmed to each other by the mutual authentication, the CPU 33a shares with the server device 10a session key data to be used for communication with the server device 10a thereafter and encrypts data based on the session key data in communication thereafter.
Note that, in the mutual authentication, the CPU 33a may authenticate legitimacy of the server device 10a based on an AC (attribute certificate) or a URL (uniform resource locator) of the server device 10a. Here, the AC is electronic data for certifying functions and attributes of the assignee by linking to identification data ID of the disclosure key certification data by a predetermined authentication agent (AC issuing agent). In the present example, it indicates that it is a server for distributing predetermined content data.

Step aST52:

When legitimacy is confirmed to each other by the mutual authentication performed in the step aST51, the CPU 33a proceeds to the step aST53, while not, finishes the processing.

Step aST53:

The CPU 33a generates hash data of the certification data AP_CER generated through the processing explained based on FIG. 16 and adds the same as signature data SIG to the certification data AP_CER.

Step aST54:

The CPU 33a transmits the signature added certification data AP_CER generated in the step aST53 and disclosure agent data AGENT_DP1 to the server device 10a via the interface 31a.

Step aST55:

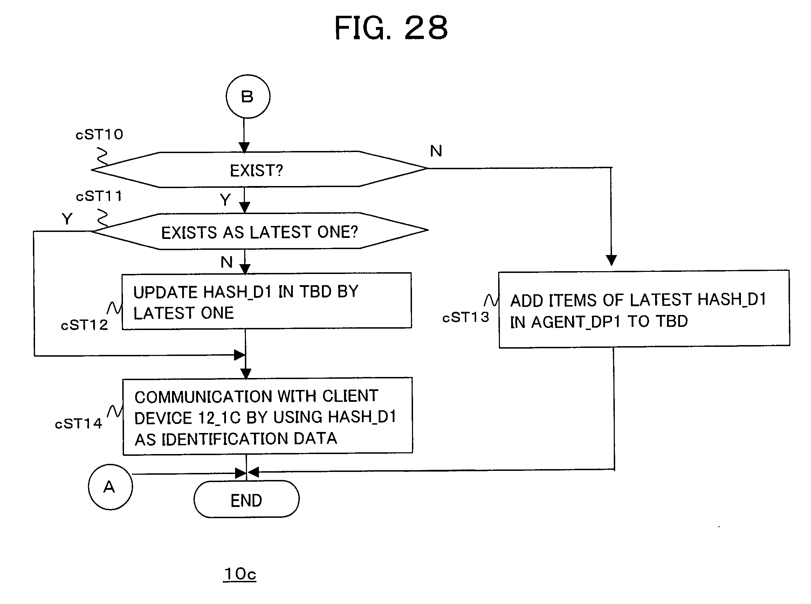

The CPU 33a uses the disclosure agent data AGENT_DP1 and hash data HASH_D1 transmitted in the step aST53 as its own identification data to perform communication with the server device 10a.
The CPU 33a utilizes data, such as content data, received from the server device 10a via the interface 31a by following the application program AP_C1 or the agent program AGENT_P1.
At this time, as explained above, data transmission from the server device 10a to the client device 12_1a is performed based on the disclosure agent data AGENT_DP1 transmitted from the client device 12_1a to the server device 10a, so that favors and other attributes of the user of the client device 12_1a are reflected.
Note that since the application program AP_C1 is provided with a copyright protection function, copyright of the content data is protected by the function.
Also, in the above embodiment, the case where the CPU 33a performs authentication processing and generation processing of signature data SIG based on the boot program B_PRG read from the security module circuit SMa was explained as an example, but the processing may be performed by the computing circuit 36 of the security module circuit SMa.
In this case, the client server 12_1a provides necessary data for authentication among data received from the server device 10a to the security module circuit SMa. Then, the computing circuit 36 of the security module circuit SMa performs computing processing based on the data and transmits the result to the server device 10a via the interface 31a. Also, the computing circuit 36 of the security module circuit SMa generates the signature data SIG of the certification data AP_CER and transmits the certification data AP_CER added with the signature data SIG to the server device 10a via the interface 31a.
Below, an operation example when the client device 12_1a shown in FIG. 14 performs communication with the client device 12_2a shown in FIG. 3 will be explained.

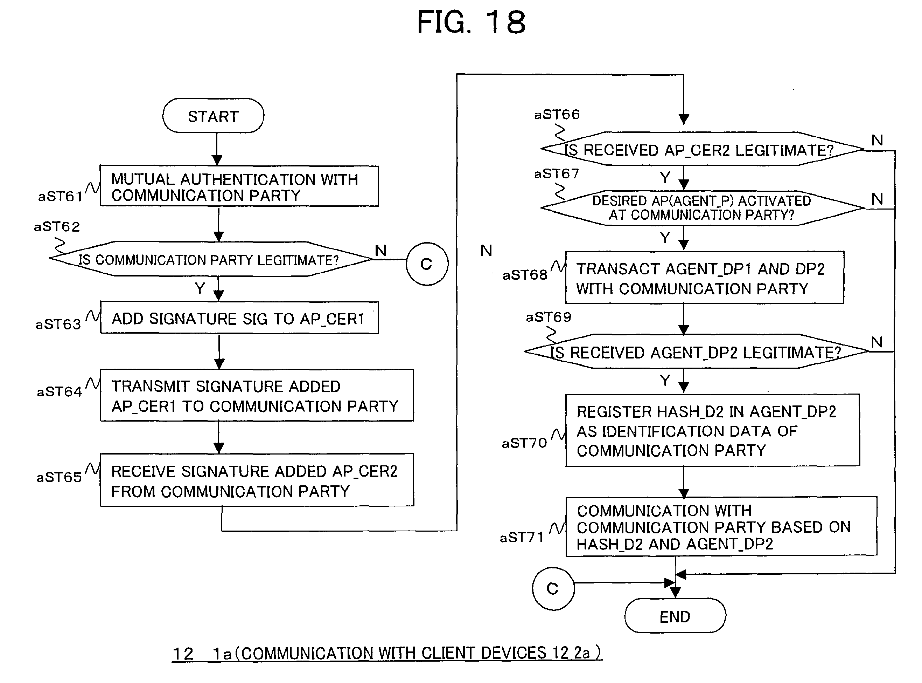

FIG. 18 is a flowchart for explaining an operation example when the client device 12_1a shown in FIG. 14 performs communication with the client device 12_2a shown in FIG. 3.
The steps aST61 to aST67 shown in FIG. 28 are performed based on the boot program B_PRG, and steps aST68 to aST71 shown in FIG. 18 are performed by the agent program AGENT_P1.

Step aST61:

The CPU 33a of the client device 12_1a performs mutual authentication with the client device 12_2a via the interface 31a based on the secret key data SK_C1, disclosure key data PK_C2 and disclosure key certification data PKC_C2 read from the memory 35 of the security module circuit SMa.
When the legitimacy is confirmed each other by the mutual authentication, the CPU 33a shares with the client device 12_2a session key data to be used for communication with the client device 12_2a thereafter and encrypts data based on the session key data in communication thereafter.
Note that, in the present embodiment, the memory 35 stores the disclosure key data PK_2 and the disclosure key certification data PKC_2, but they may be received from the client device 12_2a prior to the authentication.

Step aST62:

When legitimacy is confirmed to each other by the mutual authentication performed in the step aST61, the CPU 33a proceeds to the step aST63, while not, finishes the processing or performs error processing.

Step aST63:

The CPU 33a generates hash data of the certification data AP_CER1 generated through the processing explained based on FIG. 16 and adds the same as signature data SIG to the certification data AP_CER1.

Step aST64:

The CPU 33a transmits the signature added certification data AP_CER1 generated in the step aST63 to the client device 12_2a via the interface 31a.

Step aST65:

The CPU 33a receives from the client device 12_2a the certification data AP_CER2 added with signature data SIG generated by the client device 12_2a through the same processing as that explained by using FIG. 16 via the interface 31a.

As explained above, the certification data AP_CER2 is activated by the client device 12_2a, wherein the identification data AP_ID, production identification data MF_ID, version VER and hash value HASH of the application program AP_C2 confirmed to be legitimate are indicated by making them associated to one another as shown in FIG. 6.

Step aST66:

The CPU 33a verifies legitimacy of the certification data AP_CER2 received in the step aST64.

At this time, the CPU 33a, for example, generates hash data of the certification data AP_CER2 based on a hash function. Then, the CPU 33a determines whether the generated hash data matches with the signature data SIG and, when matched, determines that the certification data AP_CER2 is not tampered but legitimate.

Then, when determined that the certification data AP_CER2 is legitimate, the CPU 33a proceeds to a step aST67, while not, finishes the processing or performs error processing.

Step aST67:

The CPU 33a determines whether the identification data AP_ID of the application program AP_C1 specified by the user is included in the certification data AP_CER2 received in the step aST65 or not and, when determined that the identification data AP_ID is included (the application program AP_C2 is confirmed to be legitimate and activated in the client device 12_2a), proceeds to a step aST68, while not, finishes the processing or performs error processing.

Note that the CPU 33a may determine whether the production identification data MF_ID and version data VER are desired ones or not besides the identification data AP_ID in the step.

Step aST68:

The CPU 33a transmits the disclosure agent data AGENT_DP1 generated by the procedure shown in FIG. 16 to the client device 12_2a by following the already activated agent program AGENT_P1.

The interface 31a receives from the client device 12_2a the disclosure agent data AGENT_DP2 generated by the client device 12_1a.

Step aST69:

The CPU 33a verifies legitimacy of the signature data SIGD added to the disclosure agent data AGENT_DP1 received in the step aST68.

When it is determined that the signature data SIGD is legitimate, the CPU 33a proceeds to a step aST70, while not, finishes the processing or performs error processing.

Step aST70:

The CPU33a registers hash data HASH_D2 included in the disclosure agent data AGENT_DP2 received in the step aST68 as identification data of the client device 12_2a.

The hash data HASH_D2 is generated in the client device 12_2a by the same method as that when the client device 12_1a generates the hash data HASH_D1 as explained above.

Step aST71:

The CPU 33a uses the hash data HASH_D1 as identification data of the client device 12_1a and uses the hash data HASH_D2 registered in the step aST70 as identification data of the client device 12_1a to perform communication with the client device 12_2a.

For example, the CPU 33a encrypts data, such as predetermined content data, by following the agent program AGENT_P1 and transmits the same to the client device 12_2a via the interface 31a.

At this time, the CPU 33a transmits to the client device 12_2a data matching with favors and other attributes of the user of the client device 12_1a based on the disclosure agent data AGENT_DP2 received in the step aST68.

Other than the above, the CPU 33a may determine which of mails, chatting, voice mails and calls is frequently used by the user of the client device 12_2a, for example, based on the disclosure agent data AGENT_DP2 and use the frequently used medium in communication with the user.

Also, the CPU 33a utilizes data, such as content data, received from the client device 12_2a via the interface 31a.

Note that the client device 12_2a has the same configuration as that of the client device 12_1a explained above.

Below, an overall operation example of the communication system 1a shown in FIG. 3 will be explained.

Each of the client devices 12_1a and 12_2a performs the processing shown in FIG. 16 explained above to write the certification data AP_CER and AP_CER2 to the memory 35 in the security module circuit SMa shown in FIG. 14 of each of the client devices 12_1a and 12_2a, respectively.

Also, each of the client devices 12_1a and 12_2a generates disclosure agent data AGENT_DP1 and AGENT_DP2 indicating favors and other attributes of the users by performing the processing shown in FIG. 16 and writes the same to the memory 32a.

Then, the client devices 12_1a and 12_2a transmits the disclosure agent data AGENT_DP1 and AGENT_DP2 to the server device 10a.

The server device 10a identifies the client device 12_1a based on the hash data HASH_D1 in the disclosure agent data AGENT_DP1 and transmits to the client device 12_1a a variety of service data, such as content data, matching with favors and other attributes of the user of the client device 12_1a based on the agent data AGENT_D1 via the interface 21a.

Also, the server device 10a identifies the client device 12_2a based on the hash data HASH_D2 in the disclosure agent data AGENT_DP2 and transmits to the client device 12_2a a variety of service data, such as content data, matching with favors and other attributes of the user of the client device 12_2a via the interface 21a.

On the other hand, when performing communication with the client device 12_2a, the client device 12_1a transmits disclosure agent data AGENT_DP1 to the client device 12_2a and receives disclosure agent data AGENT_DP2 from the client device 12_2a.

Then, the client device 12_1a makes the client device 12_2a identify itself based on the hash data HAH_D1 and identifies the client device 12_2a based on the hash data HASH_D2 to perform communication with the client device 12_2a.

Also, the client device 12_1a transmits to the client device 12_2a data matching with favors and other characteristics of the user of the client device 12_2a or data in a matched form based on the disclosure agent data AGENT_DP2.

As explained above, in the communication system 1a, the client devices 12_1a and 12_2a use hash data HASH_D1 and HASH_d2 updated under a predetermined condition as their own identification data to perform communication with the server device 10a.

As a result, if operations (behaviors) of the users of the client devices 12_1a and 12_2a are monitored based on the hash data HASH_D1 and HASH_D2 on the network 9, the monitoring cannot be continued after the hash data HASH_D1 and HASH_D2 are updated. Accordingly, it is possible to prevent the operations of the users of the client devices 12_1a and 12_2a from being monitored for a long period of time and users' privacy can be protected.

Also, according to the communication system 1a, the server device 10a does not have to store operation history data of respective users and the agent function can be realized with a small load.

Also, according to the communication system 1a, communication using the agent function can be smoothly performed between the client devices 12_1a and 12_2a with a small load in terms of the memory capacity and processing.

For example, when exchanging data between the client devices 12_1a and 12_2a, data matching with the other user's favors can be transmitted.

Also, according to the communication system 1a, the respective client devices 12_1a and 12_2a verify legitimacy of application programs AP_C1 and AP_C2 activated by their own and certification data AP_CER1 and AP_CER2 indicating the result is transmitted to the server device 10a.

Therefore, the server device 10a does not have to store all hash data of application programs performed by the client devices 12_1a and 12_2a, and it is not necessary to perform verification processing of the legitimacy. Accordingly, a load on the server device 10a caused by determination of legitimacy of the application programs activated in the client devices 12_1a and 12_2a can be reduced.

Also, according to the communication system 1a, in the client devices 12_1a and 12_2a, as shown in FIG. 14, the boot program B_PRG for generating the certification data AP_CER explained above is stored in the certification data AP_CER1 and AP_CER2 and read by the CPU 33a via the data line 30 in a secured way, so that reliability of the certification data AP_CER can be improved.

Also, according to the communication system 1a, since the server device 10a receives signature added certification data AP_CER and verifies the signature data SIG after performing mutual authentication with the client devices 12_1a and 12_2a, it is possible for the server device 10a to determine legitimacy of the application programs activated in the client devices 12_1a and 12_2a with high reliability.

Also, according to the communication system 1a, even when transmitting/receiving content data between the client devices 12_1a and 12_2a in addition to the case between the server device 10a and the client devices 12_1a and 12_2a, one of the client devices 12_1a and 12_2a is capable of determining legitimacy of an application program activated by the other with a small load.

Note that the mutual authentication explained above is not limited to disclosure key authentication and may be any authentication method as far as it is a method or a system capable of performing mutual authentication.

Third Embodiment

The present embodiment relates to an example of the inventions according to the thirteenth to nineteenth aspects.

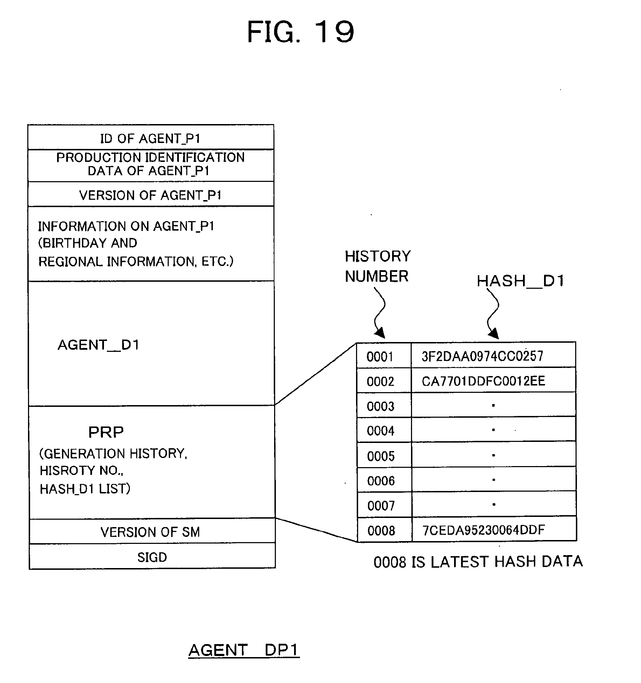

Below, the present embodiment will be explained with reference to FIG. 19 to FIG. 24.

First, corresponding relationships of respective components of the present embodiment with those in the present invention will be explained.

An application program AP_S shown in FIG. 12 corresponds to the program of the fifteenth and seventeenth inventions.

A boot program B_PRG shown in FIG. 14, etc. corresponds to the program or boot program of the fourteenth and sixteenth inventions.

Also, client device 12_1b shown in FIG. 3 corresponds to the computer of the first, fourteenth and sixteenth inventions, and the server device 10b and the client device 12_2b shown in FIG. 3 correspond to the communication party in the thirteenth, fourteenth and seventeenth inventions.

Also, the server device 10b shown in FIG. 3 corresponds to the computer of the fifteenth and seventeenth inventions, and the client device 12_1b shown in FIG, 3 corresponds to the communication party in the fifteenth and seventeenth inventions.

Also, the disclosure agent data AGENT_DP1 corresponds to the attributes data of the present invention, and the certification data AP_CER corresponds to the certification data of the present invention.

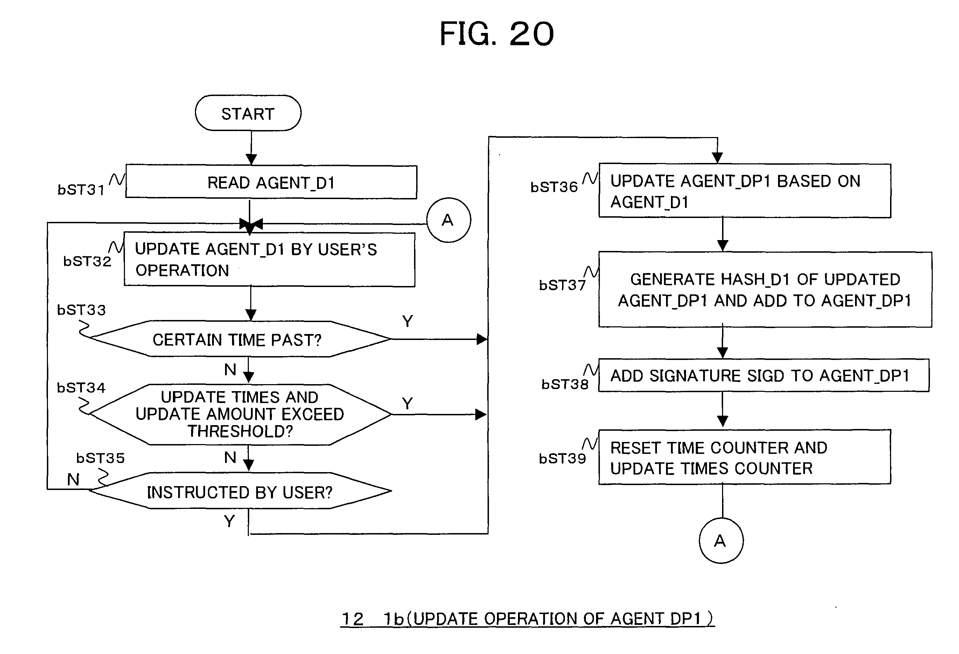

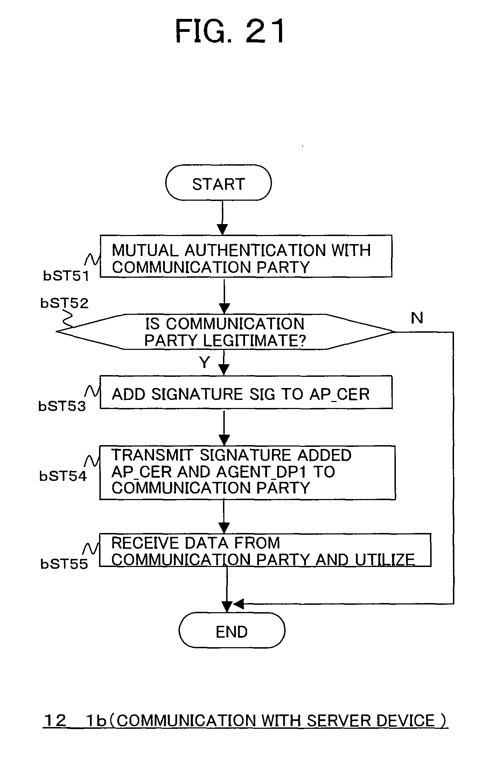

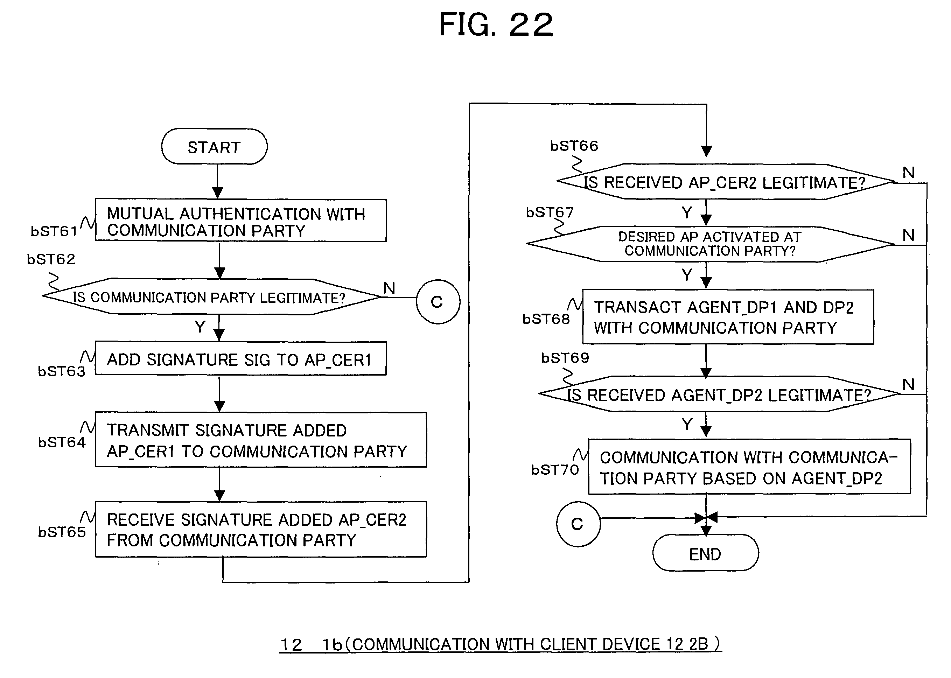

The steps shown in FIG. 20 correspond to the first procedure of the fourteenth invention, and a step bST54 shown in FIG. 21 and a step bST68 shown in FIG. 22 corresponds to the second procedure of the thirteenth invention.

Also, the respective steps shown in FIG. 8 correspond to the first procedure of the fourteenth invention, and a step bST54 shown in FIG. 21 and a step bST64 shown in FIG. 22 correspond to the second procedure of the fourteenth invention.

Also, a step bST7 shown in FIG. 13 corresponds to the first procedure of the fifteenth invention, and a step bST54 shown in FIG. 21 corresponds to the second procedure of the fifteenth invention.

[Server Device 10b]

FIG. 12 is a view of the configuration of the server device 10b shown in FIG. 3.

As shown in FIG. 12, the server device 10b has, for example, an interface 21b, a memory 22b and a CPU 23b, connected to one another via data lines 20.

Here, the interface 21b corresponds to the interface in the seventeenth invention, the memory 22b corresponds to the memory in the seventeenth invention and the CPU 23b corresponds to the execution circuit in the seventeenth invention.

The interface 21b transmits/receives data to and from the client devices 12_1b and 12_2b via the network 9.

The memory 22b stores an application program AP_S.

The application program AP_S provides to the client devices 12_1b and 12_2b a variety of services matching with favors and other characteristics of the users of the client devices 12_1b and 12_2b based on the disclosure agent data AGENT_DP1 and AGENT_DP2 received from the client devices 12_1b and 12_2b, which will be explained later on.

The memory 22b stores secret key data SK_S, disclosure key data PK_S, disclosure key certification data PKC_S and identification data ID_S of the server device 10b.

Also, the memory 22b stores disclosure agent data AGENT_DP1 received from the client device 12_1b.

Also, the memory 22b stores disclosure key data PK_C1 and disclosure key certification data PKC_C1 of the client device 12_1b from communication with the client device 12_1b, etc.

Also, the memory 22b stores disclosure agent data AGENT_DP2 received from the client device 12_2b.

Also, the memory 22b stores disclosure key data PK_C2 and disclosure key certification data PKC_C2 of the client device 12_2b from communication with the client device 12_2b, etc.

The CPU 23b executes the application program AP S and collectively controls operations of the server device 10b.

Processing performed by the CPU 23b will be explained in relation to an operation example of the server device 10b.

Below, an operation example when the server device 10b shown in FIG. 12 performs communication with the client device 12_1b will be explained.

FIG. 13 is a flowchart for explaining an operation example when the server device 10b shown in FIG. 12 performs communication with the client device 12_lb.

Each step explained below is regulated by the application program AP_S.

Step aST1:

The CPU 23b of the server device 10b (reads an application program AP_S specified by the user from the memory 22 and executes the same.)

The application program AP_S specified by a user is, for example, a search engine and a program for providing content data, such as video and audio, to the client device and transmitting/receiving data only to and from a program having identification data AP_ID corresponding thereto. The content data may relate to copyright.

Step aST2:

The CPU 23b performs mutual authorization with the client device 12_1b via the interface 21b, for example, based on the secret key data SK_S, disclosure key data PK_C1 and disclosure key certification data PKC_C1 read from the memory 22b.

As the mutual authentication, the ISO/IEC 9798-3 method, etc. may be used.

When legitimacy is confirmed to each other by the mutual authentication, the CPU 23b shares with the client device 12_1b session key data to be used for communicating with the client device 12_1b thereafter and encrypts data based on the session key data in the communication thereafter.

In the present embodiment, for example, the CPU 23b does not have to verify hash data of the boot program B_PRG of the client device 12_1b.

Step aST3:

The CPU 23b proceeds to a step aST4 when legitimacy is confirmed to each other by the mutual authentication performed in the step aST2, while not, finishes the processing or performs error processing.

Step aST4:

The CPU 23b receives certification data AP_CER added with signature data SIG from the client device 12_1b via the interface 21b.

The certification data AP_CER is activated by the client device 12_1b, for example as will be explained later on, and indicates identification data AP_ID, production identification data MF_ID, version VER and hash value HASH of the application program AP_C1 confirmed to be legitimate by making them associated to one another as shown in FIG. 6.

In the present embodiment, an agent program AGEENT_P1 is used as one of the application programs AP_C1.

Step aST5:

The CPU 23b verifies legitimacy of the certification data AP_CER received in the step aST4.

At this time, for example, the CPU 23b generates hash data of the certification data AP_CER based on a hash function. Then, the CPU 23b checks whether the generated hash data matches with signature data SIG added to the certification data AP_CER shown in FIG. 6 or not and, when matched, determines that the certification data AP_CER1 is not tampered but legitimate.

Here, the hash function is a function for generating fixed length data from a given original sentence and has a characteristic that the original sentence cannot be recovered from the hash value and generation of different data having the same hash value is extremely difficult.

Then, the CPU 23b proceeds to a step aST6 when determined that the certification data AP_CER is legitimate, while not, finishes the processing or performs error processing.

Note that when the client device 12_1b generates signature data SIG by encrypting the hash data by using the secret key SK_C1 of the client device 12_1b, the CPU 23b decrypts the signature data SIG by using the disclosure key PK_C1 of the client device 12_1b and compares the decrypted data with the hash data.

Note that since data is encrypted by using a session key on the network 9, a desired object can be attained without using the digital signature technique requiring a long time for processing. Namely, since hash data itself is encrypted by the session key, almost the same function as that of the digital signature can be realized thereby.

Also, to prevent illegitimate reuse of data transacted in the past, normally, random number data is added to the data (the certification data AP_CER shown in FIG. 6 in this example), hash data is calculated for the entire data including the random number, and the result is used as the signature data SIG. Also, when encrypting by using the secret key SK_C1, hash data of data including the random number data is encrypted.

Step aST6:

The CPU 23b determines whether the identification data AP_ID of a specified application program AP_C1 (an agent program AGENT_P1 in the present embodiment) is included in the certification data AP_CER received in the step aST4 or not and, when determined that the identification data AP_ID is included (the application program AP_ID is confirmed to be legitimate and activated on the client device 12_1b), proceeds to a step aST7, while not, finishes the processing.

Here, the agent program AGENT_P1 is a program for generating disclosure agent data AGENT_DP1 of the user of the client device 12_1b, which will be explained later on.

Note that the CPU 23b may verify whether the production identification data MF_ID and version data VER besides the identification data AP_ID are desired ones in the above verification of the step.

Note that, to improve the security, not only by verifying that the identification data AP_ID is included in the certification data AP_CER, but by introducing a unique protocol to an operation program AP_C1 for discriminating it from other programs or by encrypting ID_C1 unique to the client device by using a secret key unique to the operation program AP_C1 and suitably receiving the data, a program of the communication party may be recognized to be a desired one.

Step aST7:

The interface 21b receives disclosure agent data AGENT_DP1 from the client device 12_1b.

Step aST8:

The CPU 23b verifies legitimacy of signature data SIGD added to the disclosure agent data AGENT_DP1 shown in FIG. 19 received in the step aST7 and, when determined to be legitimate, proceeds to a step aST9, while not, finishes the processing or performs error processing.

Steps aST9 and aST10:

The CPU 23b analyzes the disclosure agent data AGENT_DP1 and transmits to the client device 12_1b a variety of service data, such as content data, matching with favors and other characteristics of the user of the client device 12_1b.

For example, when the application program AP_S is a search engine, the CPU 23b uses a predetermined searching keyword input by the user of the client device 12_1b and furthermore uses keywords relating to the keyword determined based on favors of the user to search data and display the searching results.

For example, when the user inputs "package tour" as a searching keyword and the disclosure agent data AGENT_DP1 indicates that the user is in favor of "cars", the CPU 23b selects plans of using a car to get to the destination and data relating to lent-$\alpha$-car plans in favor of other package tour data and transmits to the client device 12_1a.

As explained above, the server device 10b is capable of realizing the agent function based on the disclosure agent data AGENT_DP1 received from the client device 12_1b without accumulating operation history data of the user of the client device 12_1b.

[Client Device 12_1b]

FIG. 14 is a view of the configuration of a client device 12_1 shown in FIG. 3.

As shown in FIG. 14, the client device 12_1b has, for example, an interface 31b, a memory 32b, a CPU 33b, an operation unit 37b and a security module circuit SMb, connected to one another via data lines 30.

Here, the interface 31b corresponds to the interface in the sixteenth invention, the memory 32b corresponds to the memory in the sixteenth invention, the security module circuit SMb corresponds to the circuit module in the sixteenth invention, and the CPU 33b corresponds to the execution circuit in the sixteenth invention.

In the present embodiment, the client device 12_1b is, for example, a computer, a PDA (personal digital assistance) and a mobile phone, etc.

The interface 31b performs communication with the server device 10b and the client device 12_2b via the network 9.

The memory 32b stores an application program AP_C1.

The memory 32b stores an agent program AGENT_P1 as one of the application programs AP_C1.

The memory 32b is a semiconductor memory or a hard disk drive.

The security module circuit SMb has, for example, a memory 35 and a computing circuit 36.

The security module circuit SMb is a tamper-resistant circuit and provided with a function of preventing tampering and peeping of stored data in the memory 35 and peeping of processing in the computing circuit 36.

The tamper-resistant circuit is a circuit configured to prevent erroneous operations and leaks of internal data when it is attacked from the outside (attacks by illegitimately reading internal data and by setting an input frequency or input voltage to be out of a predetermined range, etc.). Specifically, to prevent reading of internal data, the circuit is made to have a multilayer structure to provide the memory to the lowermost layer and form a dummy layer (for example, an aluminum layer) as the upper layer and the lower layer, so that a direct access from the outside to the memory input/ output I/F is made difficult. Also, it is configured to be provided with a tamper-resistant circuit frequency detection circuit and a voltage detection circuit so as not to operate when the frequency or voltage is not in a predetermined range.

The memory 35 stores secret key data SK_C1, disclosure key data PK_C1, disclosure key certification data PKC_C1 and identification data ID_C1 of the client device 12_1b.

Also, the memory 35 stores disclosure key data PK_S and disclosure key certification data PKC_S of the server device 10b from communication with the server device 10b, etc.

Also, the memory 35 stores disclosure key data PK_C2 and disclosure key certification data PKC_C2 of the client device 12_2b from communication with the client device 12_2b, etc.

Also, the memory 35 stores the disclosure agent data AGENT_DP2 received from the client device 12_2b.

The operation unit 37b is an operation means, such as a keyboard, a mouse and a touch panel, and outputs an operation signal in accordance with an operation by the user to the CPU 33b.

The CPU 33b performs a variety of processing based on the boot program B_PRG, application program AP_ C1 and an operation signal from the operation unit 37b.

The CPU 33b reads a boot program B_PRG from the memory 35 in the security module circuit SMb via the data line in a secured state and executes the same.

The CPU 33b generates the certification data AP_CER shown in FIG. 6 and transmits the same to the server device 10b and the client device 12_2b by following the boot program B_PRG.

Note that to realize the reading in a secured state, methods are used, such that a common encrypting key data is shared by the CPU 33b and the security module circuit SMb to encryptedata on the data line 30, mutual authentication is performed between the CPU 33b and the security module circuit SMb, data on the data line 30 is encrypted by using shared session key data, and the CPU 33b and the security module circuit SMb are molded to be one package, to prevent an access from the outside to data on the data line 30, etc.

Also, to prevent the security module circuit SMb from being installed into other client device, memory data (ID, random number, key and other data) peculiar to the client device 12_1b may be decentralized to be stored therein and verification of the memory data may be performed by the security module circuit SMb at the time of activation. Alternately, an input/output operation of the interface 31b may be made complicated, etc. to make the boot mechanism of the CPU 33b complicated, and the mechanism is known only to an approved manufacturer to furthermore improve reliability of activation of the boot program B_PRG.

The CPU 33b reads an application program AP_C1 from the memory 32b and executes the same.

In the present embodiment, the CPU 33b reads an agent program AGENT_P1 from the memory 32b and executes the same.

The CPU 33b generates disclosure agent data AGENT_DP1 shown in FIG. 19 and transmits the same to the server device 10b and the client device 12_2b by following the agent program AGENT_P1.

As shown in FIG. 19, the disclosure agent data AGENT_DP1 includes, for example, identification data ID (agent software ID), production identification data (agent software manufacture ID), version data of the agent program AGENT_ P1 and other information on the agent program AGENT_P1, agent data AGENT_D1, update history data PRP of the agent data AGENT_D1, a version of the security module SMb and signature data SIGD of the agent program AGENT_P1.

Here, the update history data PRP indicates update history of the disclosure agent data AGENT_DP1 indicating the history number and hash data HASH_D1 of the agent data AGENT_D1 after the updating of each updating.

Also, the agent data AGENT_D1 is successively updated data based on attributes data, such as the user's favors, obtained by analyzing operation history of the user of the client device 12_1b, which will be explained later on.

Note that the CPU 33b may determine whether or not to include the identification data for specifying a device of the client device 12_1b, such as the security module circuit SMb, in the disclosure agent data AGENT_DP1 in accordance with an instruction from the user.

The CPU 33b collectively controls operations of the client device 12_1b.

Processing performed by the CPU 33b will be explained in relation to an operation example of the client device 12_1b.

Below, an operation that the client device 12_1b shown in FIG. 14 generates certification data AP_CER by following the boot program B_PRG will be explained.

FIG. 8 is a flowchart for explaining an operation for generating the certification data AP_CER by the client device 12_1b shown in FIG. 14.

Respective steps explained below are regulated by the boot program B_PRG.

Step ST11:

When the client device 12_1b is activated, the computing circuit 36 of the security module circuit SMb reads the boot program B_PRG from the memory 35 and verifies legitimacy of the boot program B_PRG.

At this time, the computing circuit 36, for example, generates hash data of the boot program B_PRG based on a hash function, compares the generated hash data with hash data of the boot program B_PRG prepared in advance and, when matched, determines that the boot program B_PRG stored in the memory 35 is legitimate (not tampered).

Step ST12:

When the boot program B_PRG is determined to be legitimate in the step ST11, the client device 12_1b proceeds to a step ST13 and, while not, performs error processing.

Step ST13:

The CPU 33b of the client device 12_1b reads the boot program B_PRG from the memory 35 via the data line 30 in a secured state.

Step ST14:

The CPU 33b executes the boot program B_PRG read in the step ST13.

Step ST15:

The CPU 33b selects a not selected application program AP_C1 from a plurality of application programs AP_ C1 specified by the user based on the boot program B_PRG. In the present embodiment, an agent program AGENT_ P1 is specified as the application program AP_C1.

Step ST16:

The CPU 33b reads the application program AP_C1 selected in the step ST15 from the memory 32b and verifies the legitimacy.

At this time, the CPU 33b, for example, generates hash data of the application program AP_C1 based on a hash function, compares the generated hash data with hash data of the application program AP_C1 prepared in advance and, when matched, determines that the application program AP_C1 stored in the memory 32b is legitimate.

Alternately, the CPU 33b may verify predetermined signature data corresponding to the application program AP_C1 based on disclosure key data. The signature data may be added to the application program AP_C1 or stored in the memory 32b separately from the application program AP_C1.

Step ST17:

When determined that the application program AP_C1 is legitimate in the step ST16, the CPU 33b proceeds to a step ST18 and, if not, proceeds to a step ST20.

Step ST18:

The CPU 33b adds identification data AP_ID, production identification data MF_ID, version data VER and hash data HASH (hereinafter, also simply referred to as identification data AP_ID) of the application program AP_C1 determined to be legitimate in the step ST 16 to certification data AP_CER.

Step ST19:

The CPU 33b activates the application program AP_C1 determined to be legitimate in the step ST16.

In the present embodiment, the case of activating the application program AP_C1 on condition that the application program AP_C1 is determined to be legitimate in the step ST16 will be explained as an example. But when the application program AP_C1 is not determined to be legitimate, the application program AP_C1 may be activated by notifying the user of the fact and obtaining approval by the user. Note that, in this case, the CPU 33b does not add identification data AP_ID of the application program AP_C1 to the certification data AP_CER.

Step ST20:

The CPU 33b determines whether all application programs AP_C1 specified by the user are selected in the step ST15 or not and, when determined to be selected, finishes the processing, while not, returns to the step ST15.

In the present embodiment, when the agent program AGENT_P1 is legitimate, the CPU 33b activates the agent program AGENT_P1 and the identification data AP_ID is added to the certification data AP_CER.

Below, an operation example when the client device 12_1b shown in FIG. 14 generates disclosure agent data AGENT_DP1 by following the agent program AGENT_P1 will be explained.

FIG. 20 is a flowchart for explaining an operation example when the client device 12_1b shown in FIG. 14 generates disclosure agent data AGENT_DP1.

Respective steps in FIG. 20 are executed by the CPU 33b by following the agent program AGENT_P1.

Operations below are executed in parallel with operations of other application program AP_C1, such as a search engine.

Step bST31:

The CPU 33b reads the agent data AGENT_D1 from the memory 32b.

Step bST32:

The CPU 33b updates operation history data of the user of the client device 12_1b based on an operation signal from the operation unit 37b.

Then, the CPU 33b analyzes the updated operation history data and generates attributes data indicating the user's favors and other attributes.

The CPU 33b updates the present agent data AGENT_D1 based on the generated attributes data.

Step bST33:

The CPU 33b determines whether a predetermined time has past or not based on a counter value of a time counter (not shown) and, when determined it has, proceeds to a step bST36, while not, proceeds to a step bST34.

In the present embodiment, the predetermined time is, for example, one week, one month or three months, etc.

Step bST34:

The CPU 33b determines whether a value indicated by the counter value of a update time counter (the number of times of updating in the step aST32), a degree (updating amount) of content of updated attributes data and the updating frequency exceed predetermined thresholds or not and, when determined to be exceeded, proceeds to a step bST36, while not, proceeds to a step bST35.

Step bST35:

The CPU 33b determines whether a updating instruction of the disclosure agent data AGENT_DP1 is received from the user or not based on an operation signal from the operation unit 37b and, when determined that the updating instruction is received, proceeds to a step bST36, while not, returns back to the step bST32.

Step bST36:

The CPU 33b reads the disclosure agent data AGENT_DP1 shown in FIG. 19 from the memory 32b and updates the agent data AGENT_D1 by the agent data AGENT_D1 updated in the step bST32.

Step bST37:

The CPU 33b generates hash data HASH_D1 of the updated agent data AGENT_D1, generates hash data HASH_D1 of agent data AGENT_D1 before the updating, and updates the update history data PRP shown in FIG. 19 based thereon.

Step bST38:

The CPU 33b generates signature data SIGD of the disclosure agent data AGENT_DP1 updated in the step bST37 and adds the same to the disclosure agent data AGENT_DP1 shown in FIG. 19.

Step aST39:

The CPU 33b resets counter values of the time counter and the update time counter.
Below, an operation example when the client device 12_1b shown in FIG. 14 performs communication with the server device 10b will be explained.
FIG. 21 is a flowchart for explaining an operation example when the client device 12_1b shown in FIG. 14 performs communication with the server device 10b.
Steps bST51 to bST55 explained below are regulated by the boot program B_PRG.

Step bST51:

The CPU 33b of the client device 12_1b performs mutual authentication with the server device 10b via the interface 31b based on the secret key data SK_C1, disclosure key data PK_S and disclosure key certification data PKC_S read from the memory 35 of the security module circuit SMb.
When legitimacy is confirmed to each other by the mutual authentication, the CPU 33b shares with the server device 10b session key data to be used for communication with the server device 10b thereafter and encrypts data based on the session key data in communication thereafter.
Note that, in the mutual authentication, the CPU 33b may authenticate legitimacy of the server device 10b based on an AC (attribute certificate) or a URL (uniform resource locator) of the server device 10b. Here, the AC is electronic data for certifying functions and attributes of the assignee by linking to identification data ID of the disclosure key certification data by a predetermined authentication agent (AC issuing agent). In the present example, it indicates that it is a server for distributing predetermined content data.

Step bST52:

When legitimacy is confirmed to each other by the mutual authentication performed in the step bST51, the CPU 33b proceeds to the step bST53, while not, finishes the processing.

Step bST53:

The CPU 33b generates hash data of the certification data AP_CER generated through the processing explained based on FIG. 8 and adds the same as signature data SIG to the certification data AP_CER.

Step bST54:

The CPU 33b transmits the signature added certification data AP_CER generated in the step bST53 and disclosure agent data AGENT_DP1 to the server device 10b via the interface 31b.

Step bST55:

The CPU 33b utilizes the data, such as content data, received from the server device 10b via the interface 31b by following a predetermined application program AP_C1 or agent program AGENT_P1.
At this time, as explained above, data transmission from the server device 10b to the client device 12_1b is performed based on the disclosure agent data AGENT_DP1 transmitted from the client device 12_1b to the server device 10b, so that favors and other attributes of the user of the client device 12_1b are reflected.
Note that since the application program AP_C1 is provided with a copyright protection function, copyright of the content data is protected by the function.

Also, in the above embodiment, the case where the CPU 33b performs authentication processing and generation processing of signature data SIG based on the boot program B_PRG read from the security module circuit SMb was explained as an example, but the processing may be performed by the computing circuit 36 of the security module circuit SMb.

In this case, the client server 12_1b provides necessary data for authentication among data received from the server device 10b to the security module circuit SMb. Then, the computing circuit 36 of the security module circuit SMb performs computing processing based on the data and transmits the result to the server device 10b via the interface 31b. Also, the computing circuit 36 of the security module circuit SMb generates the signature data SIG of the certification data AP_CER and transmits the certification data AP_CER added with the signature data SIG to the server device 10b via the interface 31b.

Below, an operation example when the client device 12_1b shown in FIG. 14 transmits/receives content data to and from the client device 12_2b shown in FIG. 3 will be explained.

FIG. 22 is a flowchart for explaining an operation example when the client device 12_1b shown in FIG. 14 transmits/receives content data to and from the client device 12_2b shown in FIG. 3.

The steps bST61 to bST67 shown in FIG. 22 are performed by following the boot program B_PRG, and steps bST68 to bST70 are performed by following the agent program AGENT_P1.

Step bST61:

The CPU 33b of the client device 12_1b performs mutual authentication with the client device 12_2b via the interface 31b based on the secret key data SK_C1, disclosure key data PK_C2 and disclosure key certification data PKC_C2 read from the memory 35 of the security module circuit SMb.

When the legitimacy is confirmed each other by the mutual authentication, the CPU 33b shares with the client device 12_2b session key data to be used for communication with the client device 12_2b thereafter and encrypts data based on the session key data in communication thereafter.

Note that, in the present embodiment, the memory 35 stores the disclosure key data PK 2 and the disclosure key certification data PKC_2, but they may be received from the client device 12_2b prior to the authentication.

Step bST62:

When legitimacy is confirmed to each other by the mutual authentication performed in the step bST61, the CPU 33b proceeds to the step bST63, while not, finishes the processing or performs error processing.

Step bST63:

The CPU 33b generates hash data of the certification data AP_CER1 generated through the processing explained based on FIG. 8 and adds the same as signature data SIG to the certification data AP_CER1.

Step bST64:

The CPU 33b transmits the signature added certification data AP_CER1 generated in the step bST63 to the client device 12 2b via the interface 31b.

Step bST65:

The CPU 33b receives from the client device 12_2b the certification data AP_CER2 (not shown) added with signature data SIG generated by the client device 12_2b through the same processing as that explained by using FIG. 8 via the interface 31b.

As explained above, the certification data AP_CER2 is activated by the client device 12_2b, wherein the identification data AP_ID, production identification data MF_ID, version VER and hash value HASH of the application program AP_C2 confirmed to be legitimate are indicated by being made associated to one another as shown in FIG. 6.

Step bST66:

The CPU 33b verifies legitimacy of the certification data AP_CER2 received in the step bST64.

At this time, the CPU 33b, for example, generates hash data of the certification data AP_CER2 based on a hash function. Then, the CPU 33b determines whether the generated hash data matches with the signature data SIG and, when matched, determines that the certification data AP_CER2 is not tampered but legitimate.

Then, when it is determined that the certification data AP_CER2 is legitimate, the CPU 33b proceeds to a step bST67, while not, finishes the processing or performs error processing.

Step bST67:

The CPU 33b determines whether the identification data AP_ID of the application program AP_C1 specified by the user is included in the certification data AP_CER2 received in the step bST65 or not and, when determined that the identification data AP_ID is included (the application program AP_C2 is confirmed to be legitimate and activated in the client device 12_2b), proceeds to a step bST68, while not, finishes the processing or performs error processing.
Note that the CPU 33b may determine whether the production identification data MF_ID and version data VER are desired ones or not besides the identification data AP_ID in the step.

Step bST68:

The CPU 33b transmits the disclosure agent data AGENT_DP1 generated by the procedure shown in FIG. 20 to the client device 12_2b via the interface 31b by following the already activated agent program AGENT_P1.
The interface 31b receives from the client device 12_2b the disclosure agent data AGENT_DP2 generated by the client device 12_1b.

Step bST69:

The CPU 33b verifies legitimacy of the signature data SIGD added to the disclosure agent data AGENT_DP2 received in the step bST68.
When it is determined that the signature data SIGD is legitimate, the CPU 33b proceeds to a step bST70, while not, finishes the processing or performs error processing.

Step bST70:

The CPU33b encrypts data, such as predetermined content data, and transmits data matching with favors and other characteristics of the user of the client device 12_1b by following the agent program AGENT_P1.
Other than the above, the CPU 33b may determine which of mails, chatting, voice mails and calls is frequently used by the user of the client device 12_2b, for example, based on the disclosure agent data AGENT_DP2 and use the frequently used medium in communication with the user.
Also, the CPU 33b utilizes data, such as content data, received from the client device 12_2b via the interface 31b.
Note that the client device 12_2b has the same configuration as that of the client device 12_1b explained above.
Below, an overall operation example of the communication system 1b shown in FIG. 3 will be explained.
Each of the client devices 12_1b and 12_2b performs the processing shown in FIG. 8 explained above to write the certification data AP_CER and AP_CER2 to the memory 35 in the security module circuit SMb shown in FIG. 5 of each of the client devices 12_1b and 12_2b, respectively.
Also, each of the client devices 12_1b and 12_2b generates disclosure agent data AGENT_DP1 and AGENT_DP2 indicating favors and other attributes of the users by performing the processing shown in FIG. 20 and writes the same to the memory 32b.
Then, the client devices 12_1a and 12_2a transmit the disclosure agent data AGENT_DP1 and AGENT_DP2 to the server device 10b.
The server device 10b transmits to the client device 12_1b a variety of service data, such as content data, matching with favors and other attributes of the user of the client device 12_1b based on the disclosure agent data AGENT_DP1 via the interface 21b.
Also, the server device 10b transmits to the client device 12_2b a variety of service data, such as content data, matching with favors and other attributes of the user of the client device 12_2b based on the disclosure agent data AGENT_DP2 via the interface 21b.
On the other hand, when performing communication with the client device 12_2b, the client device 12_1b transmits disclosure agent data AGENT_DP1 to the client device 12_2b and receives disclosure agent data AGENT_DP2 from the client device 12_2b.
Then, the client device 12_1b transmits to the client device 12_2b data matching with favors and other characteristics of the user of the client device 12_2b or data in a matched form based on the disclosure agent data AGENT_DP2.
As explained above, according to the communication system 1b, the server device 10b does not have to store operation history data of respective users and the agent function can be realized with a small load.

Also, according to the communication system 1b, communication using the agent function can be smoothly performed between the client devices 12_1b and 12_2b with a small load in terms of the memory capacity and processing.

For example, when exchanging data between the client devices 12_1b and 12_2b, data matching with the other user's favors can be transmitted.

Also, according to the communication system 1b, the respective client devices 12_1b and 12_2b verify legitimacy of application programs AP_C1 and AP_C2 activated by their own and certification data AP_CER1 And AP_CER2 indicating the result is transmitted to the server device 10b.

Therefore, the server device 10b does not have to store all hash data of application programs performed by the client devices 12_1b and 12_2b, and it is not necessary to perform verification processing of the legitimacy. Accordingly, a load on the server device 10b caused by determining legitimacy of the application programs activated in the client devices 12_1b and 12_2b can be reduced.

Also, according to the server device 1b, in the client devices 12_1b and 12_2b, as shown in FIG. 14, the boot program B_PRG for generating the certification data AP_CER explained above is stored in the certification data AP_CER1 and AP_CER2 and read by the CPU 33b via the data line 30 in a secured way, so that reliability of the certification data AP_CER can be improved.

Also, according to the communication system 1b, even when transmitting/receiving content data between the client devices 12_1b and 12_2b in addition to the case between the server device 10b and the client devices 12_1b and 12_2b, one of the client devices 12_1b and 12_2b is capable of determining legitimacy of an application program activated by the other with a small load.

The present invention is not limited to the above embodiments.

For example, the client device 12_1b, etc. may generate agent data AGENT_D1 by furthermore including therein information on favors, age, sex, etc. of the user directly input by the user other than the operation history of the user by following the agent program AGENT_P1.

Also, the client device 12_1b, etc. may generate agent data AGENT_D1 by furthermore including therein information on private data, such as a password, name, address, telephone number and mail address, of the user directly input by the user by following the agent program AGENT_P1.

In this case, the client device 12_1b, etc. performs processing of including data relating to privacy , such as the personal data mentioned above in the agent data AGENT_D1 but not including in the disclosure agent data AGENT_DP1, etc.

Also, the client device 12_1b, etc. may classify information on favors and access history, etc. of the user to disclosure information and non-disclosure information in accordance with an instruction from the user and include only the disclosure information in the disclosure agent data AGENT_DP1. In this case, the client device 12_1b, etc. encrypts the non-disclosure information and stores in the memory 32b shown in FIG. 14.

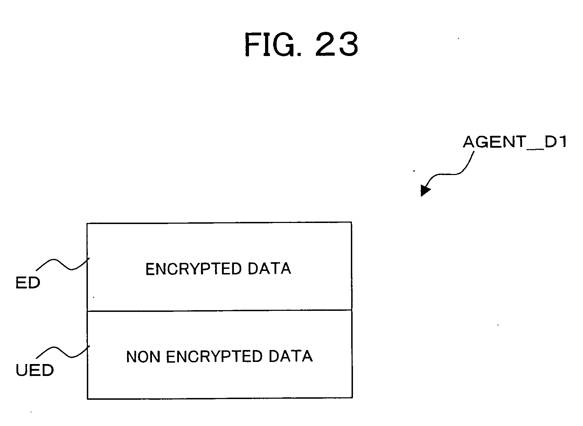

Also, the client device 12_1b, etc. may include in the agent data AGENT_D1 of the disclosure agent data AGENT_DP1 shown in FIG. 19, as shown in FIG. 23, encrypted data ED and not encrypted data UED.

In this case, the client device 12_1b, etc. may regulate, for example, a plurality of encrypting levels for the encrypted data ED.

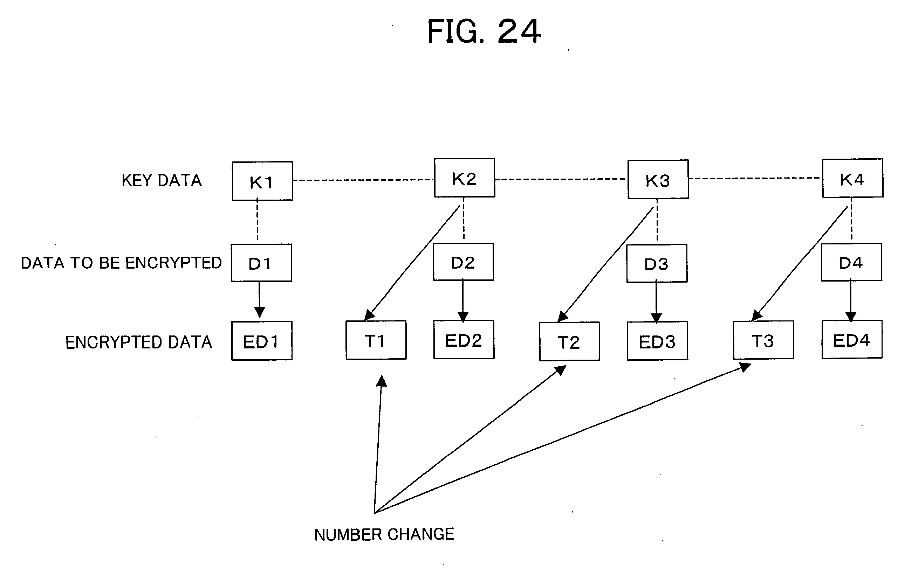

Namely, the client device 12_1b, etc. regulates, for example, K1, K2, K3 and K4 as key data as shown in FIG. 24.

Then, the client device 12_1b, etc. transmits encrypting data T2, T3 and T4 obtained by encrypting key data and encrypting data ED1, ED2, ED3 and ED4 to the server device 10b or the client device 12_2b.

In this case, for example, "Enc" and "Dec" are defined as (1) below and key data K1 to K4, data to be encrypted D1 to D4 and encrypted data ED1 to ED4 and T2 to T4 are regulated as (2) and (3) below.

[Formula 1]

$$(\text{encrypted data}) = \text{Enc}(\text{key data, data to be encrypted})$$

$$(\text{data to be encrypted}) = \text{Dec}(\text{key data, encrypted data})$$

$$\dots (1)$$

[Formula 2]

$$ED1 = Enc(K1, D1)$$

$$T1 = Enc(K1, K2)$$

$$ED2 = Enc(K2, D2)$$

$$T2 = Enc(K3, D3)$$

$$ED3 = Enc(K3, D3)$$

$$T3 = Enc(K3, K4)$$

$$ED4 = Enc(K4, D4)$$

$$...(2)$$

[Formula 3]

$$K4 = Dec(K3, T3)$$

$$D4 = Dec(K4, ED4)$$

$$K3 = Dec(K2, T2)$$

$$D3 = Dec(K3, ED3)$$

$$K2 = Dec(K1, T1)$$

$$D2 = Dec(K2, ED2)$$

$$D1 = Dec(K1, ED1)$$

$$...(3)$$

When holding key data K1, the server device 10 or the client device 12_2b is capable of obtaining key data K2, K3 and K4, while when holding key data K2, capable of obtaining key data K3 and K4, and when holding key data K3, capable of obtaining key data K4. Accordingly, the encrypting level can be set based on the key data K1 to K4.

Namely, the client device 12_1b, etc. provides the server device 10b and the client device 12_2b with key data specified by itself among the key data K1 to K4 and encrypts encrypted data ED shown in FIG. 23 by using any one of the key data, so that it is possible that only the server device 10b and the client device 12_2b specified by itself are allowed to decrypt the data ED.

For example, when the client device 12_1b provide the client device 12_2b with key data K2 to hold, it is possible to let the client device 12_2b decryptedata ED encrypted by using key data K2, K3 or K4 but not to let the client device 12_2b decryptedata ED encrypted by using key data K1.

Fourth Embodiment

Present embodiment is an example of the inventions according to the twentieth to twenty sixth aspects.

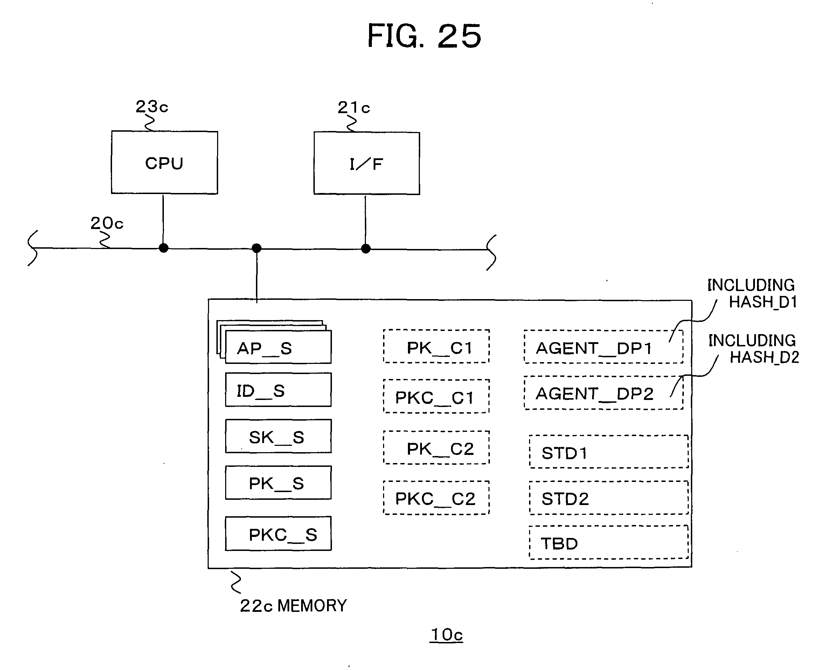

Below, a communication system according to the embodiment of the present invention will be explained with reference to FIG. 25 to FIG. 35.

First, corresponding relationships of respective components of the present embodiment to those in the present invention will be explained.

An application program AP_S shown in FIG. 25 corresponds to the program of the twenty first and twenty third inventions.

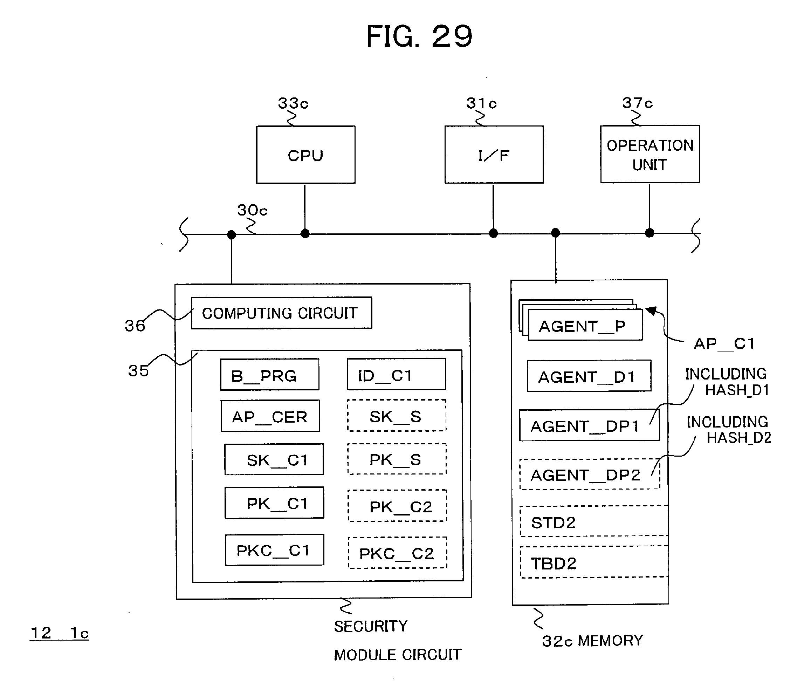

A boot program B_PRG shown in FIG. 29, etc. corresponds to the program or boot program of the twenty second invention.

Also, an agent program AGENT_P1, etc. shown in FIG. 29, etc. corresponds to the program in the twentieth invention and the application program in the twenty second invention.

Also, client device 12_1c shown in FIG. 3 corresponds to the computer of the twenty and twenty second inventions, and the server device 10c and the client device 12_2c shown in FIG. 3 correspond to the communication party in the twenty and twenty second inventions.

Also, the server device 10c shown in FIG. 3 corresponds to the computer of the twenty first and twenty third inventions, and the client device 12_1c shown in FIG, 1 corresponds to the communication party in the twenty first and twenty third inventions.

Also, the disclosure agent data AGENT_DP1 corresponds to the communication data of the present invention, and has data HASH_D1 and HASH_D2 corresponds to the identification data of the present invention, and update history data HIST corresponds to the update history data of the present invention.

Also, agent data AGENT_D1 and AGENT_D2 corresponds to the attributes data of the present invention.

Also, the certification data AP_CER corresponds to the certification data of the present invention.

Also, the latest agent data AGENT_D1 corresponds to the original data of the present invention.

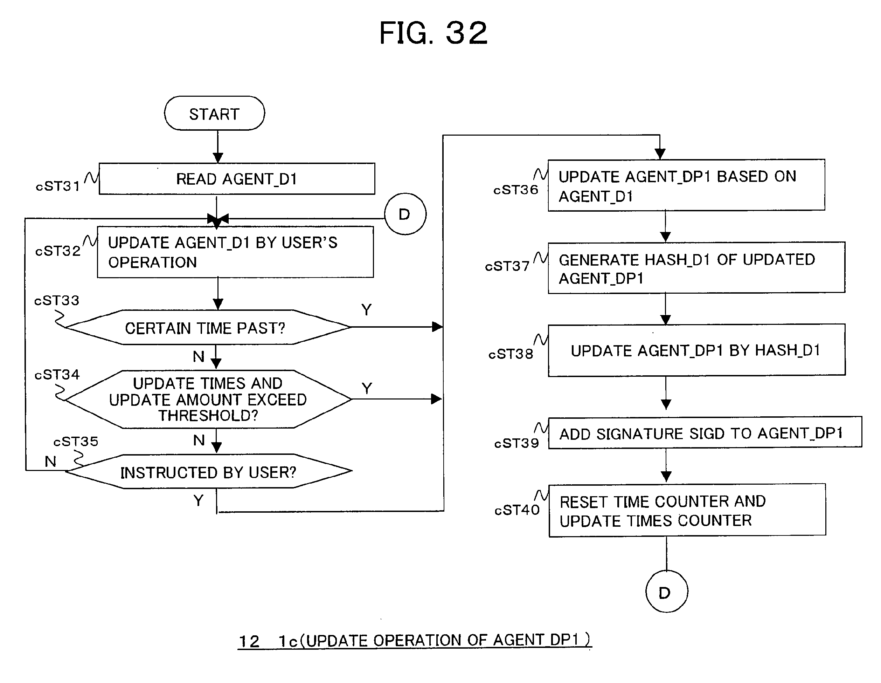

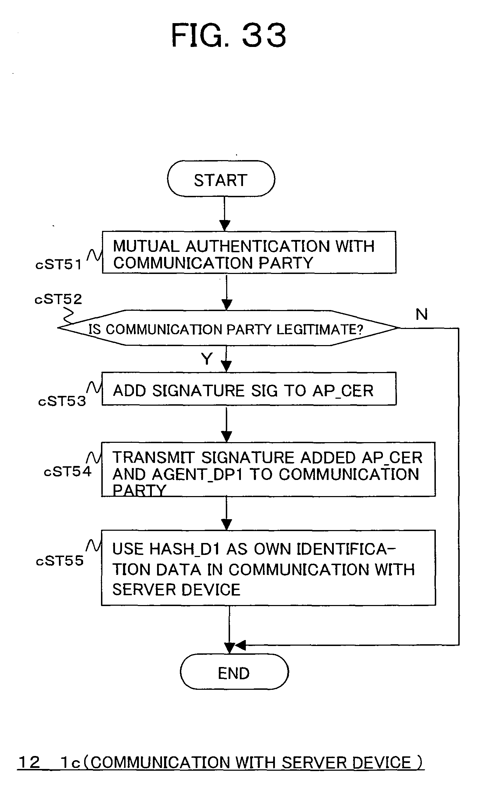

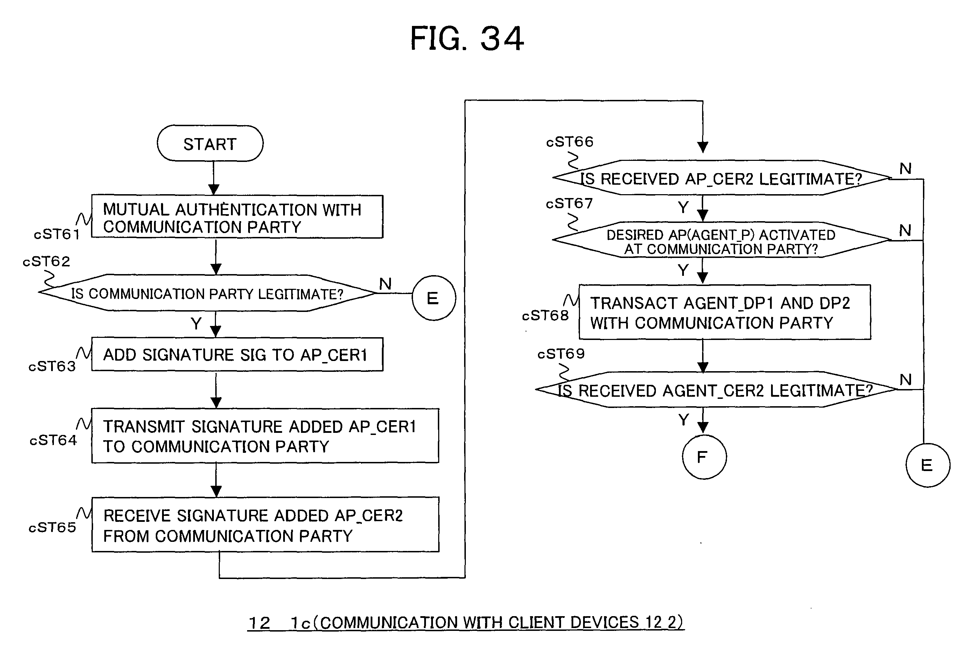

A step cST39 shown in FIG. 32 corresponds to the first procedure of the twentieth invention, and a step cST54 shown in FIG. 33 and a step cST68 shown in FIG. 34 correspond to the second procedure of the twentieth invention.

Also, the respective steps shown in FIG. 8 correspond to the first procedure of the fourteenth invention, a step bST54 shown in FIG. 21 and a step bST64 shown in FIG. 22 correspond to the second procedure of the fourteenth invention, and a step cST55 and a cST71 correspond to the third procedure of the present invention.

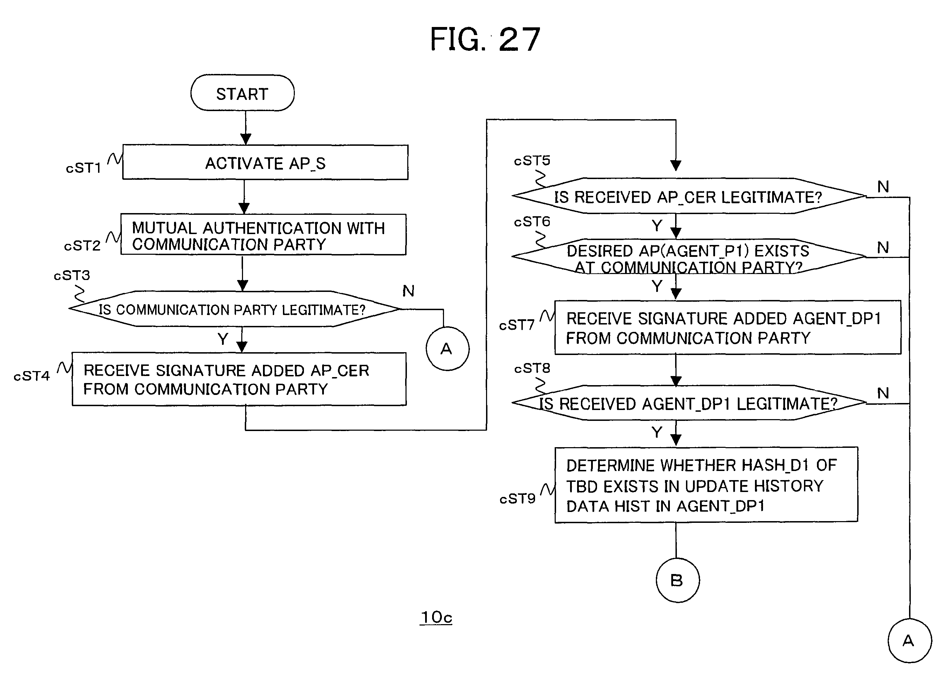

Also, a step cST2, etc. shown in FIG. 27 corresponds to the first procedure of the twentieth invention, a step cST7 corresponds to the second procedure of the twenty first invention, steps cST9 and cST10 correspond to the third procedure of the twenty first invention, and a step cST12 corresponds to the fourth procedure of the twenty first invention. Also, a step cST10 shown in FIG. 28 corresponds to the fourth procedure of the twenty first invention.

First, an outline of the communication system 1c shown in FIG. 3 will be explained.

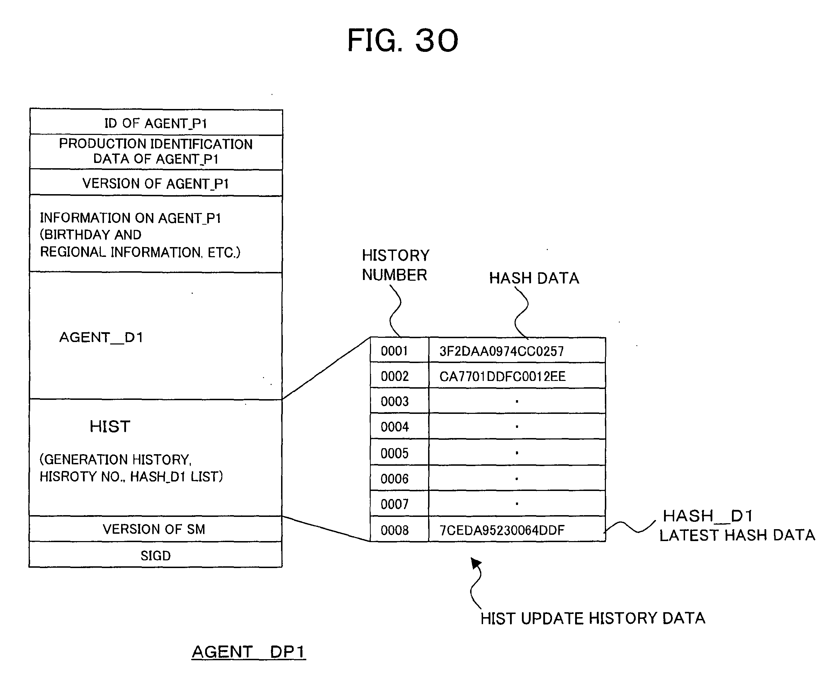

The client device 12_1c generates disclosure agent data AGENT_DP1 shown in FIG. 30 based on operation history data of a user.

The disclosure agent data AGENT_DP1 includes agent data AGENT_D1 indicating favors and other attributes of the user of the client device 12_1c and update history data HIST of hash data HASH_D1 of the agent data AGENT_D1.

In the update history data HIST, the latest hash data HASH_D1 is stored at a predetermined position.

In the present embodiment, the case where the latest hash data HASH_D1 corresponding to the identification of the present invention is included in the update history data HIST will be explained as an example, but the it may be regulated separately from the update history data HIST or not included therein.

Namely, the latest hash data HASH_D1 may be obtained by the server device 10c by calculating a hash value of the latest agent data AGENT_D1.

The client device 12_1c transmits the disclosure agent data AGENT_DP1 explained above to the server device 10c.

After that, the client device 12_1c uses the latest hash data HASH_D1 as its own identification data to perform communication with the server device 10c. At this time, since the agent data AGENT_D1 is updated under a predetermined condition, the latest hash data HASH_D1 is also updated in accordance therewith.

The server device 10c has table data TBD, wherein the latest hash data HASH_D1 in the disclosure agent data AGENT_DP1 received from the client device 12_1c and learnt data STD1 learnt in accordance with attributes and operations of the user of the client device 12_1c are indicated by being made to be associated to each other. Note that the hash data HASH_D1 explained above may be calculated from the latest agent data AGENT_D1 in the disclosure agent data AGENT_DP1.

When the hash data HASH_D1 in the table data TBD exists not as the latest one in the update history data HIST included in the disclosure agent data AGENT_DP1 received from the client device 12_1c, the server device 10c updates the hash data HASH_D1 in the table data TBD by the latest hash data HASH_D1 in the update history data HIST. Also, when the latest hash data HASH_D1 is not included in the update history data HIST, updating is performed by calculation.

Furthermore, when the hash data HASH_D1 in the TBD is not included in the update history and also different from the latest hash data HASH_D1 in the disclosure agent data AGENT_DP1, it is determined that communication was made with a new client device and new hash data HASH_D1 is registered in the TBD.

On the other hand, the server device 10c transmits to the client device 12_2c a variety of service data, such as content data, matching with favors and other characteristics of the user of the client device 12_1c via the interface 21c based on the agent data AGENT_D1 in the disclosure agent data AGENT_DP1 by using the hash data HASH_D1 as the identification data.

In the communication system 1c, in the server device 10c, when the hash data HASH_D1 of the client device 12_1c is updated, the relation with the hash data HASH_D1 before updating is checked based on the update history data HIST and the corresponding relationship with the learnt data STD1 is updated. Therefore, it is possible to use the learnt data STD1 obtained in accordance with operations of the user of the client device 12_1c continuously and to provide data in accordance with attributes of the user.

Note that the learnt data STD1 can be extracted from the disclosure agent data AGENT_DP1, so that it may be extracted from received disclosure agent data AGENT_DP1 each time without storing in the server device 10c.

Also, in the communication system 1c, by adjusting the number of history included in the update history data HIST to be generated in the client device 12_1c, a period that the server device 10c is capable of specifying the above relation can be set. Also, the hash data HASH_D1 is not assigned to the user of the client device 12_1c in a fixed way.

As a result, anonymous of the user of the client device 12_1c can be guaranteed.

Note that by suitably updating disclosure key certification of the client device 12_1c, suppression of the client device 12_1c can be kept.

FIG. 3 is a view of the overall configuration of the communication system 1c according to the embodiment of the present invention.

As shown in FIG. 3, the communication system 1c has, for example, a server device 10c and client devices 12_1c and 12_2c.

The server device 10c and client devices 12_1c and 12_2c perform communication one another via the network 9.

Note that, in the present embodiment, the case of performing communication between one server device 10c and two client devices 12_1c and 12_2c will be explained as an example, but a plurality of servers may be used or a single or three or more client devices may be used in the present invention.

[Server Device 10c]

FIG. 25 is a view of the configuration of the server device 10c shown in FIG. 3.

As shown in FIG. 25, the server device 10b has, for example, an interface 21c, a memory 22c and a CPU 23c connected to one another via data lines 20.

Here, the interface 21c corresponds to the interface in the twenty third invention, the memory 22c corresponds to the memory in the twenty third invention and the CPU 23c corresponds to the execution circuit in the twenty third invention.

The interface 21c transmits/receives data to and from the client devices 12_1c and 12_2c via the network 9.

The memory 22c stores an application program AP_S.

The application program AP_S regulates to register hash data HASH_D1 included in the disclosure agent data AGENT_DP1 received from the client device 12_1c and use the hash data HASH_D1 as identification data of the client device 12_1c in communication with the client device 12_1c thereafter.

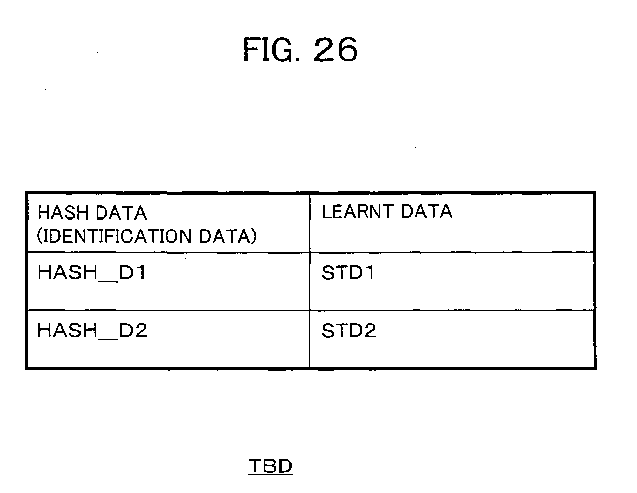

Also, the application program AP_S regulates to update the learnt data STD1 shown in FIG. 26 based on the agent data AGENT_D1 in the disclosure agent data AGENT_DP1.

Also, the application program AP_S regulates to provide to the client devices 12_1c and 12_2c with a variety of services matching with favors and other characteristics of the users based on the learnt data STD1 corresponding to the hash data HASH_D1 of the client device 12_1c.

Also, when hash data HASH_D1 in the table data TBD exists as a not latest one in the update history data HIST included in the disclosure agent data AGENT_DP1 received from the client device 12_1b, the application program AP_S regulate to update the hash data HASH_D1 in the table data TBD by the latest hash data HASH_D1 in the update history data HIST.

The memory 22c stores secret key data SK_S, disclosure key data PK_S, disclosure key certification data PKC_S and identification data ID_S of the server device 10c.

Also, the memory 22c stores disclosure agent data AGENT_DP1 received from the client device 12_1c.

Also, the memory 22c stores disclosure key data PK_C1 and disclosure key certification data PKC_C1 of the client device 12_1c from communication with the client device 12_1c, etc.

Also, the memory 22c stores disclosure agent data AGENT_DP2 received from the client device 12_2c.

Also, the memory 22c stores disclosure key data PK_C2 and disclosure key certification data PKC_C2 of the client device 12_2c from communication with the client device 12_2c, etc.

Also, the memory stores disclosure key data PK_C2 and disclosure key certification data PKC_C2 of the client device 12_2c by communication with the client device 12_2c, etc.

Also, the memory 22c stores learnt data STD1 and STD2 of the client devices 12_1 and 12_2c.

Also, the memory 22c stores the table data TBD shown in FIG, 26.

Note that the learnt data STD1 and STD2 stored in the memory 22c becomes equal to a value of the agent data AGENT_D1 in the disclosure agent data AGENT_DP1 or necessary information extracted from the agent data AGENT_D1, so that it is not necessary to receive from the communication party to store prior to the communication.

The CPU 23c executes the application program AP_S and collectively controls operations of the server device 10c.

Processing performed by the CPU 23c will be explained in relation to an operation example of the server device 10c.

Below, an operation example when the server device 10c shown in FIG. 25 performs communication with the client device 12_1c will be explained.

FIG. 27 and FIG. 28 are flowcharts for explaining an operation example when the server device 10c shown in FIG. 25 performs communication with the client device 12_1c.

Each step explained below is regulated by the application program AP_S.

Step cST1:

The CPU 23c of the server device 10c reads an application program AP_S specified by the user from the memory 22c and executes the same.

The application program AP_S is, for example, a search engine or a program for providing content data, such as video and audio, to the client device and transmitting/receiving data only to and from a program having identification data AP_ID corresponding thereto. The data is, for example, a content data relating to copyright.

Step cST2:

The CPU 23c performs mutual authorization with the client device 12_1c via the interface 2c, for example, based on the secret key data SK_S, disclosure key data PK_C1 and disclosure key certification data PKC_C1 read from the memory 22c.

As the mutual authentication, the ISO/IEC 9798-3 method, etc. may be used.

When legitimacy is confirmed to each other by the mutual authentication, the CPU 23c shares with the client device 12_1c session key data to be used for communicating with the client device 12_1c thereafter and encrypts data based on the session key data in the communication thereafter.

In the present embodiment, for example, the CPU 23c does not have to verify hash data of the boot program B_PRG of the client device 12_1c, which will be explained later on.

Step cST3:

The CPU 23c proceeds to a step cST4 when legitimacy is confirmed to each other by the mutual authentication performed in the step cST2, while not, finishes the processing or performs error processing.

Step cST4:

The CPU 23c receives certification data AP_CER added with signature data SIG from the client device 12_1c via the interface 21c.

The certification data AP_CER is activated by the client device 12_1c, for example as will be explained later on, and indicates identification data AP_ID, production identification data MF_ID, version VER and hash value HASH of the application program AP_C1 confirmed to be legitimate by making them associated one another as shown in FIG. 6.

In the present embodiment, an agent program AGENT_P1 is used as one of the application programs AP_C1.

Step cST5:

The CPU 23c verifies legitimacy of the certification data AP_CER received in the step cST4.

At this time, for example, the CPU 23c generates hash data of the certification data AP_CER based on a hash function. Then, the CPU 23c checks whether the generated hash data matches with signature data SIG added to the certification data AP_CER shown in FIG. 6 or not and, when matched, determines that the certification data AP_CER1 is not tampered but legitimate.

Here, the hash function is a function for generating fixed length data from a given original sentence and has a characteristic that the original sentence cannot be recovered from the hash value and generation of different data having the same hash value is extremely difficult.

Then, the CPU 23c proceeds to a step cST6 when determined that the certification data AP_CER is legitimate, while not, finishes the processing or performs error processing.

Note that when the client device 12_1c generates signature data SIG by encrypting the hash data by using the secret key SK_C1 of the client device 12_1c, the CPU 23c decrypts the signature data SIG by using the disclosure key PK_C1 of the client device 12_1c and compares the decrypted data with the hash data.

Also, to prevent illegitimate reuse of data transacted in the past, normally, random number data is added to the data (the certification data AP_CER shown in FIG. 6 in this example), hash data is calculated for the entire data including the random number, and the result is used as the signature data SIG. Also, when encrypting by using the secret key SK_C1, hash data of data including the random number data is encrypted.

Step cST6:

The CPU 23c determines whether the identification data AP_ID of a specified application program AP_C1 (an agent program AGENT_P1 in the present embodiment) is included in the certification data AP_CER received in the step cST4 or not and, when determined that the identification data AP_ID is included (the application program AP_ID is confirmed to be legitimate and activated on the client device 12_1c), proceeds to a step cST7, while not, finishes the processing.

Here, the agent program AGENT_P1 is a program for generating disclosure agent data AGENT_DP1 of the user of the client device 12_1c, for example, as explained above.

Note that the CPU 23c may verify whether the production identification data MF_ID and version data VER besides the identification data AP_ID are desired ones in the above verification of the step.

Note that, to furthermore improve the security, not only by verifying that the identification data AP_ID is included in the certification data AP_CER, but by introducing a unique protocol to an operation program AP_C1 for discriminating it from other (correctly activated) programs or by encrypting ID_C1 unique to the client device by using a secret key unique to the operation program AP_C1 and suitably receiving the data, a program of the communication party may be recognized to be a desired one.

Step cST7:

The interface 21c receives disclosure agent data AGENT_DP1 from the client device 12_1c.

Step cST8:

The CPU 23c verifies legitimacy of signature data SIGD added to the disclosure agent data AGENT_DP1 shown in FIG. 6 received in the step cST7 and, when determined to be legitimate, proceeds to a step cST9, while not, finishes the processing or performs error processing.

Steps cST9:

The CPU 23c determines whether hash data HASH_D1 of the table data TBD shown in FIG. 26 exists in the update history data HIST in the disclosure agent data AGENT_DP1 received in the step cST7 or not.

Step cST10:

The CPU 23c proceeds to a step cST11 when it is determined to exist in the step cST9, while not, proceeds to a step cST13.

Step cST11:

The CPU 23c determines whether the hash data HASH_D1 in the table data TBD shown in FIG. 26 exists as the latest one or not in the update history data HIST in the disclosure agent data AGENT_DP1 received in the step cST7.

When it is determined to exist as the latest one, the CPU 23c proceeds to a step cST14, while not, proceeds to a step cST12.

Step cST12:

The CPU 23c updates the hash data HASH_D1 in the table data TBD shown in FIG. 26 by the latest hash data HASH_D1 in the update history data HIST included in the disclosure agent data AGENT_DP1 received in the step cST7.

Step cST13:

The CPU 23c adds items of the latest hash data HASH_D1 in the update history data included in the disclosure agent data AGENT_DP1 received in the step cST7 to the table data TBD shown in FIG. 26.

Step cST14:

The CPU 23c performs communication with the client device 12_1c by using the latest hash data HASH_D1 as identification data of the client device 12_1c.

At this time, the CPU 23c analyzes the agent data AGENT_D1 in the disclosure agent data AGENT_DP1, updates the learnt data STD1 in accordance with need, and transmits to the client device 12_1c a variety of service data, such as content data, matching with favors and other characteristics of the user of the client device 12_1c based on the learnt data STD1.

For example, when the application program AP_S is a search engine, the CPU 23c uses a predetermined searching keyword input by the user of the client device 12_1c and furthermore uses keywords relating to the keyword determined based on favors of the user to search data and display the searching results.

For example, when the user inputs "package tour" as a searching keyword and the disclosure agent data AGENT_DP1 indicates that the user is in favor of "cars", the CPU 23b selects plans of using a car to get to the destination and data relating to lent-$\alpha$-car plans in favor of other package tour data and transmits to the client device 12_1c.

As explained above, when hash data HASH_D1 of the client device 12_1c is updated, the server device 10c checks relation with the hash data HASH_D1 before updating based on the update history data HIST and updates the corresponding relationship with the learnt data STD1. Therefore, it is possible to use the learnt data STD1 obtained in accordance with operations of the user of the client device 12_1c continuously, and data in accordance with attributes of the user can be provided.

Also, in the communication system 1c, by adjusting the number of histories included in the update history data to be generated in the client device 12_1c, a period that the server device 10c is capable of specifying the above relation can be set. Also, the hash data HASH_D1 is no assigned to the user of the client device 12_1c in a fixed way.

As a result, anonymous of the user of the client device 12_1c can be guaranteed.

Note that the client device 12_1c is capable of adjusting the period, that the server device 10c is capable of specifying the above relation, by updating own disclosure key PK_C1 for a predetermined period or by an own request.

Also, the server device 10c is capable of realizing the agent function based on the disclosure agent data AGENT_DP1 received from the client device 12_1c without accumulating operation history data of the user of the client device 12_1c.

The server device 10c is capable of attaining the same effect with the client device 12_2c as that with the client device 12_1c.

[Client Device 12_1c]

FIG. 29 is a view of the configuration of a client device 12_1c shown in FIG. 3.

As shown in FIG. 29, the client device 12_1c has, for example, an interface 31c, a memory 32c, a CPU 33c, an operation unit 37c and a security module circuit SMc, connected one another via data lines 30.

Here, the interface 31c corresponds to the interface in the twenty second invention, the memory 32c corresponds to the memory in the twenty second invention, the security module circuit SMc corresponds to the circuit module in the twenty second invention, and the CPU 33c corresponds to the execution circuit in the twenty second invention.

In the present embodiment, the client device 12_1c is, for example, a computer, a PDA (personal digital assistance) and a mobile phone, etc.

The interface 31c performs communication with the server device 10c and the client device 12_2c via the network 9.

The memory 32c stores an application program AP_C1.

The memory 32c stores an agent program AGENT_P1 as one of the application programs AP_C1.

The memory 32c is a semiconductor memory or a hard disk drive.

The security module circuit SMc has, for example, a memory 35 and a computing circuit 36.

The security module circuit SMc is a tamper-resistant circuit and provided with a function of preventing tampering and peeping of stored data in the memory 35 and peeping of processing in the computing circuit 36.

The tamper-resistant circuit is a circuit configured to prevent erroneous operations and leaks of internal data when it is attacked from the outside (attacks by illegitimately reading internal data and by setting an input frequency or input voltage to be out of a predetermined range, etc.). Specifically, to prevent reading of internal data, the circuit is made to have a multilayer structure to provide the memory to the lowermost layer and form a dummy layer (for example, an aluminum layer) as the upper layer and the lower layer, so that a direct access from the outside to the memory input/output I/F is made difficult. Also, it is configured to be provided with a tamper-resistant circuit frequency detection circuit and a voltage detection circuit so as not to operate when the frequency or voltage is not in a predetermined range.

The memory 35 stores secret key data SK_C1, disclosure key data PK_C1, disclosure key certification data PKC_C1 and identification data ID_C1 of the client device 12_1c.

Also, the memory 35 stores disclosure key data PK_S and disclosure key certification data PKC_S of the server device 10c from communication with the server device 10c, etc.

Also, the memory 35 stores disclosure key data PK_C2 and disclosure key certification data PKC_C2 of the client device 12_2c from communication with the client device 12_2c, etc.

Also, the memory 35 stores the disclosure agent data AGENT_DP2 received from the client device 12_2c.

Also, the memory 32c stores learnt data STD2 of the client device 12_2c.

Also, the memory 32c stores table data TBD2 indicating the latest hash data HASH_D2 and learnt data STD2 of the client device 12_2c by making them associated to each other.

The operation unit 37c is an operation means, such as a keyboard, a mouse and a touch panel, and outputs an operation signal in accordance with an operation by the user to the CPU 33c.

The CPU 33c performs a variety of processing based on the boot program B_PRG, application program AP_C1 and an operation signal from the operation unit 37c.

The CPU 33c reads a boot program B_PRG from the memory 35 in the security module circuit SMc via the data line 30 in a secured state and executes the same.

The CPU 33c generates the certification data AP_CER shown in FIG. 6 and transmits the same to the server device 10c and the client device 12_2c by following the boot program B_PRG.

Note that to realize the reading in a secured state, methods are used, such that a common encrypting key data is shared by the CPU 33c and the security module circuit SMc to encryptedata on the data line 30, mutual authentication is performed between the CPU 33c and the security module circuit SMc, data on the data line 30 is encrypted by using shared session key data, and the CPU 33c and the security module circuit SMc are molded to be one package, to prevent an access from the outside to data on the data line 30, etc.

Also, to prevent the security module circuit SMc from being installed into other client device, memory data (ID, random number, key and other data) peculiar to the client device 12_1c may be decentralized to be stored therein and verification of the memory data may be performed by the security module circuit SMc at the time of activation. Alternately, an input/output operation of the interface 31c may be made complicated, etc. to make the boot mechanism of the CPU 33c complicated, and the mechanism is known only to an approved manufacturer to furthermore improve reliability of activation of the boot program B_PRG.

The CPU 33c reads an application program AP_C1 from the memory 32c and executes the same.

In the present embodiment, the CPU 33c reads an agent program AGENT_P1 from the memory 32c and executes the same.

The CPU 33c generates disclosure agent data AGENT_DP1 shown in FIG. 30 and transmits the same to the server device 10c and the client device 12_2c by following the agent program AGENT_P1.

As shown in FIG. 30, the disclosure agent data AGENT_DP1 includes, for example, identification data ID (agent software ID), production identification data (agent software manufacture ID), version data of the agent program AGENT_P1 and other information on the agent program AGENT_P1, agent data AGENT_D1, update history data HIST regarding hash data HASH_D1 of the agent data AGENT_D1, a version of the security module circuit SMc and signature data SIGD of the agent program AGENT_P1.

In the update history data HIST, the latest hash data HASH_D1 is stored at a predetermined position.

In the present embodiment, the case of including in the update history data HIST the latest hash data HASH_D1 corresponding to the identification data of the present invention will be explained, but it may be regulated separately from the update history data HIST and may be calculated in each communication.

The CPU 33c generates hash data HASH_D1 of the agent data AGENT_D1 by following the application program AP_c1 and generates disclosure agent data AGENT_DP1 including the same.

Also, the CPU 33c performs communication with the server device 10c and the client device 12_2c by using the hash data HASH_D1 as own identification data.

Here, the agent data AGENT_D1 is successively updated data based on attributes data, such as the user's favors, obtained by analyzing operation history of the user of the client device 12_1c, which will be explained later on.

Since the agent data AGENT_D1 is updated under a predetermined condition, the hash data HASH_D1 is also updated under a predetermined condition, so that it is possible to prevent operations of the user of the client device 12_1c from being monitored for a long period of time.

Also, the possibilities are quite low that completely identical hash data HASH_D1 is generated as agent data AGENT_D1, so that it is extremely highly possible that it becomes a unique value of the client device 12_1c. Therefore, in communication between the server device 10c and the client device 12_2c, the hash data HASH_D1 is sufficiently capable of serving as identification data of the client device 12_1c.

Note that the CPU 33c may determine whether or not to include the identification data for specifying a device of the client device 12_1c, such as the security module circuit SMc, in the disclosure agent data AGENT_DP1 in accordance with an instruction from the user.

The CPU 33c collectively controls operations of the client device 12_1c.

Processing performed by the CPU 33c will be explained in relation to an operation example of the client device 12_1c.

Below, an operation that the client device 12_1c shown in FIG. 29 generates certification data AP_CER by following the boot program B_PRG will be explained.

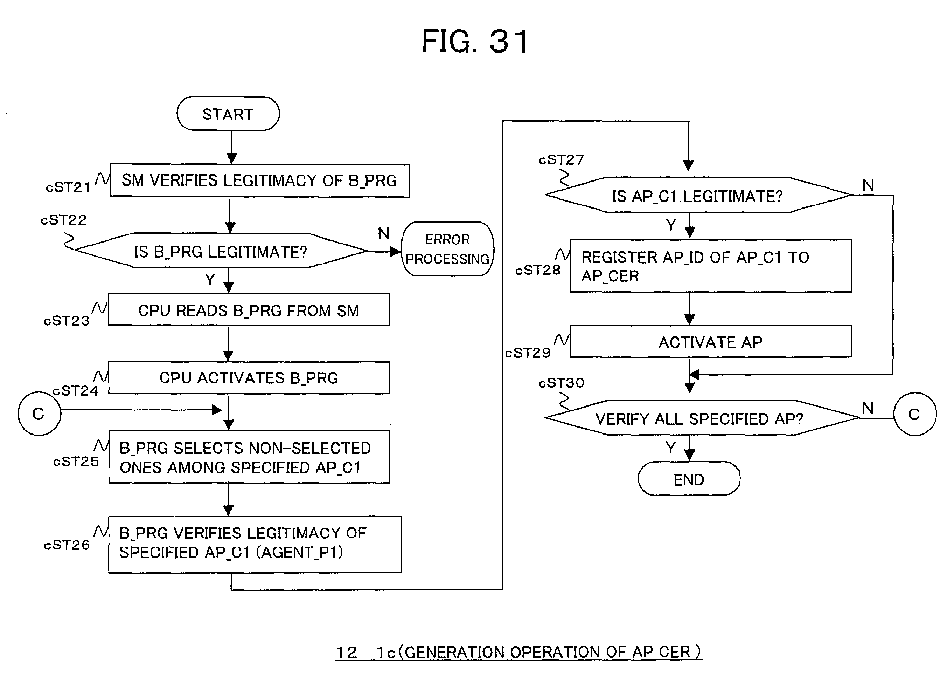

FIG. 31 is a flowchart for explaining an operation for generating the certification data AP_CER by the client device 12_1c shown in FIG. 29.

Respective steps explained below are regulated by the boot program B_PRG.

Step cST21:

When the client device 12_1c is activated, the computing circuit 36 of the security module circuit SMc reads the boot program B_PRG from the memory 35 and verifies legitimacy of the boot program B_PRG.

At this time, the computing circuit 36, for example, generates hash data of the boot program B_PRG based on a hash function, compares the generated hash data with hash data of the boot program B_PRG prepared in advance and, when matched, determines that the boot program B_PRG stored in the memory 35 is legitimate (not tampered).

Step cST22:

When the boot program B_PRG is determined to be legitimate in the step cST21, the client device 12_1c proceeds to a step cST23 and, while not, performs error processing. .

Step cST23:

The CPU 33c of the client device 12_1c reads the boot program B_PRG from the memory 35 via the data line 30 in a secured state.

Step cST24:

The CPU 33c executes the boot program B_PRG read in the step cST23.

Step cST25:

The CPU 33c selects a not selected application program AP_C1 from a plurality of application programs AP_C1 specified by the user based on the boot program B_PRG. In the present embodiment, an agent program AGENT_P1 is specified as the application program AP_C1.

Step cST26:

The CPU 33c reads the application program AP_C1 selected in the step ST15 from the memory 32c and verifies the legitimacy.

At this time, the CPU 33c, for example, generates hash data of the application program AP_C1 based on a hash function, compares the generated hash data with hash data of the application program AP_C1 prepared in advance and, when matched, determines that the application program AP_C1 stored in the memory 32c is legitimate.

Alternately, the CPU 33b may verify predetermined signature data corresponding to the application program AP_C1 based on disclosure key data. The signature data may be added to the application program AP_C1 or stored in the memory 32c separately from the application program AP_C1.

Step cST27:

When it is determined that the application program AP_C1 is legitimate in the step cST26, the CPU 33c proceeds to a step cST28 and, if not, proceeds to a step cST20.

Step cST28:

The CPU 33c adds identification data AP_ID, production identification data MF_ID, version data VER and hash data HASH (hereinafter, also simply referred to as identification data AP_ID) of the application program AP_C1 determined to be legitimate in the step cST26 to certification data AP_CER.

Step cST29:

The CPU 33c activates the application program AP_C1 determined to be legitimate in the step cST26.
In the present embodiment, the case of activating the application program AP_C1 on condition that the application program AP_C1 is determined to be legitimate in the step cST26 will be explained as an example. But when the application program AP_C1 is not determined to be legitimate, the application program AP_C1 may be activated by notifying the user of the fact and obtaining approval by the user. Note that, in this case, the CPU 33c does not add identification data AP_ID of the application program AP_C1 to the certification data AP_CER.

Step cST30:

The CPU 33c determines whether all application programs AP_C1 specified by the user are selected in the step cST25 or not and, when determined to be selected, finishes the processing, while not, returns to the step cST25.
In the present embodiment, when the agent program AGENT_P1 is legitimate, the CPU 33c activates the agent program AGENT_P1 and the identification data AP_ID is added to the certification data AP_CER.
Below, an operation example when the client device 12_1c shown in FIG. 29 updates (generates) disclosure agent data AGENT_DP1 by following the agent program AGENT_P1 will be explained.
FIG. 32 is a flowchart for explaining an operation example when the client device 12_1c shown in FIG. 29 updates (generates) disclosure agent data AGENT_DP1.
Respective steps in FIG. 32 are executed by the CPU 33c by following the agent program AGENT_P1.
Operations below are executed in parallel with operations of other application program AP_C1, such as a search engine.

Step cST31:

The CPU 33c reads the agent data AGENT_D1 from the memory 32c.

Step cST32:

The CPU 33c updates operation history data of the user of the client device 12_1c based on an operation signal from the operation unit 37c.
Then, the CPU 33c analyzes the updated operation history data and generates attributes data indicating the user's favors and other attributes.
The CPU 33c updates the present agent data AGENT_D1 based on the generated attributes data.

Step cST33:

The CPU 33c determines whether a predetermined time has past or not based on a counter value of a time counter (not shown) and, when determined it has, proceeds to a step cST36, while not, proceeds to a step cST34.
In the present embodiment, the predetermined time is, for example, one week, one month or three months, etc.

Step cST34:

The CPU 33c determines whether a value indicated by the counter value of a update time counter (the number of times of updating in the step aST32), a degree (updating amount) of content of updated attributes data and the updating frequency exceed predetermined thresholds or not and, when determined to be exceeded, proceeds to a step cST36, while not, proceeds to a step cST35.

Step cST35:

The CPU 33c determines whether a updating instruction of the disclosure agent data AGENT_DP1 is received from the user or not based on an operation signal from the operation unit 37c and, when determined that the updating instruction is received, proceeds to a step cST36, while not, returns back to the step cST32.

Step cST36:

The CPU 33c reads the disclosure agent data AGENT_DP1 shown in FIG. 30 from the memory 32c and updates the agent data AGENT_D1 by the agent data AGENT_D1 updated in the step cST32.

Step cST37:

The CPU 33c generates hash data HASH_D1 of the updated agent data AGENT_D1.

Step cST38:

The CPU 33c updates update history data HIST as the latest hash data HASH_D1 generated in the step cST37. Namely, the disclosure agent data AGENT_DP1 is updated.

Step cST39:

The CPU 33c generates signature data SIGD of the disclosure agent data AGENT_DP1 updated in the step cST38 and adds the same to the disclosure agent data AGENT_DP1 shown in FIG. 30.

Step cST40:

The CPU 33c resets counter values of the time counter and the update time counter.
Below, an operation example when the client device 12_1c shown in FIG. 29 performs communication with the server device 10c will be explained.
FIG. 33 is a flowchart for explaining an operation example when the client device 12_1c shown in FIG. 29 performs communication with the server device 10c.
Steps cST51 to cST54 explained below are regulated by the boot program B_PRG. Also, a step cST55 is regulated by the agent program AGENT_P1.

Step cST51:

The CPU 33c of the client device 12_1c performs mutual authentication with the server device 10c via the interface 31c based on the secret key data SK_C1, disclosure key data PK_S and disclosure key certification data PKC_S read from the memory 35 of the security module circuit SMc.
When legitimacy is confirmed to each other by the mutual authentication, the CPU 33c shares with the server device 10c session key data to be used for communication with the server device 10c thereafter and encrypts data based on the session key data in communication thereafter.
Note that, in the mutual authentication, the CPU 33c may authenticate legitimacy of the server device 10c based on an AC (attribute certificate) or a URL (uniform resource locator) of the server device 10c. Here, the AC is electronic data for certifying functions and attributes of the assignee by linking to identification data ID of the disclosure key certification data by a predetermined authentication agent (AC issuing agent). In the present example, it indicates that it is a server for distributing predetermined content data.

Step cST52:

When legitimacy is confirmed to each other by the mutual authentication performed in the step cST51, the CPU 33c proceeds to the step cST53, while not, finishes the processing.

Step cST53:

The CPU 33c generates hash data of the certification data AP_CER generated through the processing explained based on FIG. 31 and adds the same as signature data SIG to the certification data AP_CER.

Step cST54:

The CPU 33c transmits the signature added certification data AP_CER generated in the step cST53 and disclosure agent data AGENT_DP1 to the server device 10c via the interface 31c.

Step cST55:

The CPU 33c uses the latest hash data HASH_D1 in the disclosure agent data AGENT_DP1 transmitted in the step cST53 as its own identification data to perform communication with the server device 10c.

The CPU 33c utilizes the data, such as content data, received from the server device 10c via the interface 31c by following a predetermined application program AP_C1 or agent program AGENT_P1.

At this time, as explained above, data transmission from the server device 10c to the client device 12_1c is performed based on the disclosure agent data AGENT_DP1 transmitted from the client device 12_1c to the server device 10c, so that favors and other attributes of the user of the client device 12_1c are reflected.

Note that since the application program AP_C1 is provided with a copyright protection function, copyright of the content data is protected by the function.

Also, in the above embodiment, the case where the CPU 33c performs authentication processing and generation processing of signature data SIG based on the boot program B_PRG read from the security module circuit SMc was explained as an example, but the processing may be performed by the computing circuit 36 of the security module circuit SMc.

In this case, the client server 12_1c provides necessary data for authentication among data received from the server device 10c to the security module circuit SMc. Then, the computing circuit 36 of the security module circuit SMc performs computing processing based on the data and transmits the result to the server device 10c via the interface 31c. Also, the computing circuit 36 of the security module circuit SMc generates the signature data SIG of the certification data AP_CER and transmits the certification data AP_CER added with the signature data SIG to the server device 10c via the interface 31c.

Below, an operation example when the client device 12_1c shown in FIG. 29 performs communication with the client device 12_2c shown in FIG. 3 will be explained.

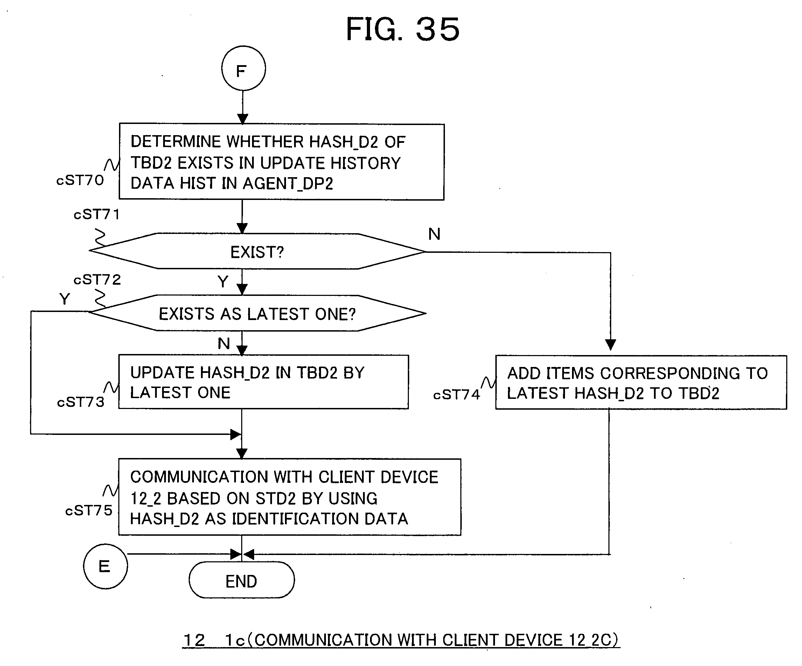

FIG. 34 and FIG. 35 are flowcharts for explaining an operation example when the client device 12_1c shown in FIG. 29 performs communication with the client device 12_2c shown in FIG. 3.

The steps cST61 to cST67 shown in FIG. 34 and FIG. 35 are performed by following the boot program B_PRG, and steps cST68 to cST75 are performed by following the agent program AGENT_P1.

Step cST61:

The CPU 33c of the client device 12_1c performs mutual authentication with the client device 12_2c via the interface 31c based on the secret key data SK_C1, disclosure key data PK_C2 and disclosure key certification data PKC_C2 read from the memory 35 of the security module circuit SMc.

When the legitimacy is confirmed each other by the mutual authentication, the CPU 33c shares with the client device 12_2c session key data to be used for communication with the client device 12_2c thereafter and encrypts data based on the session key data in communication thereafter.

Note that, in the present embodiment, the memory 35 stores the disclosure key data PK_2 and the disclosure key certification data PKC_2, but they may be received from the client device 12_2c prior to the authentication.

Step cST62:

When legitimacy is confirmed to each other by the mutual authentication performed in the step cST61, the CPU 33c proceeds to the step cST63, while not, finishes the processing or performs error processing.

Step cST63:

The CPU 33c generates hash data of the certification data AP_CER1 generated through the processing explained based on FIG. 31 and adds the same as signature data SIG to the certification data AP_CER1.

Step cST64:

The CPU 33c transmits the signature added certification data AP_CER1 generated in the step cST63 to the client device 12_2c via the interface 31c.

Step cST65:

The CPU 33c receives from the client device 12_2c the certification data AP_CER2 added with signature data SIG generated by the client device 12_2c through the same processing as that explained by using FIG. 31 via the interface 31c.

As explained above, the certification data AP_CER2 is activated by the client device 12_2c, wherein the identification data AP_ID, production identification data MF_ID, version VER and hash value HASH of the application program AP_C2 confirmed to be legitimate are indicated by being made associated to one another as shown in FIG. 6.

Step cST66:

The CPU 33c verifies legitimacy of the certification data AP_CER2 received in the step cST64.

At this time, the CPU 33c, for example, generates hash data of the certification data AP_CER2 based on a hash function. Then, the CPU 33c determines whether the generated hash data matches with the signature data SIG and, when matched, determines that the certification data AP_CER2 is not tampered but legitimate.

Then, when it is determined that the certification data AP_CER2 is legitimate, the CPU 33c proceeds to a step cST67, while not, finishes the processing or performs error processing.

Step cST67:

The CPU 33c determines whether the identification data AP_ID of the application program AP_C1 specified by the user is included in the certification data AP_CER2 received in the step cST65 or not and, when determined that the identification data AP_ID is included (the application program AP_C2 is confirmed to be legitimate and activated in the client device 12_2c), proceeds to a step cST68, while not, finishes the processing or performs error processing.

Note that the CPU 33cb may determine whether the production identification data MF_ID and version data VER are desired ones or not besides the identification data AP_ID in the step.

Step cST68:

The CPU 33c transmits the disclosure agent data AGENT_DP1 generated by the procedure shown in FIG. 32 to the client device 12_2c via the interface 31c by following the already activated agent program AGENT_P1.

The interface 31c receives from the client device 12_2c the disclosure agent data AGENT_DP2 generated by the client device 12_1c.

Step cST69:

The CPU 33c verifies legitimacy of the signature data SIGD added to the disclosure agent data AGENT_DP2 received in the step cST68.

When it is determined that the signature data SIGD is legitimate, the CPU 33c proceeds to a step cST70, while not, finishes the processing or performs error processing.

Step cST70:

The CPU33c determines whether or not hash data HASH_D2 of the table data TBD exists in the update history data HIST in the disclosure agent data AGENT_DP2 received in the step cST68.

Step cST71:

The CPU 33c proceeds to a step cST72 when it is determined to exist in the step cST70, while not, proceeds to a step cST74.

Step cST72:

The CPU 33c determines whether the hash data HASH_D2 in the table data TBD2 exists as the latest one in the update history data HIST in the disclosure agent data AGENT_DP2 received in the step cST68 or not.

Then, when it is determined to exist as the latest one, the CPU 33c proceeds to a step cST75, while not proceeds to a step cST73.

Step cST73:

The CPU 33c updates the hash data HASH_D2 in the table data TBD2 by the latest hash data HASH_D2 in the update history data included in the disclosure agent data AGENT_DP2 received in the step cST68.

Step cST74:

The CPU 33c adds to the table data TBD2 items of the latest hash data HASH_D2 in the update history data HIST included in the disclosure agent data AGENT_DP2 received in the step cST68.

Step cST75:

The CPU 33c uses the latest hash data HASH_D2 as identification data of the client device 12_2c to perform communication with the client device 12_2c.

At this time, the CPU 33c analyzes the agent data AGENT_D2 in the disclosure agent data AGENT_DP2, updates the learnt data STD2 in accordance with need, and transmits to the client device 12_2c a variety of service data, such as content data, matching with favors and other characteristics of the user of the client device 12_2c via the interface 21c based on the learnt data STD2.

Other than the above, the CPU 33c may determine which of mails, chatting, voice mails and calls is frequently used by the user of the client device 12_2c, for example, based on the disclosure agent data AGENT_DP2 and use the frequently used medium in communication with the user.

Also, the CPU 33c utilizes data, such as content data, received from the client device 12_2c via the interface 31c.

Note that the client device 12_2c has the same configuration as that of the client device 12_1c explained above.

Below, an overall operation example of the communication system 1c shown in FIG. 3 will be explained.

Each of the client devices 12_1c and 12_2c performs the processing shown in FIG. 31 explained above to write the certification data AP_CER and AP_CER2 to the memory 35 in the security module circuit SMc shown in FIG. 29 of each of the client devices 12_1c and 12_2c, respectively.

Also, each of the client devices 12_1c and 12_2c generates disclosure agent data AGENT_DP1 and AGENT_DP2 indicating favors and other attributes of the users by performing the processing shown in FIG. 32 and writes the same to the memory 32c.

Then, the client devices 12_1c and 12_2c transmit the disclosure agent data AGENT_DP1 and AGENT_DP2 to the server device 10c.

The server device 10c identifies the client device 12_1c based on the hash data HASH_D1 in the disclosure agent data AGENT_DP1 and transmits to the client device 12_1c a variety of service data, such as content data, matching with favors and other attributes of the user of the client device 12_1c based on the learnt data STD1 via the interface 21c.

Also, when the latest hash data HASH_D1 is updated, the server device 10c updates the table data TBD shown in FIG. 26 based on the update history data HIST, so that the latest hash data HASH_D1 is made associated with the learnt data STD1.

The server device 10c performs the same processing on the client device 12_2c as that on the client device 12_1c explained above.

Also, when performing communication with the client device 12_2c, the client device 12_1c gives the same function to the client device 12_2c as that given to the server device 10c explained above.

As explained above, according to the communication system 1c, when hash data HASH_D1 of the client device 12_1c is updated, the server device 10c checks relation with hash data HASH_D1 before updating and updates the corresponding relationship with the learnt data STD1. Therefore, it is possible to use the learnt data STD1 obtained in accordance with operations of the user of the client device 12_1c continuously and to provide data in accordance with attributes of the user.

Also, in the communication system 1c, by adjusting the number of histories included in the update history data to be generated in the client device 12_1c, a period that the server device 10c is capable of specifying the above relation can be set. Also, the hash data HASH_D1 is not assigned to the user of the client device 12_1c in a fixed way.

As a result, anonymous of the user of the client device 12_1c can be guaranteed.

Also, the server device 10c does not have to store operation history data of the user of the client device 12_1c and the agent function can be realized with a small load based on the disclosure agent data AGENT_DP1 received from the client device 12_1c.

The server device 10c is capable of attaining the same effect with the client device 12_2c as that with the client device 12_1c.

Also, the client device 12_1c is capable of attaining the same effect when performing communication with the client device 12_2c as that with the server device 10c.

Also, according to the communication system 1c, the respective client devices 12_1c and 12_2c verify legitimacy of application programs AP_C1 and AP_C2 activated by their own and transmit certification data AP_CER indicating the result to the server device 10c.

Therefore, the server device 10c does not have to store all hash data of application programs performed by the client devices 12_1c and 12_2c, and it is not necessary to perform verification processing of the legitimacy. Accordingly, a load on the server device 10c caused by determining legitimacy of the application programs activated in the client devices 12_1c and 12_2c can be reduced.

Also, according to the communication system 1c, in the client devices 12_1c and 12_2c, as shown in FIG. 28, the boot program B_PRG for generating the certification data AP_CER explained above is stored in the security module circuit SMc and read by the CPU 33c via the data line 30 in a secured way, so that reliability of the certification data AP_CER can be improved.

Also, according to the communication system 1c, the server device 10c receives signature added certification data AP_CER1 and AP_CER2 and verifies the signature data SIG after performing mutual authentication with the client devices 12_1c and 12_2c, so that the server device 10c is capable of determining legitimacy of the application program activated in the client devices 12_1c and 12_2c with high reliability.

Also, according to the communication system 1c, even when transmitting/receiving content data between the client devices 12_1c and 12_2c in addition to the case between the server device 10c and the client devices 12_1c and 12_2c, one of the client devices 12_1c and 12_2c is capable of determining legitimacy of an application program activated by the other with a small load.

Also, the mutual authentication explained above is not limited to disclosure key authentication and may be any authentication method as far as it is a method or a system capable of performing mutual authentication.

Also, as another embodiment of the present invention, for example, the server device 10c performs processing below by following the application program AP_S. The example below corresponds to the twenty sixth invention.

The server device 10c stores identification data (ID1, ID2, ID3, ..., IDn) for identifying communication parties communicated before in table data TBD.

Next, the server device 10c receives communication data from the client device 12_1c.

The communication data includes, for example, the agent data AGENT_DP1 explained above and update history data HIST.

A hash value may or may not be included in the update history data HIST.

The server device 10c takes out the latest identification data (it may be the latest identification data written in any one of identification data (hash value) calculated from the original data, the latest identification data in the update history data HIST and the communication data) from the received communication data to specify the client device 12_1c and compares the same with already known identification data (latest identification data) stored in the table data TBD to find out if the two are matched.

Then, when it is determined not matched in the above comparison, the server device 10c compares identification data (hash value) in the past in the update history data HIST with all already known identification data in the table data TBD.

When there are matched ones in the comparison (for example, ID3 matches with identification data in the previous generation of the update history data HIST), the server device updates the identification data in the table data TBD by the latest identification data. For example, ID3 in the table data TBD is replaced by the latest identification data in the communication data.

When neither of the latest identification data nor identification data in the past is recorded in the table data TBD, the server device 10c determines that the client device 12_1c is an unknown party.

For example, the case where the server device 10c stores ID1, ID2, ID3 (previous generation), ..., IDn in the table data TBD and each indicates 1111, 2222, 3333, ..., nnnn will be considered.

In this case, the agent data AGENT_D1 includes a hash value "Hash(AGENT_D1) = ID3 (the latest) and history data HIST (ID3 (previous generation), ID3 (generation before the previous generation)...), wherein ID3 (the latest) is assumed to be 3434 and the history data HIST is assumed to be (3333, 3232, 3131, ...).

In this example, the server device 10c perceives that identification data 3333 in the table data TBD is identification data of the previous generation of the communication party having an ID3 (the latest) of 3434, replaces the identification data to 3434 (update identification data 3333 of the previous generation in the table data TBD by the latest identification data 3434) from this time, and performs communication with the communication party.

The present invention is not limited to the above embodiments.

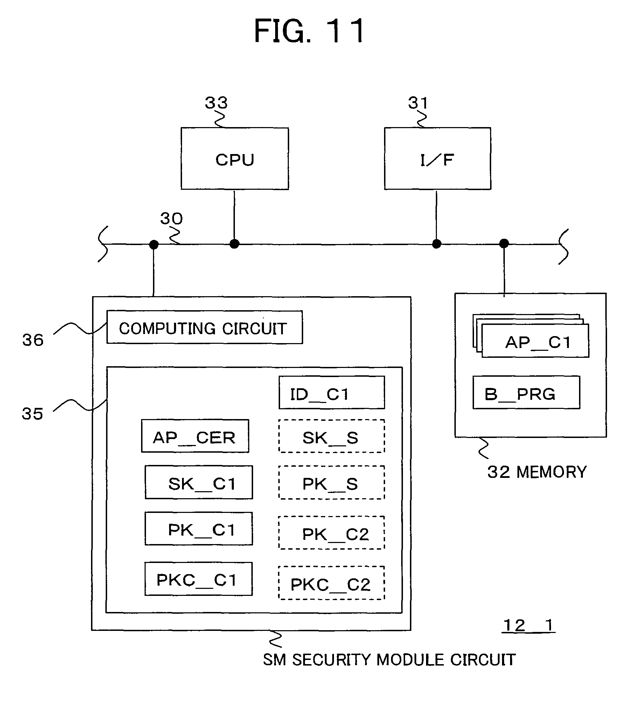

For example, as shown in FIG. 11, in the client device 12_1c, the boot program B_PRG may be stored in the memory 32c not provided with a tamper-resistant property.

In this case, the boot program B_PRG is read by the security module circuit SMc from the memory 32c and legitimacy of the boot program B_PRG is verified in the computing circuit 36, then, output to the CPU 33c via the data line 30.

Note that FIG. 11 is an embodiment of the twenty third invention.

Also, in the cST33 in FIG, 9 or in the step cST43 in FIG. 10, the CPU 33c of the client device 12_1c, the CPU 33c of the client device 12_1c may generate hash data for data composed of data (for example, a random number generated by the client device 12_2c, etc.) received from the server device 10c or client device 12_2c and certification data AP_CER to generate signature data SIG. By doing so, data once used in communication can be prevented from being reused illegitimately.

As a result, it is possible to prevent "spoofing" by illegitimately using signature added certification data AP_CER transacted by the client device 12_1c in the past.

Also, in the above embodiments, the case where the client device 12_1c generates certification data AP_CER by following the boot program B_PRG was explained as an example, but certification data AP_CER may be generated by other program, whose legitimacy is verified by the boot program B_PRG.

Also, in the above embodiments, updating of the boot program B_PRG may be performed after verifying legitimacy of the boot program after updating by the computing circuit 36 of the security module circuit SMc.

Also, the mutual authentication explained above is not limited to disclosure key authentication and may be any authentication method as far as it is a method or a system capable of performing mutual authentication.

Industrial Applicability

The present invention can be applied to a system, wherein legitimacy of an application program activated by a communication party is determined.

**Claims**

1. A program for making a computer manage application programs, wherein said computer executes, said program comprising:

   a first procedure for verifying legitimacy of an application program activated by said computer and generating certification data indicating identification data of said application program determined to be legitimate; and
   a second procedure for transmitting said certification data generated in said first procedure to a communication party for providing data to be used by said application program.

2. A program as set forth in claim 1, furthermore comprising a third procedure wherein said application program determined to be legitimate in said first procedure uses said data received from said communication party.

3. A program as set forth in claim 1, wherein said first procedure verifies whether said application program is tampered or not and, when determined not tampered, generates said certification data indicating said identification data.

4. A program as set forth in claim 1, wherein said first procedure generates said certification data, wherein at least one of a version data and hash data of said application program determined to be legitimate is indicated by being made associated with said identification data.

5. A program as set forth in claim 1, furthermore comprising a fourth procedure for adding signature data to said certification data generated in said first procedure;
   wherein said second procedure transmits to said communication party said certification data added with said signature data in said fourth procedure.

6. A program as set forth in claim 1, wherein said fourth procedure generates said signature data for data including said certification data and data received from said communication party and transmits to said communication party said certification data added with the signature data.

7. A program as set forth in claim 1, stored in a memory provided with a function of preventing tampering and monitoring of stored data, read by said computer from said memory in a secured state and executed by the computer.

8.  A program as set forth in claim 7, wherein
    said first procedure writes said certification data to said memory; and
    said second procedure transmits said certification data read from said memory to said communication party.

9.  A program for making a computer perform data transmission to a communication party, wherein
    a first procedure for verifying legitimacy of said communication party;
    a second procedure for receiving certification data indicating identification data of an application program determined to be legitimate by said communication party and activated by the communication party from said communication party on condition of being authenticated to be legitimate in said first procedure;
    a third procedure for determining whether desired identification data is included in said certification data received in said second procedure or not; and
    a fourth procedure for transmitting data to said communication party on condition that said desired identification data is determined to be included in said third procedure.

10. A computer, comprising:

    a memory storing an application program;
    a circuit module provided with a function of preventing stored data from being tampered and monitored, and for storing a boot program;
    an execution circuit for executing said application program read from said memory and said boot program read from said circuit module in a secured state; and
    an interface;

    wherein said execution circuit executes said boot program read from said circuit module in a secured state, verifies legitimacy of said application program by following the boot program, stores in said circuit module certification data indicating identification data of said application program determined to be legitimate, and transmits said certification data read from said circuit module to said communication party via said interface.

11. A computer, comprising:

    a memory storing an application program and a boot program;
    a circuit module provided with a function of preventing stored data from being tampered and preventing stored data and internal processing from being monitored;
    an execution circuit for executing said application program and said boot program read from said memory; and
    an interface;

    wherein
    said circuit module verifies legitimacy of said boot program read from said memory and, then, outputs the boot program to said execution circuit in a secured state; and
    said execute circuit executes said boot program input from said circuit module, verifies legitimacy of said application program by following the boot program, stores in said circuit module certification data indicating identification data of said application program determined to be legitimate, and transmits said certification data read from said circuit module to said communication party via said interface.

12. A computer, comprising:

    a memory storing a program;
    an execution circuit for executing said program read from said memory; and
    an interface for receiving from a communication party certification data indicating identification data of an application program activated by the communication party and verified to be legitimate by the communication party;

    wherein said execution circuit executes a program read from said memory and, on condition that a communication party is authenticated to be legitimate via said interface by following the program, determines whether desired identification data is included in said certification data received via said interface or not and, on condition that it is determined that said desired identification data is included, transmits data to said communication party via said interface.

**13.** A data processing method performed by a computer for managing application programs, comprising:

a first step for verifying legitimacy of an application program activated by said computer and generating identification data of said application program determined to be legitimate; and
a second step for transmitting to a communication party for providing data to be used by said application program said certification data generated in said first step.

**14.** A data processing method performed by a computer for transmitting data to a communication party, comprising:

a first step for authenticating legitimacy of said communication party;
a second step for receiving from said communication party certification data indicating identification data of an application program determined to be legitimate by said communication party and activated by the communication party on condition that it is authenticated to be legitimate in said first step;
a third step for determining whether desired identification data is included in said certification data received in said second step or not; and
a fourth step for transmitting data to said communication party on condition that it is determined that said desired identification data is included in said third step.

**15.** A program executed by a computer for performing communication with a communication party, comprising:

a first step for generating hash data of communication data used by said communication party in communication with said computer and updated under a predetermined condition;
a second step for adding said hash data generated in said first step to said communication data and transmitting to said communication party; and
a third step for performing communication by using said hash data generated in said first step as identification data of said computer after said second step.

**16.** A program as set forth in claim 15, furthermore comprising a fourth step for updating said communication data under said predetermined condition:
wherein
said first step generates hash data of said communication data after said updating by said fourth step; and
said third step uses said hash data of said communication data after said updating as identification data of said computer to perform communication with said communication party.

**17.** A program as set forth in claim 15, furthermore comprising a fifth step for generating said communication data.

**18.** A program as set forth in claim 17, wherein said fifth step generates said communication data indicating attributes of a user based on an operation history of said computer by the user.

**19.** A program as set forth in claim 18, wherein said first step generates said communication data indicating said attributes to be indexes for determining favors of said user based on said operation history.

**20.** A program executed by a computer for performing communication with a communication party, wherein said computer executes, said program comprising:

a first step for receiving from said communication party communication data updated under a predetermined condition and hash data of the communication data by making them associated; and
a second step for identifying said communication party based on said hash data received in said first step and performing communication with said communication party based on said communication data received in said first step.

**21.** A program as set forth in claim 20, wherein:

said first step receives said communication data indicating attributes of a user obtained based on an operation history of said user at said communication party; and
said second step transmits data matching with the attributes of said user or data in a matched form to said communication party based on said communication data received in said first step.

**22.** A program as set forth in claim 20, comprising:

a third step for authenticating legitimacy of said communication party;
a fourth step for receiving from said communication party certification data indicating identification data of an application program determined to be legitimate by said communication party and activated by the communication party on condition that it is authenticated to be legitimate in said third step;
a fifth step for determining whether desired identification data is included in said certification data received in said fourth step; and
a sixth step for executing said second step on condition that it is determined that said desired identification data is included in said fifth step.

**23.** A computer, comprising:

a memory storing an application program;
an execution circuit for executing said application program read from said memory; and
an interface for transmitting/receiving data to and from a communication party;

wherein said execution circuit generates hash data of communication data used by said communication party in communication with said computer and updated under a predetermined condition by following said application program, adds the generated hash data to said communication data to transmit to said communication party via said interface, and performs communication with said communication party by using said hash data as identification data of said computer.

**24.** A computer as set forth in claim 23, furthermore comprising a circuit module for storing a boot program, provided with a function of preventing memory data from being tampered and monitored;
wherein said execution circuit furthermore executes said boot program read from said circuit module in a secured state, verifies legitimacy of said application program by following the boot program, stores in said circuit module certification data indicating identification data of said application program determined to be legitimate, and transmits said certification data read from said circuit module to said communication party via said interface.

**25.** A computer for performing communication with a communication party, comprising:

a memory for storing a program;
an interface for receiving from said communication party communication data updated under a predetermined condition and hash data of the communication data by making them associated to each other; and
an execution circuit for executing said program read from said memory, identifies said communication party based on said hash data received by said interface by following the program, and performs communication with said communication party based on said communication data received by said interface.

**26.** A computer as set forth in claim 25, wherein:

said interface receives from said communication party certification data indicating identification data of an application program activated in said communication party and authenticated to be legitimate by other content data; and
said execution circuit determines whether desired identification data is included in said certification data received via said interface on condition that the communication party is authenticated to be legitimate by following said program, and performs communication with said communication party via said interface on condition that it is determined that said desired identification data is included.

**27.** A data processing method executed by a computer for performing communication with a communication party, comprising:

a first step for generating hash data of communication data used by said communication party in communication with said computer and updated under a predetermined condition;
a second step for adding said hash data generated in said first step to said communication data and transmitting to said communication party; and
a third step for performing communication with said communication party by using said hash data generated in said first step as identification data of said computer.

**28.** A data processing method executed by a computer for performing communication with a communication party, comprising:

a first step for receiving from said communication party communication data updated under a predetermined condition and hash data of the communication data by making them associated to each other; and
a second step for identifying said communication party based on said hash data received in said first step and performing communication with said communication party based on said communication data received in said first step.

**29.** A program executed by a computer for performing communication with a communication party, wherein said computer executes, said program comprising:

a first step for generating attributes data indicating attributes of a user based on an operation history of said computer by said user; and
a second step for transmitting to said communication party said attributes data generated in said first step.

**30.** A program as set forth in claim 29, wherein said first step generates said attributes data to be indexes for determining favors of said user based on said operation history.

**31.** A program as set forth in claim 29, wherein said first step generates said attributes data furthermore indicating personal data of the user based on data input by the user.

**32.** A program as set forth in claim 29, furthermore comprising a third step for generating hash data of said attributes data generated in said first step and adding the hash data to said attributes data;
wherein said second step transmits to said communication party said attributes data added with said hash data in said third step.

**33.** A program as set forth in claim 29, wherein:

said first step generates said attributes data including disclosure attributes data and non-disclosure attributes data in accordance with an instruction from said user; and
said second step transmits to said communication party only said disclosure attributes data in said attributes data generated in said first step.

**34.** A program as set forth in claim 29, furthermore comprising a fourth step for adding signature data to said attributes data generated in said first step;
wherein said second step transmits to said communication party said attributes data added with said signature data in said fourth step.

**35.** A program for a computer to execute management of application programs for transmitting to a communication party attributes data indicating attributes of a user obtained based on an operation history of the computer by the user, wherein said computer executes, said program comprising:

a first step for verifying legitimacy of said application program activated by said computer and generating certification data indicating identification data of said application program determined to be legitimate; and
a second step for transmitting said certification data generated in said first step to a communication party for providing data to be used by said application program.

**36.** A program as set forth in claim 35, wherein said first step verifies whether said application program is tampered or not and, when determined that it is not tampered, generates said certification data indicating said identification data.

**37.** A program as set forth in claim 35, stored in a memory provided with a function for preventing memory data from being tampered and monitored, read from said memory by said computer in a secured state and executed by the computer.

**38.** A program executed by a computer for performing communication with a communication party, wherein said computer executes, said program comprising:

a first step for receiving from said communication party attributes data indicating attributes of a user obtained based on an operation history of the user of said communication party; and

a second step for transmitting data to said communication party based on said attributes data received in said first step.

**39.** A program as set forth in claim 38, wherein said second step transmits data matching to attributes of a user of said other content data or data in a matched form based on said attributes data.

**40.** A program as set forth in claim 38, wherein said first step receives said attributes data to be indexes for determining favors of said user.

**41.** A program as set forth in claim 38, wherein said computer executes:

a third step for authenticating legitimacy of said communication party:

a fourth step for receiving from said communication party certification data indicating identification data of an application program determined to be legitimate by said communication party and activated by the communication party on condition that it is authenticated to be legitimate in said third step;

a fifth step for determining whether desired identification data is included in said certification data received in said fourth step or not; and

said second step on condition that it is determined that said desired identification data is included in said fifth step.

**42.** A computer, comprising:

a memory storing an application program;

an execution circuit for executing said application program read from said memory; and

an interface for transmitting/receiving data to and from a communication party;

wherein said execution circuit generates attributes data indicating attributes of a user based on an operation history of said computer by said user and transmits said generated attributes data to said communication party via said interface by following said application program.

**43.** A computer as set forth in claim 42, furthermore comprising:

a circuit module for storing a boot program, provided with a function of preventing memory data from being tampered and monitored;

wherein said execution circuit furthermore executes said boot program read from said circuit module in a secured state, verifies legitimacy of said application program, stores in said circuit module certification data indicating identification data of said application program determined to be legitimate, and transmits to said communication party said certification data read from said circuit module via said interface.

**44.** A computer for performing communication with a communication party, comprising:

a memory for storing a program;

an interface for receiving from said communication party attributes data indicating attributes of a user obtained based on an operation history of said user of said communication party; and

an execution circuit for executing said program read from said memory, and transmits data to said communication party via said interface based on said attributes data received by said interface by following the program.

**45.** A computer as set forth in claim 44, wherein:

said interface receives from said communication party certification data indicating identification data of an application program activated by said communication party and authenticated to be legitimate by the communication party;

wherein said execution circuit determines whether desired identification data is included in said certification data received via said interface on condition that a communication party is authenticated to be legitimate and transmits data to said communication party via said interface on condition that it is determined that said desired identification data is included.

46. A data processing method performed by a computer for performing communication with a communication party, comprising:

a first step for generating attributes data indicating attributes of a user based on an operation history of said computer by said user; and

a second step for transmitting to said communication party said attributes data generated in said first step.

47. A data processing method performed by a computer for performing communication with a communication party, comprising:

a first step for receiving from said communication party attributes data indicating attributes of a user obtained based on an operation history of the user of said communication party; and

a second step for transmitting data to said communication party based on said attributes data received in said first step.

48. A program executed by a computer for performing communication with a communication party, wherein said computer executes, said program comprising:

a first step for generating communication data including original data for calculating identification data after updating or identification data after the updating used for making said computer identified in communication with said communication party, and update history data including said identification data before updating and indicating a history of updating said identification data;

a second step for transmitting said communication data generated in said first step to said communication party; and

a third step for performing communication with said communication party by using said updated identification data after said second step.

49. A program as set forth in claim 48, wherein, when said identification data is updated for a plurality of times in the past, said first step generates said communication data including said update history data indicating said identification data before updating for all or a part of the updating for a plurality of times.

50. A program as set forth in claim 48, wherein said first step generates attributes data indicating attributes of said user based on an operation history of said computer by a user, generates hash data of said attributes data, and generates said communication data by using the hash data as said identification data.

51. A program as set forth in claim 50, furthermore comprising a fourth step for updating said attributes data under a predetermined condition, wherein

said first step uses hash data of said attributes data updated in said fourth step as said updated identification data.

52. A program as set forth in claim 50, wherein said first step generates said attribute data indicating said attributes to be indexes for determining favors of said user based on said operation history.

53. A program executed by a computer for performing communication with a communication party, wherein said computer executes, said program comprising:

a first step for identifying said communication party and performing communication with the communication party based on first identification data of said communication party;

a second step for receiving from said communication party communication data including second identification data after updating said first identification data or original data for calculating the second identification data and update history data including said first identification data and indicating a history of updating said second identification data, and identifying said communication party based on said second identification data;

a third step for determining whether said update history data included in said communication data received in said second step indicates said first identification data used in said first step or not; and

a fourth step for making said first identification data used in said first step, and said second identification data

**EP 1 736 892 A1**

included in said communication data received in said second step, or said second identification data calculated from said original data associated to one another when it is determined that said update history data indicates said first identification data in said third step.

**54.** A program as set forth in claim 53, furthermore comprising a fifth step for performing communication with the communication party by identifying said communication party based on said second identification data based on the associating relationship made in said fourth step.

**55.** A program as set forth in claim 54, wherein:

said second step receives said communication data furthermore including attributes data indicating attributes of a user obtained based on an operation history of the user of said communication party; and
said fifth step transmits data to said communication party data matching with said attributes of the user or data in a matched form based on said attributes data included in said communication data received in said second step.

**56.** A program as set forth in claim 55, wherein said second step receives said communication data including said first identification data as hash data of said attributes data.

**57.** A program as set forth in claim 53, comprising:

a sixth step for authenticating legitimacy of said communication party;
a seventh step for receiving from said communication party certification data indicating identification data of an application program determined to be legitimate by said communication party and activated by the communication party on condition that it is authenticated to be legitimate in said sixth step;
an eighth step for determining whether predetermined identification data is included in said certification data received in said seventh step; and
a ninth step for executing said first step on condition that it is determined that said desired identification data is included in said eighth step.

**58.** A computer, comprising:

a memory storing an application program;
an execution circuit for executing said application program read from said memory; and
an interface for transmitting/receiving data to and from a communication party;

wherein said execution circuit includes updated identification data used for making said computer identified in communication with said communication party, or original data for calculating identification data after updating and said identification data before the updating, generates communication data including update history data indicating a history of updating said identification data, transmits the communication data to said communication party via said interface, and performs communication with said communication party by using said updated identification data via said interface.

**59.** A computer as set forth in claim 58, furthermore comprising a circuit module for storing a boot program, provided with a function of preventing memory data from being tampered or monitored;
wherein said execution circuit furthermore executes said boot program read from said circuit module in a secured state, verifies legitimacy of said application program, stores in said circuit module certification data indicating identification data of said application program determined to be legitimate, and transmits to said communication party said certification data read from said circuit module via said interface by following the boot program.

**60.** A computer for performing communication with a communication party, comprising:

a memory for storing a program;
an interface for receiving communication data including updated second identification data of first identification data for identifying said communication party or original data for calculating the second identification data, and update history data including said first identification data and indicating a history of updating of said identification data; and
an execution circuit for executing said program read from said memory and, by following the program, when determined whether said update history data included in said communication data received by said interface indicates said first identification data or not, making said first identification data and said second identification data associated to each other to perform communication with said communication party based on said second identification data.

**61.** A computer as set forth in claim 60, wherein:

said interface receives from said communication party certification data indicating identification data of an application program activated by said communication party and authenticated to be legitimate by the other content data; and
said execution circuit follows said program to determine whether desired identification data is included in said certification data received via said interface on condition that the communication party is authenticated to be legitimate, and perform communication with said communication party via said interface on condition that it is determined that said desired identification data is included.

**62.** A data processing method performed by a computer for performing communication with a communication party, comprising:

a first step for generating communication data including updated identification data used for making said computer identified in communication with said communication party, or original data for calculating identification data after updating and said identification data before the updating, and update history data indicating a history of updating said identification data;
a second step for transmitting to said communication party said communication data generated in said first step; and
a third step for performing communication with said communication party by using said updated identification data after said second step.

**63.** A data processing method performed by a computer for performing communication with a communication party, comprising:

a first step for identifying the communication party and performing communication with the communication party based on first identification data of said communication party;
a second step for receiving communication data including second identification data after updating said first identification data or original data for calculating the second identification data and update history data including said first identification data and indicating a history of updating said second identification data, and identifying said communication party based on said second identification data;
a third step for determining whether said update history data included in said communication data received in said second step indicates said first identification data used in said first step or not; and
a fourth step for making said first identification data used in said first step, and said second identification data included in said communication data received in said second step, or said second identification data calculated from said original data associated to one another when it is determined that said update history data indicates said first identification data in said third step.

**64.** A program executed by a computer for performing communication with a communication party, said program comprising:

a first step for storing identification data table information including first identification data for identifying said communication party;
a second step for receiving from said communication party communication data including second identification data for identifying said communication party or original data for calculating the second identification data, update history data including identification data before updating the second identification data and indicating a history of updating identification data;
a third step, when first identification data included in said identification data table information stored in said first step is determined to be a not latest identification data based on update history data included in said communication data, for updating said first identification data by second identification data in said communication data or second identification data calculated from original data; and
a fourth step for identifying said communication party and performing communication with the communication party based on said second identification data updated in said third step.

# FIG. 1

EP 1 736 892 A1

# FIG. 2

110 SERVER

SERVER

BP(PC1) Hash
BP(PC2) Hash
BP(PDA) Hash
BP(MP) Hash

AP(PC1) Hash
AP(PC2) Hash
AP(PDA) Hash
AP(MP) Hash

PC1

CPU

SM1

REGISTER

BP(PC1) Hash
AP(PC1) Hash

AP(PC1)

PC2

CPU

SM2

REGISTER

BP(PC2) Hash
AP(PC2) Hash

AP(PC2)

PDA

CPU

SM3

REGISTER

BP(PDA) Hash
AP(PDA) Hash

AP(PDA)

MP

CPU

SM4

REGISTER

BP(MP) Hash
AP(MP) Hash

AP(MP)

EP 1 736 892 A1

# FIG. 3

12__1
(12__1a, 12__1b, 12__1c)

CLIENT DEVICE

9

10 (10a, 10b, 10c)

SERVER DEVICE

9

9

12__2
(12__2a, 12__2b, 2__2c)

CLIENT DEVICE

1 (1a, 1b, 1c)

# FIG. 4

# FIG. 5

ST1 ～ ACTIVATE AP

ST2 ～ MUTUAL AUTHENTICATION WITH COMMUNICATION PARTY

ST3 — IS COMMUNICATION PARTY LEGITIMATE? — N

Y

ST4 ～ RECEIVE SIGNATURE ADDED AP_CER FROM COMMUNICATION PARTY

A

ST5 — IS RECEIVED AP_CER LEGITIMATE? — N

Y

ST6 — DESIRED AP EXISTS AT COMMUNICATION PARTY? — N

Y

ST7 ～ DATA TRANSACTION WITH COMMUNICATION PARTY

A

END

10

EP 1 736 892 A1

# FIG. 6

| | SIG | | |
|---|---|---|---|
| AP_ID | MF_ID | VER | HASH |
| 00F322DE | 000000CF | 0001 | 94CD6FA0 |
| . | . | . | . |
| . | . | . | . |
| . | . | . | . |
| AB5103CC | 000000A2 | 0003 | A8883CCF |

AP__CER

# FIG. 7

# FIG. 8

START

ST11 — SM VERIFIES LEGITIMACY OF B_PRG

ST12 — IS B_PRG LEGITIMATE? — N → ERROR PROCESSING

Y

ST13 — CPU READS B_PRG FROM SM

ST14 — CPU ACTIVATES B_PRG

B →

ST15 — B_PRG SELECTS NON-SELECTED ONES AMONG SPECIFIED AP_C1

ST16 — B_PRG VERIFIES LEGITIMACY OF SPECIFIED AP_C1

ST17 — IS AP_C1 LEGITIMATE? — N

Y

ST18 — REGISTER AP_ID OF AP_C1 TO AP_CER

ST19 — ACTIVATE AP

ST20 — VERIFY ALL SPECIFIED AP? — N → B

Y

END

12_1

EP 1 736 892 A1

# FIG. 9

```
                        ┌─────────────┐
                        │   START     │
                        └─────────────┘
                               │
                               ▼
        ┌───────────────────────────────────────┐
ST31    │ MUTUAL AUTHENTICATION WITH            │
        │ COMMUNICATION PARTY                   │
        └───────────────────────────────────────┘
                               │
ST32                           ▼
          ╱───────────────────────────────────╲        N
         ◁         IS COMMUNICATION             ▷────────┐
          ╲       PARTY LEGITIMATE?            ╱         │
             ╲───────────────────────────────╱          │
                         Y │                             │
                           ▼                             │
        ┌───────────────────────────────────────┐       │
ST33    │ ADD SIGNATURE SIG TO AP_CER           │       │
        └───────────────────────────────────────┘       │
                               │                         │
                               ▼                         │
        ┌───────────────────────────────────────┐       │
ST34    │ TRANSMIT SIGNATURE ADDED              │       │
        │ AP_CER TO COMMUNICATION               │       │
        │ PARTY                                 │       │
        └───────────────────────────────────────┘       │
                               │                         │
                               ▼                         │
        ┌───────────────────────────────────────┐       │
ST35    │ RECEIVE CONTENT DATA FROM             │       │
        │ COMMUNICATION PARTY AND               │       │
        │ UTILIZE                               │       │
        └───────────────────────────────────────┘       │
                               │                         │
                               ▼◄────────────────────────┘
                        ┌─────────────┐
                        │    END      │
                        └─────────────┘
```

12   1

# FIG. 10

START

↓

ST41 — MUTUAL AUTHENTICATION WITH COMMUNICATION PARTY

↓

ST42 — IS COMMUNICATION PARTY LEGITIMATE? —N→ (C)

↓ Y

ST43 — ADD SIGNATURE SIG TO AP_CER1

↓

ST44 — TRANSMIT SIGNATURE ADDED AP_CER1 TO COMMUNICATION PARTY

↓

ST45 — RECEIVE SIGNATURE ADDED AP_CER2 FROM COMMUNICATION PARTY

ST46 — IS RECEIVED AP_CER2 LEGITIMATE? —N→

↓ Y

ST47 — DESIRED AP ACTIVATED AT COMMUNICATION PARTY? —N→

↓ Y

ST48 — DATA TRANSACTION WITH COMMUNICATION PARTY

N

(C)

↓

END

12_1

EP 1 736 892 A1

# FIG. 11

33 CPU

31 I/F

30

36 COMPUTING CIRCUIT

35

AP_CER

SK_C1

PK_C1

PKC_C1

ID_C1

SK_S

PK_S

PK_C2

PKC_C2

AP_C1

B_PRG

32 MEMORY

12_1

SM SECURITY MODULE CIRCUIT

# FIG. 12

23a (23b) — CPU

21a (21b) — I/F

20

INCLUDING HASH_D1

INCLUDING HASH_D2

22 MEMORYa(22b)

AP_S
ID_S
SK_S
PK_S
PKC_S

PK_C1
PKC_C1
PK_C2
PKC_C2

AGENT_DP1
AGENT_DP2

10a(10b)

# FIG. 13

START

aST1 — ACTIVATE AP_S

aST2 — MUTUAL AUTHENTICATION WITH COMMUNICATION PARTY

aST3 — IS COMMUNICATION PARTY LEGITIMATE? — N → (A)

Y

aST4 — RECEIVE SIGNATURE ADDED AP_CER FROM COMMUNICATION PARTY

aST5 — IS RECEIVED AP_CER LEGITIMATE? — N

Y

aST6 — DESIRED AP(AGENT_P1) EXISTS AT COMMUNICATION PARTY? — N

Y

aST7 — RECEIVE SIGNATURE ADDED AGENT_DP1 FROM COMMUNICATION PARTY

aST8 — IS RECEIVED AGENT_DP1 LEGITIMATE? — N

Y

aST9 — REGISTER HASH_D1 IN AGENT_DP1 AS IDENTIFICATION DATA OF COMMUNICATION PARTY

aST10 — COMMUNICATION WITH COMMUNICATION PARTY BASED ON HASH_D1 AND AGENT_DP1

10a

(A)

END

EP 1 736 892 A1

# FIG. 14

33a (33b)    31a (31b)    37a (37b)

| CPU | I/F | OPERATION UNIT |

30

36  COMPUTING CIRCUIT

35

| B_PRG | ID_C1 |
| AP_CER | SK_S |
| SK_C1 | PK_S |
| PK_C1 | PK_C2 |
| PKC_C1 | PKC_C2 |

SMa(SMb)

SECURITY MODULE CIRCUIT

AGENT_P        AP_C1

AGENT_D1       INCLUDING HASH_D1

AGENT_DP1      INCLUDING HASH_D2

AGENT_DP2

32a(32b) MEMORY

12_1a (12_1b)

# FIG. 15

| |
|---|
| ID OF AGENT_P1 |
| PRODUCTION IDENTIFICATION DATA OF AGENT_P1 |
| VERSION OF AGENT_P1 |
| INFORMATION ON AGENT_P1 (BIRTHDAY, REGIONAL INFORMATION, ETC.) |
| AGENT__D1 |
| HASH__D1 |
| VERSION OF SM |
| SIGD |

AGENT__DP1

# FIG. 16

START

aST31 — READ AGENT_D1

A

aST32 — UPDATE AGENT_D1 BY USER'S OPERATION

aST33 — CERTAIN TIME PAST? — Y

N

aST34 — UPDATE TIMES AND UPDATE AMOUNT EXCEED THRESHOLD? — Y

N

aST35 — N — INSTRUCTED BY USER?

Y

aST36 — UPDATE AGENT_DP1 BASED ON AGENT_D1

aST37 — GENERATE HASH_D1 OF UPDATED AGENT_DP1

aST38 — UPDATE AGENT_DP1 BY HASH_D1

aST39 — ADD SIGNATURE SIGD TO AGENT_DP1

aST40 — RESET TIME COUNTER AND UPDATE TIMES COUNTER

A

12   1a(UPDATE OPERATION OF AGENT DP1)

EP 1 736 892 A1

# FIG. 17

```
                    ┌──────────────┐
                    │    START     │
                    └──────┬───────┘
                           │
                           ▼
           ┌─────────────────────────────────┐
  aST51 ∿  │ MUTUAL AUTHENTICATION WITH      │
           │ COMMUNICATION PARTY             │
           └──────────────┬──────────────────┘
  aST52                   │
                          ▼
         ╱────────────────────────────────╲      N
        ⟨    IS COMMUNICATION              ⟩─────────┐
         ╲   PARTY LEGITIMATE?            ╱          │
          ╲──────────────────────────────╱          │
                     Y │                             │
                       ▼                             │
           ┌─────────────────────────────────┐       │
        ∿  │ ADD SIGNATURE SIG TO AP_CER     │       │
  aST53    └──────────────┬──────────────────┘       │
                          │                          │
                          ▼                          │
           ┌─────────────────────────────────┐       │
        ∿  │ TRANSMIT SIGNATURE ADDED AP_CER │       │
  aST54    │ AND AGENT_DP1 TO COMMUNICATION  │       │
           │ PARTY                           │       │
           └──────────────┬──────────────────┘       │
                          │                          │
                          ▼                          │
           ┌─────────────────────────────────┐       │
        ∿  │ USE HASH_D1 AS OWN IDENTIFICATION│      │
  aST55    │ DATA IN COMMUNICATION WITH      │       │
           │ SERVER DEVICE                   │       │
           └──────────────┬──────────────────┘       │
                          │                          │
                          ▼◄─────────────────────────┘
                    ┌──────────────┐
                    │    END       │
                    └──────────────┘
```

12   1a (COMMUNICATION WITH SERVER DEVICE )

# FIG. 18

START

aST61 — MUTUAL AUTHENTICATION WITH COMMUNICATION PARTY

aST62 — IS COMMUNICATION PARTY LEGITIMATE? — N → C

Y

aST63 — ADD SIGNATURE SIG TO AP_CER1

aST64 — TRANSMIT SIGNATURE ADDED AP_CER1 TO COMMUNICATION PARTY

aST65 — RECEIVE SIGNATURE ADDED AP_CER2 FROM COMMUNICATION PARTY

aST66 — IS RECEIVED AP_CER2 LEGITIMATE? — N

Y

aST67 — DESIRED AP(AGENT_P) ACTIVATED AT COMMUNICATION PARTY? — N

Y

aST68 — TRANSACT AGENT_DP1 AND DP2 WITH COMMUNICATION PARTY

aST69 — IS RECEIVED AGENT_DP2 LEGITIMATE? — N

Y

aST70 — REGISTER HASH_D2 IN AGENT_DP2 AS IDENTIFICATION DATA OF COMMUNICATION PARTY

aST71 — COMMUNICATION WITH COMMUNICATION PARTY BASED ON HASH_D2 AND AGENT_DP2

C

END

12　1a(COMMUNICATION WITH CLIENT DEVICES 12 2a)

EP 1 736 892 A1

# FIG. 19

| ID OF AGENT_P1 |
| --- |
| PRODUCTION IDENTIFICATION<br>DATA OF AGENT_P1 |
| VERSION OF AGENT_P1 |
| INFORMATION ON AGENT_P1<br>(BIRTHDAY AND<br>REGIONAL INFORMATION, ETC.) |
| AGENT__D1 |
| PRP<br>(GENERATION HISTORY,<br>HISROTY NO.,<br>HASH_D1 LIST) |
| VERSION OF SM |
| SIGD |

HISTORY
NUMBER          HASH__D1

| HISTORY NUMBER | HASH__D1 |
| --- | --- |
| 0001 | 3F2DAA0974CC0257 |
| 0002 | CA7701DDFC0012EE |
| 0003 | . |
| 0004 | . |
| 0005 | . |
| 0006 | . |
| 0007 | . |
| 0008 | 7CEDA95230064DDF |

0008 IS LATEST HASH DATA

AGENT   DP1

EP 1 736 892 A1

# FIG. 20

START

bST31 — READ AGENT_D1

bST32 — UPDATE AGENT_D1 BY USER'S OPERATION

bST33 — CERTAIN TIME PAST?  — Y

N

bST34 — UPDATE TIMES AND UPDATE AMOUNT EXCEED THRESHOLD?  — Y

N

bST35 — INSTRUCTED BY USER?  — N / Y

A

bST36 — UPDATE AGENT_DP1 BASED ON AGENT_D1

bST37 — GENERATE HASH_D1 OF UPDATED AGENT_DP1 AND ADD TO AGENT_DP1

bST38 — ADD SIGNATURE SIGD TO AGENT_DP1

bST39 — RESET TIME COUNTER AND UPDATE TIMES COUNTER

A

12  1b(UPDATE OPERATION OF AGENT DP1)

EP 1 736 892 A1

# FIG. 21

START

bST51 — MUTUAL AUTHENTICATION WITH COMMUNICATION PARTY

bST52 — IS COMMUNICATION PARTY LEGITIMATE? — N

Y

bST53 — ADD SIGNATURE SIG TO AP_CER

bST54 — TRANSMIT SIGNATURE ADDED AP_CER AND AGENT_DP1 TO COMMUNICATION PARTY

bST55 — RECEIVE DATA FROM COMMUNICATION PARTY AND UTILIZE

END

12  1b (COMMUNICATION WITH SERVER DEVICE)

# FIG. 22

START

bST61 — MUTUAL AUTHENTICATION WITH COMMUNICATION PARTY

bST62 — IS COMMUNICATION PARTY LEGITIMATE? — N → C

Y

bST63 — ADD SIGNATURE SIG TO AP_CER1

bST64 — TRANSMIT SIGNATURE ADDED AP_CER1 TO COMMUNICATION PARTY

bST65 — RECEIVE SIGNATURE ADDED AP_CER2 FROM COMMUNICATION PARTY

bST66 — IS RECEIVED AP_CER2 LEGITIMATE? — N

Y

bST67 — DESIRED AP ACTIVATED AT COMMUNICATION PARTY? — N

Y

bST68 — TRANSACT AGENT_DP1 AND DP2 WITH COMMUNICATION PARTY

bST69 — IS RECEIVED AGENT_DP2 LEGITIMATE? — N

Y

bST70 — COMMUNICATION WITH COMMUNICATION PARTY BASED ON AGENT_DP2

C

END

12  1b(COMMUNICATION WITH CLIENT DEVICE 12 2B )

EP 1 736 892 A1

# FIG. 23

AGENT_D1

| ENCRYPTED DATA |
|---|
| NON ENCRYPTED DATA |

ED

UED

# FIG. 24

KEY DATA    K1 - - - - - K2 - - - - - K3 - - - - - K4

DATA TO BE ENCRYPTED    D1    D2    D3    D4

ENCRYPTED DATA    ED1    T1    ED2    T2    ED3    T3    ED4

NUMBER CHANGE

# FIG. 25

EP 1 736 892 A1

# FIG. 26

| HASH DATA (IDENTIFICATION DATA) | LEARNT DATA |
|---|---|
| HASH_D1 | STD1 |
| HASH_D2 | STD2 |

TBD

# FIG. 27

START

cST1 — ACTIVATE AP_S

cST2 — MUTUAL AUTHENTICATION WITH COMMUNICATION PARTY

cST3 — IS COMMUNICATION PARTY LEGITIMATE? — N → (A)

Y

cST4 — RECEIVE SIGNATURE ADDED AP_CER FROM COMMUNICATION PARTY

cST5 — IS RECEIVED AP_CER LEGITIMATE? — N

Y

cST6 — DESIRED AP(AGENT_P1) EXISTS AT COMMUNICATION PARTY? — N

Y

cST7 — RECEIVE SIGNATURE ADDED AGENT_DP1 FROM COMMUNICATION PARTY

cST8 — IS RECEIVED AGENT_DP1 LEGITIMATE? — N

Y

cST9 — DETERMINE WHETHER HASH_D1 OF TBD EXISTS IN UPDATE HISTORY DATA HIST IN AGENT_DP1

(B)

(A)

10c

EP 1 736 892 A1

# FIG. 28

cST10 — EXIST?  → N

cST11 — EXISTS AS LATEST ONE?  (Y)

cST12 — UPDATE HASH_D1 IN TBD BY LATEST ONE  (N)

cST13 — ADD ITEMS OF LATEST HASH_D1 IN AGENT_DP1 TO TBD

cST14 — COMMUNICATION WITH CLIENT DEVICE 12_1C BY USING HASH_D1 AS IDENTIFICATION DATA

B

A

END

10c

EP 1 736 892 A1

# FIG. 29

EP 1 736 892 A1

# FIG. 30

| | |
|---|---|
| ID OF AGENT_P1 | |
| PRODUCTION IDENTIFICATION DATA OF AGENT_P1 | |
| VERSION OF AGENT_P1 | |
| INFORMATION ON AGENT_P1 (BIRTHDAY AND REGIONAL INFORMATION, ETC.) | |
| AGENT__D1 | |
| HIST (GENERATION HISTORY, HISROTY NO., HASH_D1 LIST) | |
| VERSION OF SM | |
| SIGD | |

HISTORY NUMBER     HASH DATA

| | |
|---|---|
| 0001 | 3F2DAA0974CC0257 |
| 0002 | CA7701DDFC0012EE |
| 0003 | . |
| 0004 | . |
| 0005 | . |
| 0006 | . |
| 0007 | . |
| 0008 | 7CEDA95230064DDF |

HASH__D1 LATEST HASH DATA

HIST UPDATE HISTORY DATA

AGENT__DP1

EP 1 736 892 A1

# FIG. 31

START

cST21 — SM VERIFIES LEGITIMACY OF B_PRG

cST22 — IS B_PRG LEGITIMATE? — N → ERROR PROCESSING

Y

cST23 — CPU READS B_PRG FROM SM

cST24 — CPU ACTIVATES B_PRG

C →

cST25 — B_PRG SELECTS NON-SELECTED ONES AMONG SPECIFIED AP_C1

cST26 — B_PRG VERIFIES LEGITIMACY OF SPECIFIED AP_C1 (AGENT_P1)

cST27 — IS AP_C1 LEGITIMATE? — N

Y

cST28 — REGISTER AP_ID OF AP_C1 TO AP_CER

cST29 — ACTIVATE AP

cST30 — VERIFY ALL SPECIFIED AP? — N → C

Y

END

12 1c(GENERATION OPERATION OF AP_CER )

EP 1 736 892 A1

# FIG. 32

START

cST31 — READ AGENT_D1

(D)

cST32 — UPDATE AGENT_D1 BY USER'S OPERATION

cST33 — CERTAIN TIME PAST? — Y

N

cST34 — UPDATE TIMES AND UPDATE AMOUNT EXCEED THRESHOLD? — Y

N

cST35 — INSTRUCTED BY USER? — N

Y

cST36 — UPDATE AGENT_DP1 BASED ON AGENT_D1

cST37 — GENERATE HASH_D1 OF UPDATED AGENT_DP1

cST38 — UPDATE AGENT_DP1 BY HASH_D1

cST39 — ADD SIGNATURE SIGD TO AGENT_DP1

cST40 — RESET TIME COUNTER AND UPDATE TIMES COUNTER

(D)

12   1c(UPDATE OPERATION OF AGENT DP1 )

EP 1 736 892 A1

90

# FIG. 33

START

MUTUAL AUTHENTICATION WITH
COMMUNICATION PARTY
cST51

cST52

IS COMMUNICATION PARTY LEGITIMATE?   N

Y

ADD SIGNATURE SIG TO AP_CER
cST53

TRANSMIT SIGNATURE ADDED AP_CER
AND AGENT_DP1 TO COMMUNICATION
PARTY
cST54

USE HASH_D1 AS OWN IDENTIFICA-
TION DATA IN COMMUNICATION WITH
SERVER DEVICE
cST55

END

12   1c(COMMUNICATION WITH SERVER DEVICE)

# FIG. 34

START

cST61 — MUTUAL AUTHENTICATION WITH COMMUNICATION PARTY

cST62 — IS COMMUNICATION PARTY LEGITIMATE? — N → E

Y

cST63 — ADD SIGNATURE SIG TO AP_CER1

cST64 — TRANSMIT SIGNATURE ADDED AP_CER1 TO COMMUNICATION PARTY

cST65 — RECEIVE SIGNATURE ADDED AP_CER2 FROM COMMUNICATION PARTY

cST66 — IS RECEIVED AP_CER2 LEGITIMATE? — N

Y

cST67 — DESIRED AP(AGENT_P) ACTIVATED AT COMMUNICATION PARTY? — N

Y

cST68 — TRANSACT AGENT_DP1 AND DP2 WITH COMMUNICATION PARTY

cST69 — IS RECEIVED AGENT_CER2 LEGITIMATE? — N

Y

F

E

12__1c(COMMUNICATION WITH CLIENT DEVICES 12_2)

EP 1 736 892 A1

# FIG. 35

F

cST70 — DETERMINE WHETHER HASH_D2 OF TBD2 EXISTS IN UPDATE HISTORY DATA HIST IN AGENT_DP2

cST71 — EXIST?    N →

Y ↓

cST72 — EXISTS AS LATEST ONE?    Y →

N ↓

cST73 — UPDATE HASH_D2 IN TBD2 BY LATEST ONE

cST74 — ADD ITEMS CORRESPONDING TO LATEST HASH_D2 TO TBD2

cST75 — COMMUNICATION WITH CLIENT DEVICE 12_2 BASED ON STD2 BY USING HASH_D2 AS IDENTIFICATION DATA

E

END

12   1c(COMMUNICATION WITH CLIENT DEVICE 12 2C)

EP 1 736 892 A1

## INTERNATIONAL SEARCH REPORT

| International application No. |
| --- |
| PCT/JP2005/006633 |

| A. CLASSIFICATION OF SUBJECT MATTER |
| --- |
| Int.Cl$^7$  G06F15/00, H04L9/00 |

According to International Patent Classification (IPC) or to both national classification and IPC

| B. FIELDS SEARCHED |
| --- |
| Minimum documentation searched (classification system followed by classification symbols)<br>   Int.Cl$^7$  G06F15/00, H04L9/00, G06F17/30 |

Documentation searched other than minimum documentation to the extent that such documents are included in the fields searched
   Jitsuyo Shinan Koho          1922-1996   Jitsuyo Shinan Toroku Koho    1996-2005
   Kokai Jitsuyo Shinan Koho     1971-2005   Toroku Jitsuyo Shinan Koho    1994-2005

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2002-251326 A  (Hitachi, Ltd.),<br>06 September, 2002 (06.09.02),<br>Full text; all drawings<br>& US 2002/0116632 A1 | 1-8,10,11,13<br>35-37,42,43 |
| X | JP 10-74206 A  (Matsushita Electric Industrial Co., Ltd.),<br>17 March, 1998 (17.03.98),<br>Full text; all drawings<br>(Family: none) | 29,30,31-34,<br>38-40,44,46,<br>47 |
| Y | Same as the above | 35-37,42,43 |
| X | JP 2001-43189 A  (PFU Ltd.),<br>16 February, 2001 (16.02.01),<br>Description; Par. No. [0016]<br>(Family: none) | 48,49,58,59,<br>62 |

| ☒  Further documents are listed in the continuation of Box C. | ☐  See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   11 July, 2005 (11.07.05) | Date of mailing of the international search report<br>   02 August, 2005 (02.08.05) |
| --- | --- |
| Name and mailing address of the ISA/<br>   Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/006633 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2003-178022 A  (Sony Computer Entertainment Inc.),<br>27 June, 2003 (27.06.03),<br>Full text; all drawings<br>& US 2003/0074560 A1    & EP 1293912 A2 | 1-64 |

Form PCT/ISA/210 (continuation of second sheet) (January 2004)

## INTERNATIONAL SEARCH REPORT

| International application No. |
| --- |
| PCT/JP2005/006633 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

    See extra sheet

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**         ☐   The additional search fees were accompanied by the applicant's protest.

                  ☐   No protest accompanied the payment of additional search fees.

---

Form PCT/ISA/210 (continuation of first sheet (2)) (January 2004)

| INTERNATIONAL SEARCH REPORT | International application No. |
|---|---|
| | PCT/JP2005/006633 |

<u>Continuation of Box No.III of continuation of first sheet(2)</u>

Since the transmission of data to a communication destination is a known technique, claims 1-64 are divided into the following four groups, A, B, C, and D.

A: claims 1-14, 22, 24, 26, 35-37, 41, 43, 45, 57, 59, 61
The matter common to these claims relates only to that the data transmitted to a transmission destination is certification data indicating the identification data on the application program judged to be valid.

B: claims 15-21, 23, 25, 27, 28, 50-52
The matter common to these claims relates only to that the data transmitted to the communication destination is communication data added by Hash data of the communication data and the Hash data is used as computer identification data. These claims have no matter corresponding to the aforementioned group A.

C: claims 29-34, 38-40, 42, 44, 46, 47, 55, 56
The matter common to these claims relates only to that the data transmitted to the communication destination is attribute data generated according to the history of computer operation by a user. These claims have no matter corresponding to the aforementioned groups A and B.

D: claims 48, 49, 53, 54, 58, 60, 62, 63, 64
The matter common to these claims relates only to that the data transmitted to the transmission destination includes identification data after update or original data for calculating the identification data after update and update history data including identification data before update and indicating the identification data update history, and communication is performed by using the identification data after the update. These claims have no matter corresponding to the aforementioned groups A, B, and C.

Accordingly, there exists no special technical feature within the meaning of PCT Rule 13.2, second sentence which is common to the groups A-D. Consequently, no technical relationship within the meaning of PCT Rule 13 between the different groups of inventions can be seen.

Therefore, it is obvious that the inventions of claims 1-64 do not satisfy the requirement of unity of invention.

Form PCT/ISA/210 (extra sheet) (January 2004)